# EUROPEAN PATENT APPLICATION

(11) **EP 1 320 229 A2**
(43) Date of publication of application: **18.06.2003**
(21) Application number: 02005544.8
(22) Date of filing: 11.03.2002
(51) Int. Cl.: H04L 12/58, H04L 29/06

(54) **Method and device for messaging**

(30) Priority: 14.12.2001 US 22291
(71) Applicant: Openwave Systems Inc., Redwood City, CA 94063 (US)
(72) Inventor: McKelvie, Samuel, Seattle, WA 98144 (US); Brennan,Timothy W., Seattle, WA 98112 (US); Bogle, Phillip L., Bellevue, WA 98006 (US); Cordell, John P., Seattle, WA 98144 (US); Doppelt, Adam M., Seattle, WA 98112 (US); Johnson, Bruce, Bellevue, WA 98007 (US); Feigin, Eric J., Kirkland, WA 98033 (US); O'Donnell, Patrick E., Seattle, WA 98122 (US); Williams, Robert J., San Francisco, CA 94114 (US)
(74) Representative: Jehle, Volker Armin

(57) **Abstract**

A network-based messaging system comprises multiple agents to communicate messages between multiple users in real time using, for example, an XML document synchronization model. Each agent has properties defined in XML and can subscribe to properties of other agents. Each agent can notify other agents which subscribe to it of changes to its properties. The agents communicate using an XML or alternative extensible data interchange protocol. The agents include device agents to represent each of multiple user devices, which may include computers on a wireline network and mobile devices on a wireless network. The agents also include persona agents to represent each user. The persona agents collect information about the properties of other agents and publish the information to other, subscribing agents. Each persona agent comprises properties to maintain state information for each device used by the corresponding user. Most of the agents reside in a centralized agent system.

## Description

### FIELD OF THE INVENTION

The present invention pertains to computers and communication networks. More particularly, the present invention relates to a messaging system and other applications for a distributed network environment.

### BACKGROUND OF THE INVENTION

Instant Messaging (IM) is a popular communication tool for users of computers connected to a network, such as the Internet. Unlike electronic mail ("e-mail"), personal computer (PC) based IM is typically used for sending messages between computers that are currently connected to the IM service. The PC based IM system simply acts as a router for best-effort delivery of transient messages, eliminating the need for a separate mailbox for each user. Since messages can only be sent if the recipient is currently logged into the IM system, most IM systems provide a contact list feature. The contact list allows a user to determine the connection state or presence of other users connected to the system.

IM systems generally provide privacy and access control features to allow users to specify which users can subscribe to and view their presence state. Typically, users can also specify whether they are willing to accept messages from users who are not on their contact list and can determine whose contact lists they are on. Because many computers remain connected to the IM system for long periods of time, it is common practice to extend the presence model to include additional, automatically determined state information, including whether a user is "idle" (e.g., has not accessed his computer in some period of time) as well as user-specified status information (e.g., "I'm busy"). This approach improves the sender's ability to determine whether a message will be noticed and read when it is displayed on the recipient's computer. Because users typically reply to instant messages immediately, most IM services have adopted a conversational model for grouping messages, rather than treating each message as an atomic object.

As the capabilities of PCs have advanced, IM systems have been extended to support media types other than text, such as voice and file exchange. To route large amounts of data through the instant messaging network would be inefficient, so an IM system is generally only used as a signaling channel for session initiation and negotiation, with the actual rich data exchange occurring either peer-to-peer or through other systems and networks. Enhancements to in-band messaging are generally limited to rich text markup features (e.g., font color, size and face selection).

The three main design issues addressed by an IM system are publication of presence information, session initiation, and communication. A variety of architectural models have been used to solve these problems including peer-to-peer, centralized and distributed architectures. For example, the Internet Relay Chat (IRC) system uses a distributed network of servers that share chat sessions and route messages between clients while also providing. a peer-to-peer capability that allows users to send messages directly from one machine to another. Another well-known system, ICQ, was designed to solve the user location problem. ICQ uses a single, centralized registry with peer-to-peer messaging. One potentially negative side effect of a peer-to-peer messaging architecture is that chat participants must expose their Internet Protocol (IP) address to one another. This creates security, privacy, and implementation issues, so most modern IM services, including America Online Instant Messenger (AIM), Microsoft Network (MSN) Messenger and Yahoo! Messenger, use centralized message routing instead.

In the wireless environment, the closest relative to IM is short messaging service (SMS). SMS allows users to transmit and receive 150-character messages between mobile terminals. SMS supports several messaging modes, but the conventional mode of operation is store-and-forward. In this mode, submitted messages are stored and delivered to the wireless handset when it is available. If the handset is not available, the message is stored in the SMS center (SMSC) and resent when the handset is available. SMS systems often have simple mail transfer protocol (SMTP) gateways, so that a limited form of email can be sent and received via the handset.

Some Internet IM services have begun to extend their services to mobile devices through custom SMS and wireless access protocol (WAP) proxy services. However, the end-user experience is generally disappointing, because these services are based on the design assumption that the user will only log in from one device at a time and that the device is connected to the service via a relatively reliable transfer control protocol / Internet protocol (TCP/IP) connection. Therefore, no attempt is made to preserve state information within the system, preventing users from roaming between devices. Furthermore, existing services have no protocol or client support for distributing device-specific presence information, such that users are unaware that other, mobile users are accessing the system from less-capable devices.

### SUMMARY OF THE INVENTION

One aspect of the present invention is a method that includes maintaining and executing a messaging application configured to communicate messages between multiple users in real-time by using a data synchronization model.

Another aspect of the invention is an apparatus comprising a plurality of sources, each having at least one property, a plurality of sinks, each capable of subscribing to a property of a source, and an intermediary agent. The intermediary agent is to aggregate state information corresponding to the properties of the sources and to distribute the state information to sinks, of the set of sinks, which subscribe to the respective properties.

Another aspect of the present invention is a computer-implemented apparatus for use by multiple users using multiple user devices. The apparatus includes multiple agents of various different types to communicate with each other, at least some of which represent physical entities. Each agent has one or more properties and has the ability to subscribe to properties of other agents. One or more of the agents collect information about properties of other agents and publish the collected information to one or more subscribing agents.

Other features of the present invention will be apparent from the accompanying drawings and from the detailed description which follows.

### BRIEF DESCRIPTION OF THE DRAWINGS

The present invention is illustrated by way of example and not limitation in the figures of the accompanying drawings, in which like references indicate similar elements and in which:
Figure 1 shows a network environment in which the present invention can be implemented;
Figure 2 shows the relationships between agents in an IM application;
Figure 3 shows the message flow between the various elements of the IM system and the associated protocols;
Figure 4 illustrates the infrastructure components of an agent server;
Figure 5 is a state diagram illustrating the operation of contracts in the IM system;
Figure 6 illustrates how a persona agent for a given user serves as a multiplexor of agent level contracts;
Figure 7 is a flow diagram illustrating a process for notifications of property changes;
Figure 8 is a flow diagram illustrating a process for message forwarding by an agent;
Figure 9 is a flow diagram illustrating a high level process for initiating a chat between two users;
Figure 10 is a flow diagram illustrating a high level process for carrying out a chat that is already in progress between two users;
Figure 11 is a flow diagram illustrating a high level process for inviting a new participant to the chat;
Figure 12 is a flow diagram illustrating a high level process for a participant exiting the chat;
Figure 13 shows the construction of the persona database; and
Figure 14 is a high-level block diagram of a processing system representative of any of the processing devices or systems shown in Figure 1.

### DETAILED DESCRIPTION

Applications, including an instant messaging (IM) system, which are particularly well-suited for use in a distributed environment including a wireless network, are described herein. Note that in this description, references to "one embodiment" or "an embodiment" mean that the feature being referred to is included in at least one embodiment of the present invention. Further, separate references to "one embodiment" in this description do not necessarily refer to the same embodiment; however, neither are such embodiments mutually exclusive, unless so stated and except as will be readily apparent to those skilled in the art. For example, a feature, structure, act, etc. described in one embodiment may also be included in other embodiments. Thus, the present invention can include a variety of combinations and/or integrations of the embodiments described herein.

### I. Overview

As described in greater detail below, a messaging system may comprise multiple agents to communicate messages between multiple users in real time by employing a data synchronization model. In one embodiment, the messaging system is an instant messaging (IM) system. Each agent has one or more properties defined in extensible markup language (XML) and has the ability to subscribe to properties of other agents. The agents communicate using an XML based messaging protocol.

XML is a standard for defining data interchange formats within the Internet environment. XML provides an extensible mechanism to impose constraints on the storage layout and logical structure of a document. In alternative embodiments, an extensible data interchange format other than XML could be used to describe the property schema and properties of an agent or to implement the messaging protocol (all of which are described below for an XML based embodiment).

Each agent can notify the agents that are subscribed to it of changes in its respective properties. The agents include device agents to represent each of multiple user devices. The user devices may include computers on a wireline network and mobile devices (e.g., cellular telephones) on a wireless network. The agents also include a persona agent to represent each user, to collect information about the properties of other agents, and to publish the information to one or more other subscribing agents. Each device agent publishes properties that represent the state of a user device to the represented user's persona agent. The persona agent publishes the aggregated properties of the represented users' device agents to subscribing agents. Each persona agent collects and receives property notifications from agents to which it is subscribed and publishes the properties to the represented users' device agents. Most of the agents reside in a centralized agent system.

The messaging system described herein is a data synchronization based system rather than a per se message routing system. This allows a user to move seamlessly from device to device or to disconnect and reconnect to the system without loss of ambient state information. When a user connects to the messaging system through a previously disconnected device agent (i.e., the device agent has an intermittent connection to the IM system), the persona agent representing that user requests that the agents to which it is subscribed send their current property information to the persona agent. The persona agent then forwards the received property information to the device agent. This synchronizes the device agent to the current state of all agents to which the user's persona agent is subscribed. Also, the system is built using an extensible subscription-model, based in one embodiment on an XML messaging protocol. In the protocol, each message generated by an agent is either a command, a response to a command, or an event. Each of these message types will have the necessary supporting information encapsulated in property or attribute tags.

This approach enables the addition of new information types and application logic without changes to the underlying system. This approach further enables the system to act as both an information aggregator that can be easily interfaced to other systems and as a platform for collaborative applications beyond instant messaging. Thus, the techniques described herein can also be applied to create messaging systems other than IM systems and even to create applications other than those related to user-to-user messaging, such as content distribution, gaming, collaboration, call setup, provisioning, and altering/notification. These applications are discussed further below. In addition, the described techniques can be used to proxy a transient messaging protocol, as is demonstrated by the interop agent described below, which captures IM traffic targeted at a user device allowing the user to connect and reconnect from multiple user devices and to remain synchronized.

The architecture of the described IM system is a departure from prior IM systems, in that it expands the concept of subscribing to another user's presence information into a generalized subscription framework. For example, an active chat can be a subscribable entity in the system, so that while a chat session is in progress, participants are automatically synchronized to the message history and participant roster. In certain embodiments, the information provided over each subscription is described in XML, so additional properties can be added without changing the architectural framework. For example, a carrier-specific location property could be added to the user presence schema, or entirely new subscribable entities could be built to implement collaborative applications, games, content distribution, etc.

It will be appreciated that many of the techniques and features of the IM system described herein can be used to create applications other than IM applications, and even to create applications other than messaging applications, as described below. The IM system described herein is based on the general idea of building data driven applications on top of a standardized XML schema. For any given application, the XML schema fundamentally defines the application and its capabilities. Multiple XML schemas (and thus multiple applications) may be run off of the same server. Individual client applications can then be written to specific platforms, which take advantage of those platforms features and capabilities. By having all application state captured within the XML schema for the application, data interoperability is assured. This model also provides complete abstraction for the server, since its interface to all clients is the XML schema itself and requires no specific knowledge of client implementation details.

In accordance with the techniques described herein, client application logic may in fact be built and run on the server. This is the case, for example, with the IM application which utilizes several agent classes executing on an agent server and communicating with instances of one another. This is to be contrasted with a traditional IM system, where the application logic resides primarily within the PC client.

According to the techniques described herein, the XML schema for an application (e.g., an IM application) is built from a collection of XML properties. Each agent is only aware of its individual properties and does not maintain these properties in a tree or document object model (DOM) like structure. The result is that each agent has a fairly simple model of the property data for which it is responsible. Agents are responsible for the aggregation of this property data into a coherent XML schema for the given application. Individual agents may not (and need not) be fully aware of any given application XML schema. The only requirement placed on agents is that the XML for a given agent be self-consistent.

Agents running on the server are responsible for sending out property updates to other agents (e.g., device agents) when the value of a property changes. These updates are called XML "deltas", since they are applied by the subscribing agent as delta (differences) to an existing XML document which represents the application state. After updating the XML document, the subscribing agent may take further actions based on the new application state. These and other aspects of the system are described further below.

In one embodiment, a user is allowed to control which agents may subscribe to the properties of one of his agents. In addition, the user is also allowed to specify the particular properties of his agent to which other agents may subscribe, and this may be specified by the user on a per-subscriber basis.

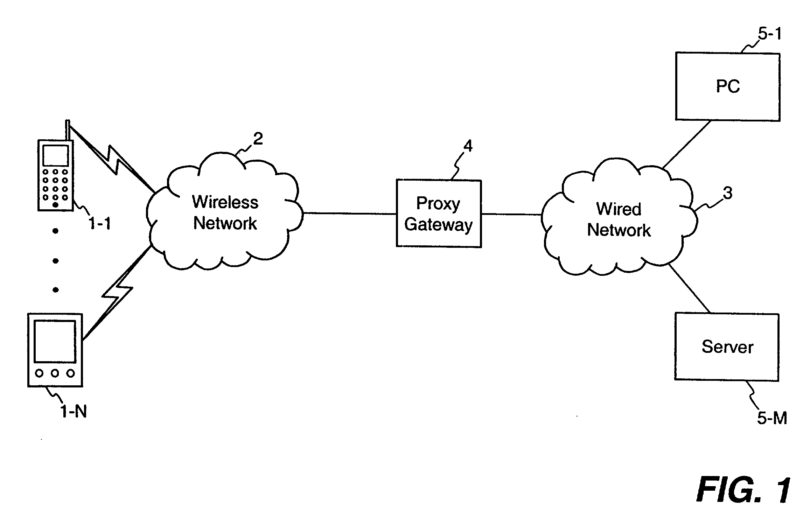

Refer now to Figure 1, which shows a network environment in which an IM system in accordance with the present invention can be implemented. A number (N) of mobile (wireless) devices 1-1 through 1-N operate on a wireless telecommunications network 2 (or simply "wireless network 2"). Each of the wireless devices 1 may be, for example: a cellular telephone, a personal digital assistant (PDA), a two-way pager, or any other type of wireless communications/computing device. Through the wireless network 2, the user of mobile telephone 1-1 can have telephonic communication with users of other mobile telephones and/or users of conventional wireline telephones on the public switched telephone network (PSTN).

The wireless network 2 is also coupled to a conventional wired computer network 3 through a proxy gateway 4. The wired network 3 may be, for example, the Internet, a campus intranet, a wide area network (WAN), a local area network (LAN), or any combination thereof. The proxy gateway 4 generally serves as a link between the wireless network 2 and the wired network 3. The proxy gateway 4 uses well-known techniques to enable communication between the wireless devices 1 and a number (M) of processing systems 5-1 through 5-M operating on the wired network 3. The processing systems 5 may include one or more systems which operate as servers (e.g., World Wide Web servers) and one or more systems which operate as clients (e.g., Web clients), although some of the processing systems 5 may operate as neither client nor server. The physical platforms which embody the proxy gateway 4 and processing systems 5 may include, for example, conventional server-class computer systems and/or PCs.

A proxy feature of proxy gateway 4 proxies requests and associated responses between the wireless devices 1 and origin servers on the wired network 3. Some of the wireless devices 1 may not support the same protocols or languages used by the origin servers. For example, certain wireless devices 1 might support only wireless markup language (WML) and WAP, while the origin servers may use only hypertext markup language (HTML) or XML and HTTP. In such cases, a gateway feature of proxy gateway 4 converts/translates between the languages and protocols used by the origin servers and the languages and protocols used by the mobile devices 1 to allow these entities to communicate with each other.

Although the proxy gateway 4 is shown as a single network entity, the proxy and gateway functions can be distributed between two or more physical platforms. Furthermore, both functions may not be necessary in some network implementations.

### II. IM System Architecture

To facilitate description, it is assumed that the IM system is implemented in software, which resides and is executed in one or more conventional computing and/or communications platforms (e.g., server-class computer(s) or PC(s)). The software embodying the IM system may be in, for example, an object-oriented language, such as C++.

The IM system is a scaleable system for aggregating structured information from many sources and routing that information to multiple sinks or terminal devices. Each aggregator, sink or source is represented by a runtime object called an agent. Most, but not all, agents are maintained on an agent server. Each agent has a class, which is the code that is responsible for determining how the agent behaves. For example, the chat agent class is responsible for managing a roster of participants and a message history.

In one embodiment, agents communicate using an XML-based messaging protocol, which is described further below. The advantage of basing the protocol on XML is that it can be extended in a standardized way through the addition of new tags and attributes.

### A. Protocol Stack

The protocol stack can be sub-divided into three layers: transport, routing and property synchronization.

### 1. Transport

In one embodiment, all inter-agent messages are transported over TCP/IP. The IM system attempts to pool messages between servers over the same TCP/IP session to avoid unnecessary session duplication. The system supports a tokenized binary version of the XML message stream to reduce bandwidth usage and enhance message-parsing performance. A throttling algorithm is used to ensure that no single agent over-utilizes the system and to ensure that a server never becomes overloaded.

### 2. Routing

Each agent is identified by a logical uniform resource identifier (URI) that contains the class and name of the agent. All of the servers in the system have enough information to determine the physical destination of a message given an agent URI, so that messages can be sent directly to the correct destination without transiting a centralized router.

### 3. Property Synchronization

The property synchronization layer allows an agent to create a subscription, or "contract", with another agent. A contract is a formal, persistent relationship between two agents, which allows one agent to receive event notifications of changes in state of the other agent. Contracts provide a framework for an agent to publish a set of named XML properties that can be watched by a "subscribing" agent. A contract is a reliable, authenticated, ordered, synchronized session between two agents, carried over a single transport connection (e.g., TCP/IP). For example, a persona agent representing one user may have a contract with a persona agent representing another user to indicate the two users are IM "buddies". The subscribing agent can request any property by name and is notified whenever there is a change in a property. A subscribing agent can also open a contract as an "owner". Doing so allows the agent to set as well as get the properties of the publishing agent.

### B. Message Format

There are three types of agent-to-agent messages that are communicated between agents in the IM system: commands, command responses, and events. Commands require responses, whereas events are unacknowledged. These agent-to-agent message types are not to be confused with user-to-user instant messages, although agent-to-agent messages are used to convey (i.e. encapsulate) user-to-user messages.

Every message in the system has a standard protocol wrapper consisting of a message header and a body. Except for response messages, the message header always specifies the destination agent and, if the agents are communicating over an established contract, the contract identifier (ID) assigned by the destination agent. Response messages only require an item ID for routing and do not require a destination agent or contract ID. The receiving agent can use the contract ID to look up the source agent, so no source agent URI is needed unless the agents are establishing a contract or are communicating without a contract.

An example of an agent-to-agent message is as follows:

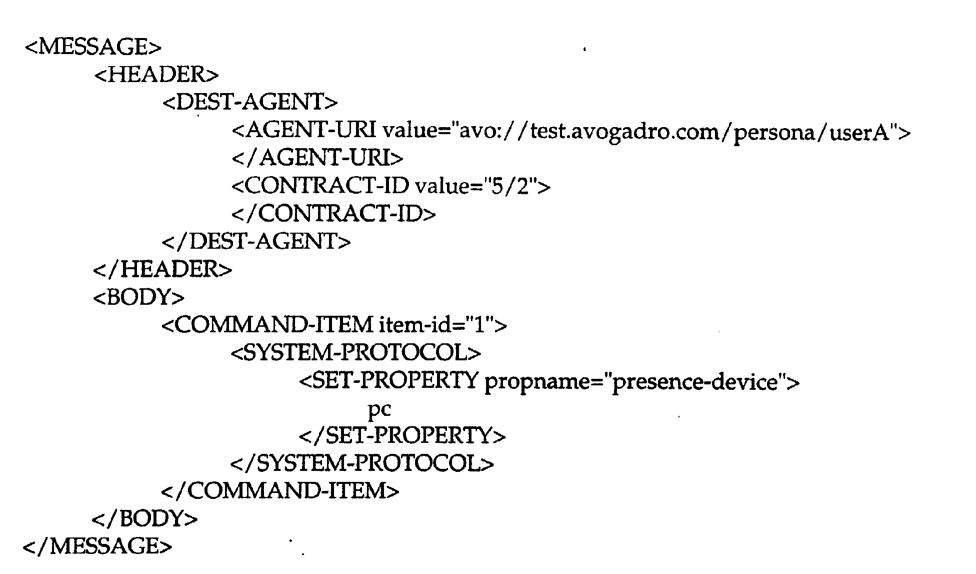

### C. Agent Classes

An agent is a logical entity (an object instance in object-oriented programming terms) within the network that can send and receive agent-to-agent messages. Each agent is an instance of an agent class. The main agent classes for IM are the persona agent class, the chat agent class, the interoperability ("interop") agent class, and the device agent classes. Associated with each agent is its instance data, which represents the current state of the agent.

In a typical application (e.g., IM), there are likely to be many agents of a given agent class. Agents may be created (as when a new user signs up for the service) or destroyed (as when a chat conversation is ended) according to the rules of the particular application. The number of agents is typically much larger than the number of physical servers in the network.

An agent can be implemented as a C++ object instance residing in a server's memory. Messages sent to the agent are manifested as method calls on the object, and the agent can send messages by calling out to a common support application program interface (API). However, at the protocol level an agent is a logical entity and, at any particular point in time, may not actually be represented as a C++ object -- an agent's state may, for example, be represented as records in a database.

As mentioned above, every agent has a class. The device agent classes include a PC agent class and a wireless agent class. Each device agent represents one particular corresponding end user device (e.g., a PC in the case of a PC agent or a wireless telephone in the case of a wireless agent) associated with a particular user. In one embodiment, all agents except PC agents reside on a centralized agent server or interconnected "cloud" of servers. There may also be an administrative ("admin") agent class, of which there is a single instance on each agent server. The admin agent provides a way to monitor the properties of other agents running on the server from an admin application or console.

Every user in the IM system is represented by a persona agent. Each persona agent maintains and publishes its user's profile and presence properties to subscribing persona agents. The persona agent also acts as an aggregator, collecting information from other agents and forwarding property updates to subscribing device agents.

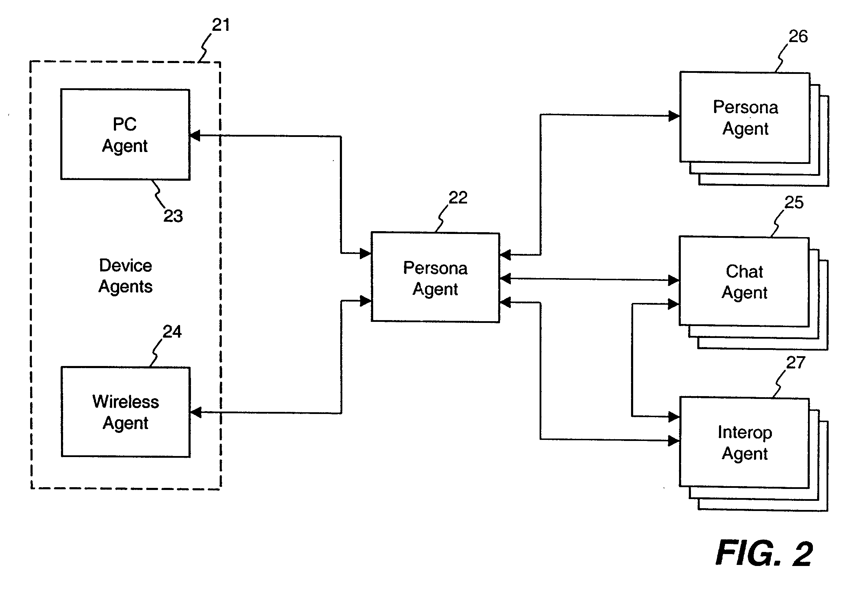

Figure 2 illustrates the relationships between agents in an IM application according to one embodiment. The device agents 21 include a PC agent 23 and a wireless agent 24. Note, however, that the number of PC agents and wireless agents associated with a particular user is variable; a particular user is not required to have any particular number of PC agents or wireless agents. The device agents 21 maintain owner contracts with the persona agent 22. Doing so allows the device agents 21 to set properties of the persona agent 22, such as connected device types and their presence state. Additionally, the device agents 21 can forward messages through the persona agent 22 to other agents, such as a chat agent 25, another persona agent 26 and/or an interop agents 27. Note that the system can be easily extended to include other types of agents.

When a device agent 21 connects to its corresponding persona agent 22, the persona agent 22 re-opens contracts with all of the agents that the user is subscribed to, if necessary (the persona agent may already have active, open contracts), and sends a Get-Property command to retrieve the full property state of each agent. The agents return their properties to the persona agent 22, which forwards them to the device agent 21. Whenever a property changes, it is resent to the subscribing agent and forwarded to active device agents. All properties are uniquely identified by their name and source agent, so it is simple for the device agent to find and replace the changed property in a "tree" of received properties.

Chat agents 25 are transient and only exist while at least one user is subscribed to a corresponding chat session. A chat agent's properties include the roster of participants in the chat and the chat message history.

Interop agents 27 maintain connections to third party IM services. There is one interop agent class for each third party IM system supported by the agent server. Buddy list and chat invites from third party IM systems are converted into XML by the interop agent 27 and forwarded to the persona agent 22. Interop agents 27 also instantiate and participate in chat agent sessions to capture conversations with third party systems. This functionality extends the multi-device functionality of the system to third-party services.

### D. Message Flow

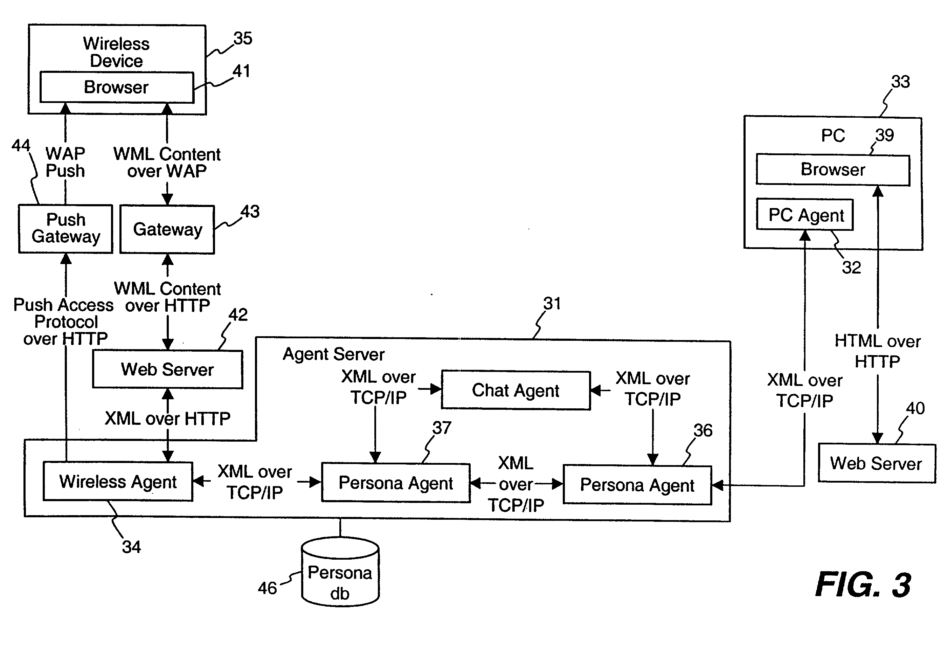

Figure 3 shows the message flow between the various elements of the IM system and the associated protocols, according to one embodiment. In the illustrated embodiment, all agents communicate with each other using an XML based protocol (described further below) and, except PC agents, reside within an agent server 31. The agent server 31 is a server process that manages and represents one or more agents within a server "cloud". The agent server 31 may be implemented using one or more conventional physical computing platforms (e.g., server-class computers). It includes all of the software required to implement the functionality of the agents it manages. The platform(s) embodying the agent server 31 may be connected essentially anywhere in the network environment shown in Figure 1; its physical connection point is unimportant for purposes of practicing the present invention. As one example, however, the agent server 31 might be maintained and operated by the wireless carrier and connected to the wireless network 2, either directly or through a gateway.

Each agent in the IM system is owned and managed by a single agent server 31, called its host agent server. An agent is not distributed across multiple agent servers. Messages sent to an agent are delivered by sending the message to the associated agent server 31, which delivers it to the target agent. By adding more agent servers 31 to the cloud, the number of agents managed by the agent server 31 can be reduced, or the total number of agents supported by the cloud can be increased, making the platform scalable.

Unlike the other types of agents, which reside in the agent server 31, a PC agent 32 resides within the PC 33 that it represents. The PC agent 32 communicates with the agent server 31 using the same protocol that is used within the agent server 31 between the other types of agents, i.e., XML over TCP/IP. A wireless agent 34 is also a device agent and, to that extent, is analogous to a PC agent 32. However, a wireless agent 34 resides in the agent server 31 in the illustrated embodiment. One reason for this is that most wireless devices 35 will not be persistently connected to the agent server 31 and therefore will not be able to adequately maintain state for IM purposes. Another reason is that WML/WAP, which is the biggest platform currently available for many such devices, does not allow application state/behavior to be implemented at the client device.

To facilitate description, Figure 3 shows only a few instances of the various types of agents and end-user devices. However, it will be understood that in practice, an agent server 31 will likely include a very large number (potentially hundreds or thousands) of each type of agent, which operate concurrently to support a large number of users and associated end-user devices.

Persona agents 36 and 37 represent the users of the PC 33 and the wireless device 35, respectively. During an IM chat, the persona agents 36 and 37 of the participating users communicate with each other via a chat agent 38 to enable the users to exchange instant messages. The persona agents 36 and 37 also can communicate directly with each other using, for example XML over TCP/IP, for purposes such as maintaining buddy lists and presence. The PC agent 32 communicates with other agents via the persona agent 36 of the user of the PC 33. The PC agent 32 uses state information it receives from other agents to generate the user interface for the IM application on the PC 33.

The PC 33 may also include a conventional browser 39, which receives HTML or other standard markup language from a conventional Web server 40, with which the PC 33 communicates over HTTP. In one embodiment, the PC agent 32 is designed in the following manner. Rather than using fixed, resident code to interpret the XML property information, the PC agent 32 fetches presentation and application logic via HTTP from a web server farm. This places all user interface and application logic under the operator's control and allows new features to be added without requiring an additional client download. Additionally, some client functions such as authentication and directory services are assisted by the same web server as used to support the handset client.

In this embodiment, the browser 39 in the PC 33 is used to make the downloaded PC agent 32 independent of the meaning of the XML properties that it receives. In this embodiment, the XML schema for the agents contains additional properties that indicate the URLs of documents to retrieve from the web via the embedded browser 39 code. In turn, the retrieved documents contain script to interpret the application-specific properties in the XML and to drive the user interface of the PC agent 32. Note that a PC client with a fixed user interface and/or hard-coded interpretation of the XML schemas would work but would have to be updated when agent schemas were modified, and XML schemas would have to be modified in a backwards-compatible fashion.

However, alternative embodiments of the client that provide extensibility and/or server-driven user interface control could be created that do not use an embedded browser. The use of an embedded browser is just one embodiment. The PC agent 32 has extension mechanisms and upgrade mechanisms to deal with new or changed agent schemas and new or changed presentation semantics and requirements.

Similarly, the wireless device 35 may include a browser 41 (sometimes called a minibrowser or microbrowser in the case of a wireless device). The wireless agent 34 communicates with other agents through the persona agent 37 of the user of the wireless device 33. In the illustrated embodiment, the wireless device 35 receives fully formed, conventional markup content, such as WML or extensible HTML, from a stateless Web server 42, over HTTP or wireless session protocol (WSP), for example. The browser 41 in the wireless device 35 uses this content to generate the user interface for the IM application on the wireless device 35. The content includes state information which the Web server 42 retrieved from the wireless agent 34, and which the wireless agent 34 has cached.

The browser 41 has no intelligence regarding the meaning of the Web pages it receives. In an alternative embodiment, however, described below, the wireless device 35 contains a more "intelligent", embedded IM client, which takes the place of the browser 41 and which can interpret and act upon information it receives.

The browser 41 in the wireless device 35 receives the markup language content from the Web server 42 via a wireless access gateway 43 using, for example WAP or WSP. In turn, the Web server 42 communicates XML over HTTP with the wireless agent 34, to complete the link between the wireless device 35 and the wireless agent 34. The wireless agent 34 also pushes messages to the wireless device 35 via a push gateway 44. In the illustrated embodiment, the wireless agent 34 uses push access protocol (PAP) over HTTP to communicate with the push gateway 44, while the push gateway 44 uses WAP push protocol to communicate with the browser 41.

Instant messages and other IM related information may be communicated to the wireless device 35 in the form of SMS messages. Hence, the push gateway 44 may be part of an SMSC, such that messages pushed by the wireless agent 34 to the browser 41 are SMS messages. Note that either of gateway 43 or push gateway 44 may be implemented within a device such as proxy gateway 4 in Figure 1.

Web servers 40 and 42, which may be the same Web server, each contain Java server page (JSP) files, client rendering files and web-based applications that are used on IM clients. For example, the entire client IM application on the wireless device 35 is rendered using JSP files. In this embodiment, the PC agent 32 makes also use of these components to populate the client window with images and text.

The Web servers 40 and 42 interact with the Agent Server 31 using the XML protocol defined herein.

The following example illustrates how the IM system operates, at a high level. Assume that a PC user wants to invite a friend using a mobile device to a chat session. The following sequence of events may occur:
(1) The PC agent sends a chat request and an initial chat message to his persona agent 36.
(2) The persona agent 36 adds the initial chat message to the chat and asks the chat agent 38 to invite the mobile user.
(3) The chat agent 38 invites the mobile user's persona agent 37 to join the chat.
(4) The persona agent 37 of the mobile user opens a contract to the chat agent 38.
(5) The persona agent 37 of the mobile user forwards an alert to the mobile user's wireless agent 34.
(6) The wireless agent 34 uses an alert gateway 44, such as an SMSC to send the alert to the mobile device. The SMSC Component above could be accessed through the WAP Push Gateway.
(7) The alert gateway 44 forwards the alert to a session initiation application on the wireless device 35.
(8) The session initiation application starts the browser 41 or embedded messaging client on the handset. The browser 41 or embedded messaging client establishes an HTTP or similar connection to the wireless access gateway 43 over a circuit-switched or packet-connection.
(8), (9) The stateless Web server 42 converts the synchronous request from the handset 35 into the asynchronous protocol used for inter-agent communication. The web server 42 can return either XML or a presentation markup such as WML to the handset 35, depending on the needs and capabilities of the handset 35. In the case of an intelligent, embedded application on the handset 35, an XML protocol which supports re-synchronization (as opposed to full synchronization followed by deltas) can be used, so that some features of the application can be used while disconnected from the network.

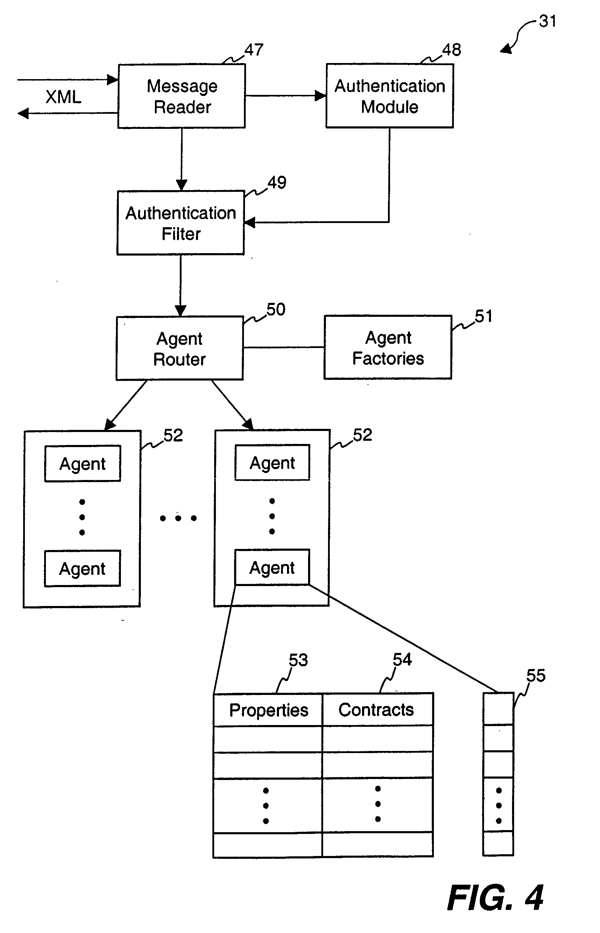

The agents described above can be implemented as objects using an object-oriented programming language, such as C++. Accordingly, the agent server 31 includes components that instantiate, maintain, and provide the underlying infrastructure to support these objects. Figure 4 illustrates these components of the agent server 31. For purposes of description, it is assumed that these components are implemented in software and data. In an alternative embodiment, however, some or all of these components could be hardwired.

As shown, the agent server 31 includes a message reader 47, an authentication module 48, an authentication filter 49, an agent router 50, and agent factories 51 (one agent factory for each agent class). When the agent server 31 starts up, it initiates socket accepts on two ports, one trusted and one untrusted. The agent server 31 also initializes a configurable number of "contexts" 52, each of which essentially is a thread coupled with a queue of tasks to execute. The default number of contexts 52 is equal to the number of CPUs detected on the machine implementing the agent server 31.

When a connection to the agent server 31 is made, Multipurpose Internet Mail Extension (MIME) headers are used to determine issues such as protocol version and whether or not compression should be enabled on the connection. Once the connection is established, the agent server 31 attaches the message reader 47 to the socket, to look for XML that follows the rules of the special XML protocol. When the message reader 47 reads the contents of a MESSAGE tag, it creates an XML message object to hold this message data as it moves through the agent system 31.

The authentication module 48 and authentication filter 49 provide authentication functions of the agent server 31. The authentication filter 49 checks the credentials of parsed incoming messages to determine which messages should be passed to the agent router 50. Most messages are targeted at agents, but there are special messages for authenticating a connection. These authentication messages are sent directly to the runtime bound authentication module 48, which may use a variety of authentication modes, including clear text password and challenge/response. Once a connection is authenticated, the authentication module 48 updates the criteria of the authentication filter 49 accordingly, such that the messages being read from that connection must have an authentication ID that is consistent with the authentication of the connection to be passed to the agent router 50. For example, if a connection authenticates as "john", it can only send messages with the authentication ID of "john". If a connection is made over a trusted port, it can represent the authentication ID of any user in the system.

For most messages, the destination Agent ID is read out of the header of the message by the agent router 50, which determines to which agent to route the XML message. To do this, the agent router 50 hashes the destination Agent ID and then applies a modulo function to determine through which context 52 the message should be routed. The hashing function guarantees that all messages targeting a given agent will be run in the same context. This approach allows an agent to not require thread-safe execution, since it will always be executing messages in a single thread.

Associated with each agent is a table of properties 53, a table of contracts 54, and a list of pending messages 55 associated with that agent. In fact, this is a simplification of the information associated with each agent; this information is discussed in greater detail below with regard to the persona database 46 (see Figure 3).

When the message is ready to be executed, the agent router 50 first calls into a per-context cache of agents already in memory. If the destination agent is not yet in memory, the agent router 50 loads that agent into memory before the message is executed. The execution of the message passes the message to the object representing the agent. The destination agent first converts the generic message object into an object specific to the protocol inside the message. The destination agent then processes the resulting protocol message.

### E. Persona Database

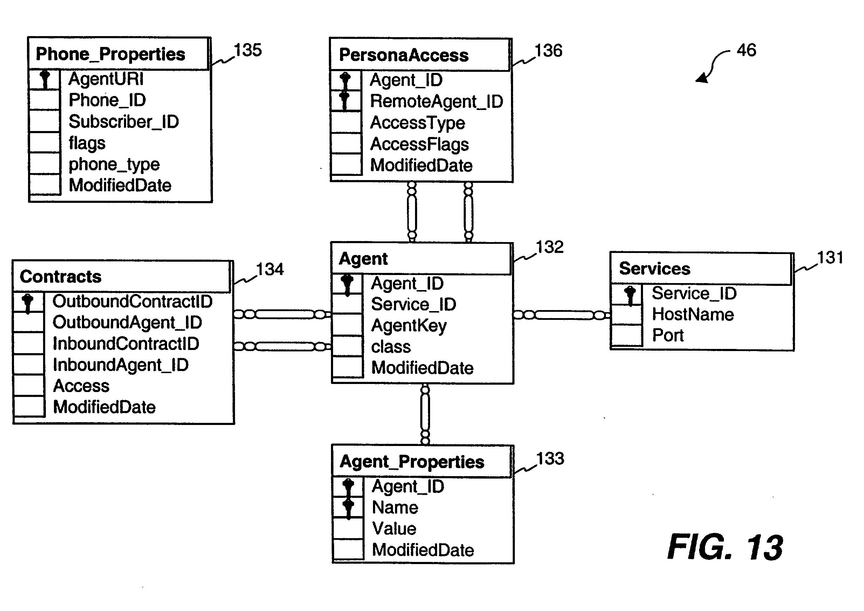

Referring again to Figure 3, the persona database 46 is where all persistent information about the agents associated with an agent server 31 is stored. The Agent Server application will cache information from the persona database 46 whenever possible, so the database is only hit when uncached information is required or when a user action causes changes that need to be persisted. As shown in Figure 13, the persona database 46 has six main tables which inter-relate using foreign keys (indicated by key-headed arrows): a Services table 131, an Agents table 132, an Agent Properties table 133, a Contracts table 134, a Phone Properties table 135, and a Persona Access table 136.

A standard configuration will only require one row in the Services table 131. It contains the name of the service, which may look like a domain name.

In the Agents table 132, there is one row per agent. The Class column specifies the type of agent (e.g., persona, content, interop). For persona agents the AgentKey column is the username. The Agent_ID is the primary key, which is an integer that other tables use to reference an agent.

To allow the schema to be extendable, all non-structured attributes of an agent are stored in the Agent Properties table 133 as simple name/value pairs. A standard persona agent may have properties like friendly name, email address and phone number.

The Contracts table 134 stores persistent relationships between agents. The information for each contract includes the contract ID, agent ID of the outbound agent, and the agent ID of the inbound agent. For example, when user A subscribes to user B to monitor presence information or other properties, a contract is created between persona agent A representing user A and persona agent B representing user B. A row is allocated in the table with the agent ID of persona agent A as the outbound agent ID and the agent ID of persona agent B as the inbound agent ID. When user B reciprocates and subscribes to user A, another row is allocated in the table with the agent ID of persona agent B as the outbound agent ID and the agent ID of persona agent A as the inbound agent ID.

The Phone Properties table 135 stores information about a user's cell phone. It is used by the agent server to determine how to contact a user when the user is not online to receive a chat message. The phone_type column might indicate whether to alert the user with, for example, an SMS message.

The Persona Access table 136 is used by persona agents to determine which users to allow access to its properties, such as friendly name and presence. It contains users that have been explicitly blocked or allowed as well as users that have requested access, but on which the user has not yet decided. This table has about the same number of rows as the user has inbound contracts, though it may have more, because the access rules will live on, even if the contract is removed.

The aforementioned tables are used in the following manner. At startup of the agent server 31, the Phone properties and Services tables are loaded, which will cause users that have registered their cell phones to have a wireless agent listening for events about which they need to be notified. This allows the user to appear available by cell phone whenever the server is running (which is preferably all the time). The Services table is queried to ensure that the Agent Server's calls to the database use the appropriate Service_ID in future queries.

When a persona agent is loaded into memory, its Contracts, Agent Properties and Persona Access are loaded. The queries to load these data use the primary keys or their respective tables. After a persona agent is loaded, the only actions that cause it to access the persona database are: modifying a user's persistent properties (friendly name, phone number, etc) (Agent Properties), adding a buddy (Contracts) or modifying another user's access to a user's properties (Persona Access).

When a user connects to his persona agent with a new cell phone, the persona database will be updated with the new Subscriber_ID and PhoneNumber. This will register the user to start receiving alerts and add the new phone to the Phone Properties table to make sure the cell phone configuration is loaded after future server reboots.

Note that chats generally do not need to be persisted, so they do not have any database impact.

### III. IM System Implementation

The IM system will now be described in greater detail.

### A. Message Routing and Scaling

### 1. Agent URI

Each agent has a unique name associated with it, called an agent URI. The agent URI distinguishes its associated agent from all other agents and also contains enough information, in conjunction with the routing table (described below), to allow efficient determination of the agent's host agent server. An example agent URI is "/imacmewidgets.com/persona/bobl23". In this example, "imacmewidgets.com" is the domain name service (DNS) name associated with the server cloud; its inclusion prevents name collisions with other clouds and allows DNS to be used to locate outside clouds. The term "persona" is the agent class name, which prevents name collisions with other classes. The term "bob123" is a unique name that identifies the agent within its class.

### 2. Agent-to-Agent Messages

Agents communicate with each other by sending and receiving real-time messaging platform (RTMP) messages. As noted above, agent-to-agent messages are not the same as (but are used to convey) user-to-user messages. For purposes of this description, the term "message" henceforth should be interpreted to mean an agent-to-agent message, unless indicated otherwise. A message is the smallest unit of information that may be delivered to an agent. In one embodiment, messages are represented as structured blocks of XML data, and are sent through real-time channels (e.g., TCP/IP). Messages are not persisted, and delivery is not guaranteed (as with, for example, email).

There are three types of messages: event messages, command messages, and response messages. An event message is an unacknowledged message. A best attempt is made to deliver the message, but if delivery is unsuccessful, the message is lost and the sender receives no indication of the failure.

A command message is a message that requires a response, in the form of a response message (below). Each command message has a command ID attached to it that allows it to be associated with its response. A best attempt is made to deliver the message, and a response is expected over the same transport connection (e.g., TCP/IP connection). If the transport connection fails before a response is received, the sender receives an indication of the failure.

A response message is a message sent in response to a command message. In one embodiment, the message is always sent over the same transport connection (e.g., TCP/IP) on which the command message was received. Each response message has the same command ID attached to it that was supplied in the command message. A best attempt is made to deliver the message, but if delivery is unsuccessful, the message is lost and the sender receives no indication of the failure (the intended receiver will, however, be informed of the failure, as described above).

Every message includes a message header, which includes common information needed to route the message correctly and interpret the message upon receipt. Among other things, the header includes:
- The destination Agent URI; i.e., the name of the agent to which the message is targeted (not necessary for response messages).
- The destination contract ID, if the message is directed at a contract (see below) (not necessary for response messages).
- Authentication credentials for the sender of the message, so that access control can be enforced (not necessary for response messages or messages directed at a contract).
- The message class (event, command, or response).
- The command ID, if the message is a command or a response.

### 3. Contracts

Agents achieve reliable real-time synchronization with other agents through the use of RTMP "contracts". A contract is a reliable, authenticated, ordered, synchronized session between two agents, carried over a single transport connection (e.g., TCP/IP). A contract is created with the <OPEN-CONTRACT> command message. Each end of the contract is associated with a contract ID, which must be supplied in each message directed to the contract.

Since a contract is associated with a single transport connection (e.g., TCP/IP), ordered delivery of contract messages is guaranteed. If the transport connection fails, the contract is lost, and agents at both ends of the contract are notified, so they can clean up synchronization state, attempt to reopen the contract, etc. These attributes make contracts ideal for synchronizing the state of two agents; when an agent's state changes, all it has to do is send an event message describing the change. No acknowledgement is necessary, since failure of delivery would cause the contract to fail. Also, since authentication of a contract is established when the contract is opened, no further authentication is necessary (other than the contract ID) for messages sent over the contract.

### 4. Connection Sharing

Since there may be many thousands of agents managed by a given agent server, and each agent may communicate with many other agents, creating a separate transport connection (e.g., TCP/IP) for each agent-agent relationship would be prohibitively expensive. The connection would have to be set up and maintained for each pair of agents, buffers would have to be allocated, and keep-alive polling would be required to detect a failed connection.

However, the RTMP protocol cleanly defines event messages, command messages, response messages, and contracts, and their relation ship to the transport connection. This allows all messages and contracts between any two agent servers to be carried over a single transport connection, regardless of the number of agents involved. Command messages are matched to their respective response messages with a unique command ID, so it is possible to have many concurrent pending command messages on the same transport connection, and it is not necessary for the response messages to be received in the same order as the commands were issued. Effectively, each agent-to-agent conversation is independent and asynchronous and does not block other agent conversations. When a shared connection fails, the agent servers on both ends of the connection are notified and can take action to clean up pending command messages, close open contracts, attempt to reconnect, etc.

Each agent server maintains a list of valid outbound transport protocol connections called the RTMP connection pool. When a connection to a particular agent server is needed, this list is checked first and an existing connection is reused if possible.

The allocation and maintenance of shared transport connections is hidden below the protocol APIs. By first constructing a message and then submitting it using a common API, one can deliver an RTMP message to any agent, without regard for routing, connection sharing, etc.

### 5. Message Routing

When an agent wishes to send a message to another agent, it builds the message and submits it using the RTMP protocol API. The RTMP protocol software must then find an appropriate transport connection (e.g., TCP/IP) in which to stream the message so that it will arrive at the appropriate destination host agent server (and finally the destination agent). This process is called RTMP message routing. The process for selecting the outbound transport connection is as follows:
1. If the message is a response message, it is sent through the same transport connection on which the command message was received.
2. If the message is targeted at a contract, it is sent through the transport connection on which the contract was opened.
3. If neither "1." nor "2." applies, then the message is targeted at a specific agent URI. Using the routing table (see below), the agent URI is mapped to the IP address and port number of the destination host agent server. This address is then looked up in the connection pool to see if a connection already exists. If so, it is used; otherwise a new connection is created and added to the connection pool.

All of this logic occurs below the protocol API layer. Hence, the details of how a message is routed can be extended and refined as an architecture evolves.

### 6. Routing Table

The routing table is a data structure and set of rules that deterministically maps any agent URI into the IP address and port number of the associated host agent server. Its contents are dependent on the particular server cloud configuration, and are specified by the operator in order to provide proper scale, load balancing, security, etc.

The function of the routing table could alternatively be implemented as a simple table of name value pairs with one pair for each agent in the cloud. This would allow agents to be hosted by specific agent servers according to any scheme (load balancing, security, locality of reference, common functionality, etc.). However, the large number of agents in the network would make in-memory maintenance of the entire table on every agent server prohibitively expensive. A reliable "routing directory" server would have to be provided, and it would rapidly become a bottleneck and a single point of failure as the service was scaled. Also, the routing table would have to be modified each time a new agent was created or destroyed.

Another alternative approach to the routing table would be to use hash partitioning of the agent servers. In this model, the agent URI is mapped to a numeric hash bucket using an agreed-upon hashing algorithm and number of buckets. Each bucket is associated with a single agent server (there may be multiple buckets associated with the same server). Since the number of hash buckets can be relatively small, it would be entirely reasonable for a complete copy of the table to be maintained at every agent server. Also, since the hash table would provide a mapping for any conceivable agent URI, the table would not need to be updated as agents were created and destroyed; in fact, changes would only be necessary when an agent server is added to or removed from the cloud. Load balancing is intrinsic as long as the number of agents of a given load characteristic is very large compared to the number of agent servers.

A disadvantage of this approach is that the designer/administrator of the network has no control over the assignment of agents to host agent servers. All agent servers must support all agent classes, and a given agent's host server is effectively random based on its hash code. It may be desirable for agent servers to be partitionable according to agent class, to control redundancy and loading.

The RTMP routing table is essentially a hybrid of these two approaches. The table consists of a list of agent URI templates, each of which is associated with a hash table that maps a specific URI to a bucket. Each bucket is mapped to a single host agent server address. A degenerate case of a single bucket is allowed if it is desired that all URIs that match a template be hosted by the same server. When an agent URI matches more than one agent URI template, the most specific template is used.

This scheme allows the network administrator to cluster groups of agent servers according to function and still scale the cloud using hash partitioning.

In one embodiment, the contents of the routing table are specified in a configuration file when an agent server is started. An example routing configuration file is (in a simplified form) as follows:
agentroutes.numroutes=3
# route number 0
   agentroutes.route.0,class=*
   agentroutes.route.0.host=sol.openwave.com agentroutes.route.0.port=800
# route number 1 set for 3 owners
   agentroutes.route.1.class=openwave.com/persona*
   agentroutes.route.1.numbucketowners=2
   agentroutes.route.1.numbuckets=30
   # first owner
   agentroutes.route.1.bucket.0.first=0 agentroutes.route.1.bucket.0.last=9
   agentroutes.route.1.bucket.0.host=sol.openwave.com
   agentroutes.route.1.bucket.0.port=800
   # second owner
   agentroutes.route.1.bucket.1.first=10 agentroutes.route.1.bucket.1.last=19
   agentroutes.route.1.bucket.1.host=sol3.openwave.com
   agentroutes.route.1.bucket.1.port=800
   # third owner agentroutes.route.1.bucket.1.first=20 agentroutes.route.1.bucket.2.last=29
   agentroutes.route.1.bucket.2.host=sube.openwave.com
   agentroutes.route.1.bucket.2.port=800
# route #2 set for 2 owners agentroutes.route.2.class=openwave.com/chat*
   agentroutes.route.2.numbucketowners=2 agentroutes.route.2.numbuckets=20
   # first owner
   agentroutes.route.2.bucket.0.first=0 agentroutes.route.2.bucket.0.last=9
   agentroutes.route.2.bucket.0.host=sol5.openwave.com
   agentroutes.route.2.bucket.0.port=800
   # second owner
   agentroutes.route.2.bucket.1.first=10 agentroutes.route.2.bucket.1.last=19
   agentroutes.route.2.bucket.1.host=se2devsun36.openwave.com
   agentroutes.route.2.bucket.1.port=800

In the above example, there are five agent servers, sol.openwave.com, sol3.openwave.com, sube.openwave.com, sol5.openwave.com, and se2devsun32.openwave.com. All are listening on port "800". Persona agents are hashed into 30 buckets: 10 buckets each are mapped to sol.openwave.com, sol3.openwave.com, and sube.openwave.com. Chat agents are hashed into 20 buckets: 10 buckets each are mapped to sol5.openwave.com and se2devsun36.openwave.com. All remaining agents ("*") are mapped to sol.openwave.com.

### 7. Dynamic Partitioning

While the current manifestation of RTMP routing uses a static routing table defined at startup time, it is possible to build a reliable cloud of agent servers that allows the routing table to be modified without restarting all the servers. This approach would be useful, for example, to allow the network administrator to add a new agent server to a running cloud, and make it start sharing the workload with the existent servers. This approach would also allow other servers to take over management of agents when one agent server failed.

Since it is not possible to atomically update all of the copies of the routing table in every agent server in the cloud, the RTMP protocol can be extended to allow an agent server to forward or redirect a message if it determines that it has received a message that should have been sent to another server. This allows the maintaining of robust message delivery while the routing table changes are being propagated. If a routing table change causes the host agent server for an active agent to be changed, then the state for that agent must be moved to the new server and contracts must be reestablished on new transport connections. Note that all of these changes can occur without requiring the application above the protocol API to understand the routing mechanism.

### B. Contract States

Contracts are directional. That is, a contract is considered to be "outbound" from one agent and "inbound" to another agent. Agents may form reciprocal contracts with each other. That is, two agents, A and B, may have two contracts: one from A to B, and one from B to A.

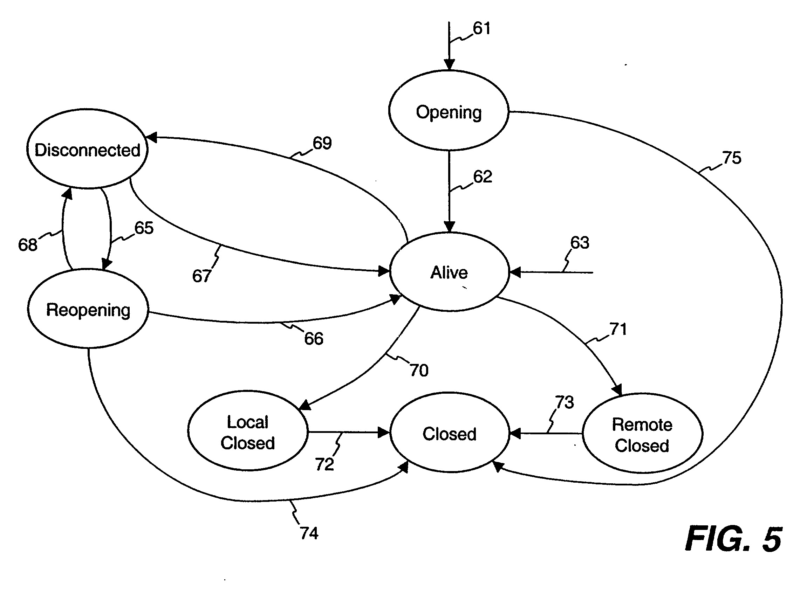

Figure 5 shows a state diagram illustrating the operation of contracts in the IM system. Contracts can be in one of seven states: Opening, Alive, Disconnected, Reopening, Local Closed, Remote Closed, and Closed. These states have characteristics as follows:
- Opening: The contract is in the process of being established for the first time.
- Alive: The contract has been established, and there is a live network connection to the remote agent.
- Disconnected: The contract exists, but the network connection with the remote agent has been severed.
- Reopening: The network connection with the remote agent is in the process of being re-established.
- Local Closed: The contract has been torn down by the local agent.
- Remote Closed: The contract has been torn down by the remote agent.
- Closed: The contract has been permanently torn down by both the local and remote agent.

The following messages are exchanged between agents to cause contract state transitions:
- OPEN: Requests the establishment of a new contract. An OPEN-RESPONSE is sent in response to an OPEN message. The agent sending the OPEN message becomes the agent for which the contract is outbound.
- CLOSE: Requests the permanent destruction of a' contract. A CLOSE message is sent in response to a CLOSE message. The agent sending the first CLOSE message may unilaterally discard its contract state if the transport connection is closed before the remote agent responds.
- REOPEN: Sent by the agent for which the contract is outbound in order to trigger the reconnection of the contract. A REOPEN-RESPONSE message is sent in response to a REOPEN message.
- PLEASE-REOPEN: Sent by the agent for which the contract is inbound, in order to trigger the reconnection of the contract. A REOPEN message is sent by the other agent, in response to which the first agent should reply with a REOPEN-RESPONSE message.

The allowable transitions between contract states are labeled in Figure 5 and are described in the following table:

| Transitions Between Contract States | |
|---|---|
| Transition Label | Cause(s) |
| 61 | A new contract is established. An OPEN message is sent to the remote agent. |
| 62 | An OPEN-RESPONSE message is received from the remote agent. |
| 63 | An unsolicited OPEN message is received from a remote agent. |
| 65 | Either: 1) The local agent, for which the contract is outbound, wishes to re-establish the connection, and sends a REOPEN message; or 2) The local agent, for which the contract is inbound, wishes to re-establish the connection, and sends a PLEASE-REOPEN message |
| 66 | Either: 1) A REOPEN-RESPONSE message is received (transition 65 |
| | case "1)" occurred previously); or 2) A REOPEN message is received (transition 65 case "2)" occurred previously) -- a REOPEN-RESPONSE message is sent. |
| 67 | An unsolicited REOPEN message is received. A REOPEN-RESPONSE message is sent. |
| 68 | Either: 1) A previous REOPEN message (sent in transition 65 case "1)" failed; or 2) A previous PLEASE-REOPEN message (sent in transition 65 case "2)" failed. |
| 69 | The network connection over which contract messages are exchanged was disconnected. |
| 70 | The local agent wishes to destroy the contract, and sends a CLOSE message. |
| 71 | An unsolicited CLOSE message is received from the remote agent. |
| 72 | The local agent receives a CLOSE message from the remote agent. |
| 73 | The local agent sends a CLOSE message to the remote agent. |
| 74 | Occurs when: 1) REOPEN fails due to explicit rejection by the receiving agent server, or 2) repeated attempts to REOPEN fail according to an application-specific policy. |
| 75 | Occurs when OPEN fails. |

### C. Application XML Schema

An Application XML Schema is an XML framework (similar to a DTD) which fully defines a given application state. The schema defines a specific set of properties, their values, and the XML structure that will be used to represent all of the data. The IM system according to one embodiment includes three specific application schemas: one schema for device level presence, one for conversations (chats), and a final one for interoperability with a third party IM network, such as Microsoft Network (MSN). The XML elements which make up the schema are described below. All schemas can be active and running at any given time.

An XML framework for the IM system can be represented as follows:

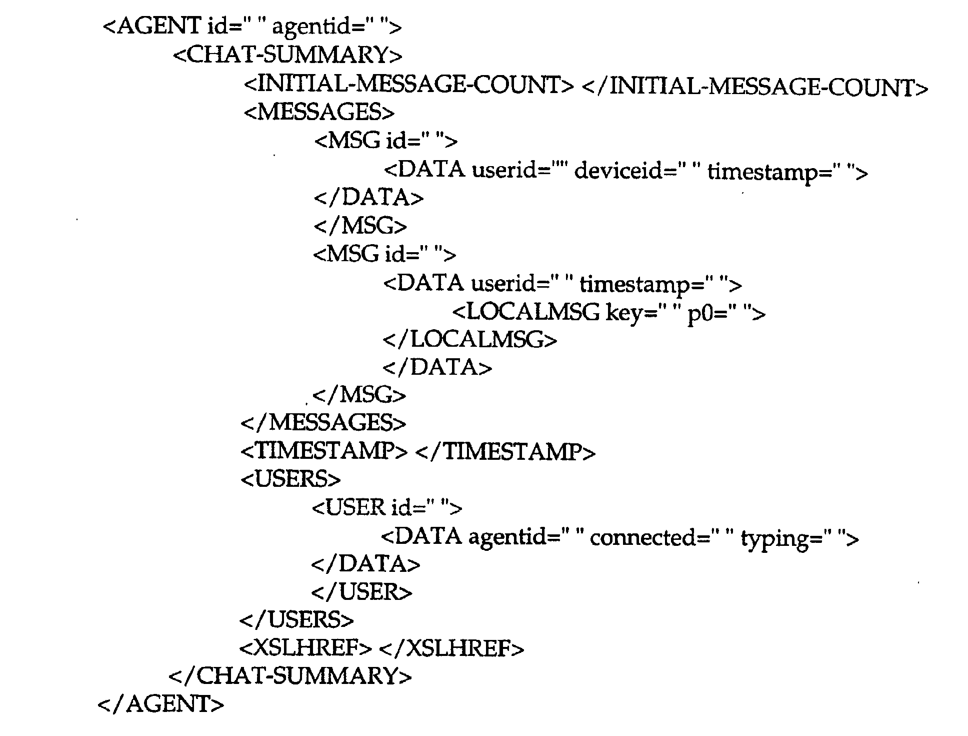

The foregoing framework defines the XML structure for chats. The IM application schema is described in greater detail below.

### D. Property Updates & Aggregation

The mechanism used to build out the application XML document uses a series of XML delta messages, as mentioned above. An XML delta is transmitted in the form of an "<ON -PROPERTY />" event message. Each XML delta is composed of a property name and a property value. The property name represents a path to a given XML node in the document. The name of the property sent out to update a specific XML element is inferred from the element path.

As agents receive property updates, they locate the named property and update their internal copy of the property value. Only device agents keep a full copy of all properties they receive; intermediate agents discard properties that they are forwarding on.

A device agent only connects to one individual persona agent, although multiple device agents may be connected to the same individual persona agent. The device agent does this by opening an "owner" contract with the selected persona agent. It is the responsibility of the persona agent to route all property updates that it receives to its connected device agent(s). In this respect, the persona agent serves to multiplex a series of property updates from its agent contracts into one stream of property updates sent to the device agent over the owner contract.

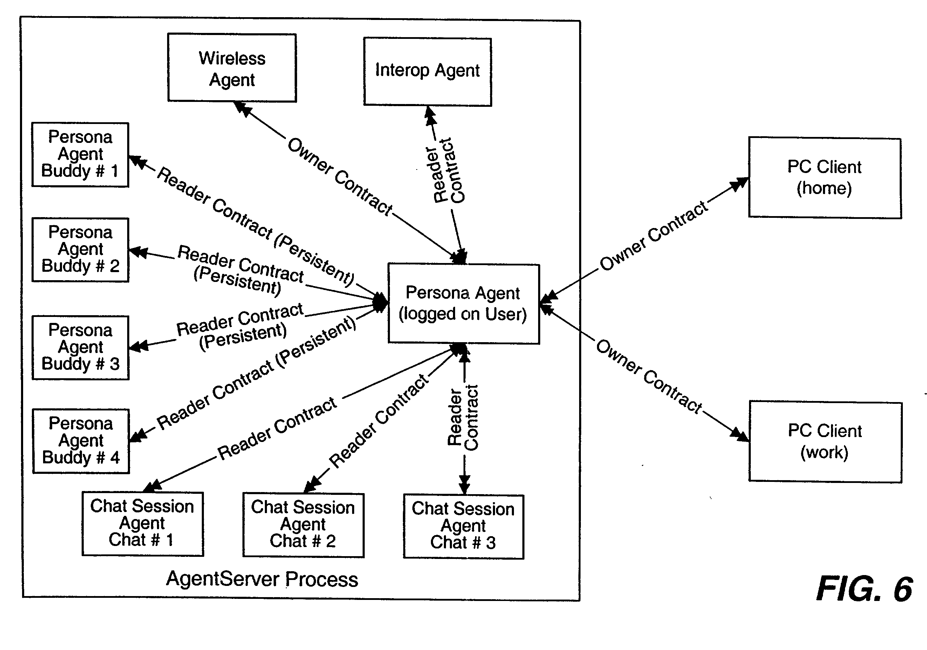

Refer now to Figure 6, which illustrates how the persona agent for a given user serves as the multiplexor of all agent level contracts. All contracts with other persona agents and with chat agents are connected to the user's persona agent executing on the server. When a device agent logs in, it creates a new contract (an owner contract) with its persona agent. Subsequently, when the user's persona agent receives any messages, such as an XML delta message, it will send the message to the device agent.

As noted above, contracts are directional. Wireless agents and PC agents subscribe to persona agents. Persona agents subscribe to other persona agents (e.g., buddies), chat agents, and interop agents.

### E. Wire Protocol Messages

When an Agent needs to send out an unsolicited property update, it does so by sending out an <ON-PROPERTY /> event message. Other protocol command messages, such as <SET-PROPERTY /> and <GET-PROPERTY />, use the same XML format as the <ON-PROPERTY /> event message.

The <SET-PROPERTY/> and <GET-PROPERTY/> messages are typically sent by agents over an owner contract. This ensures that only properly authenticated clients or agents are able to update properties values.

The <ON-PROPERTY/> event message may contain one or more <VALUE/> elements. The [Property Value] represents a well formed block of XML. Each one of the <VALUE/> elements corresponds to a single XML delta message. This allows for the sending agent to combine multiple XML delta messages into one message on the wire. Due to the structure of the event message, all of the XML delta messages must be from the same agent; if changes from two different agents need to be sent (or forwarded), then two <ON-PROPERTY/> messages would have to be sent over the wire.

The following is an example of the <ON-PROPERTY /> event syntax:

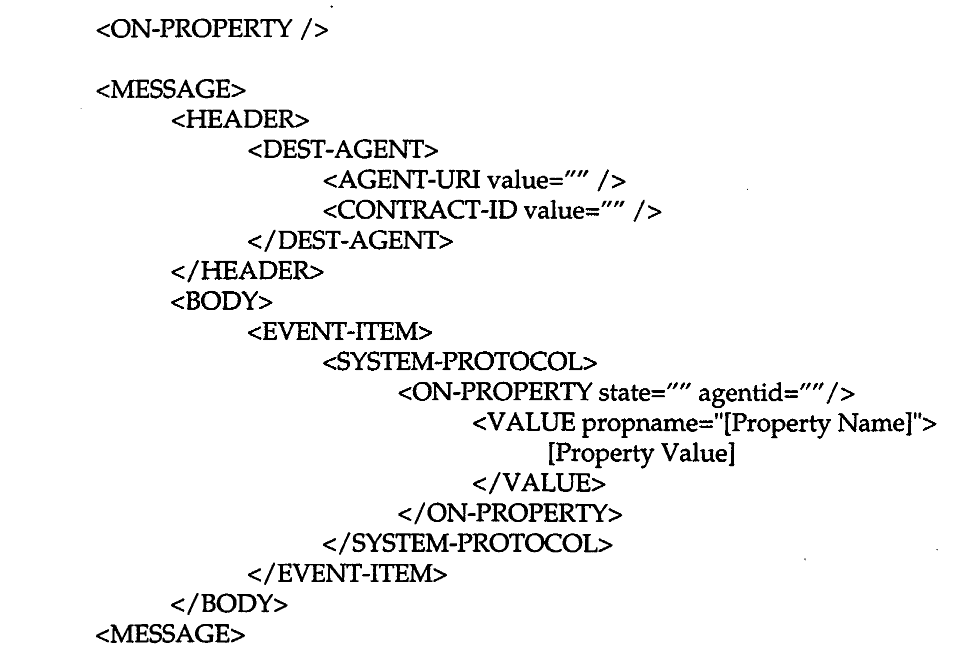

Note that in this embodiment the AGENT-URI value must be supplied and should not be blank. Similarly, the CONTRACT-ID value, if supplied, also should not be blank. This is assumed henceforth in this description.

### F. XML Command Format

The <SET-PROPERTY/> command is used by agents to update values in the XML document. When a <SET-PROPERTY/> command is received by an agent, it updates its copy in memory of the property value. If the property is a persistent property, the database is also updated to reflect the new property value.

Subsequently, the agent will issue an <ON-PROPERTY/> event message which will be sent to all other agents with which it has contracts. The <ON-PROPERTY/> message is the mechanism by which agents will get notified of property updates.

An example of the XML command format for the <SET-PROPERTY /> command is as follows:

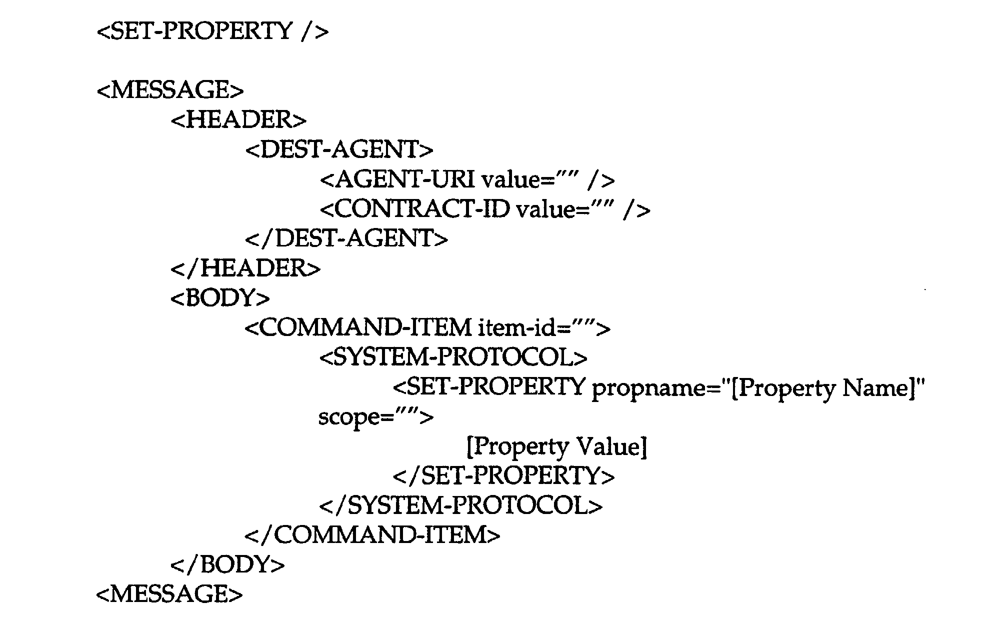

As an example, if user "john.smith" is logged into his persona agent and wants to update his custom status, the following message could be sent out by his device agent.

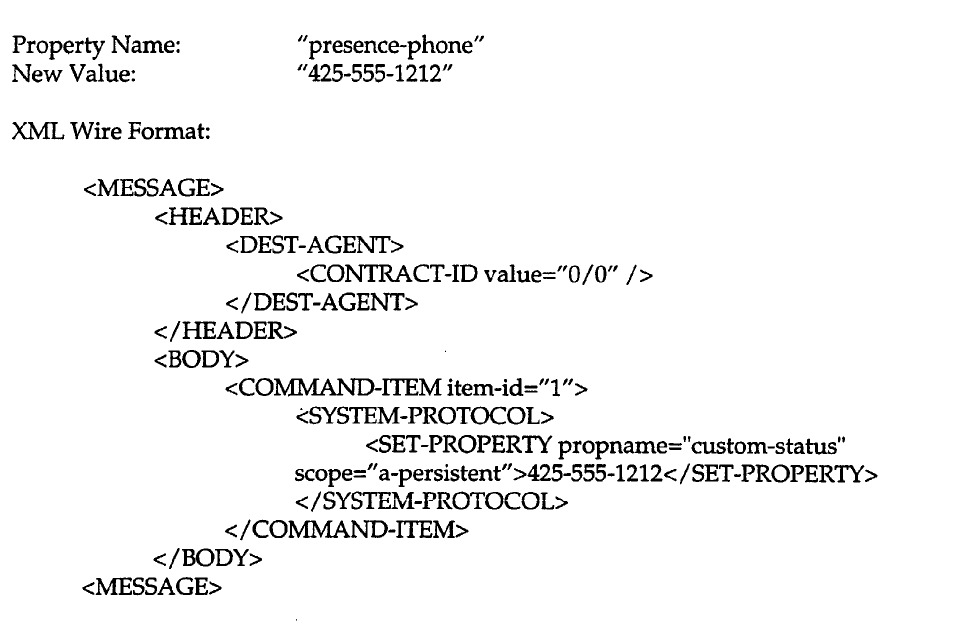

Note that when sending out the property, only the base property name will be sent. The Agent is inferred from the contract ID over which the property is sent. When this property is broadcast to all other agents, it would be sent out as the following <ON-PROPERTY/> message:

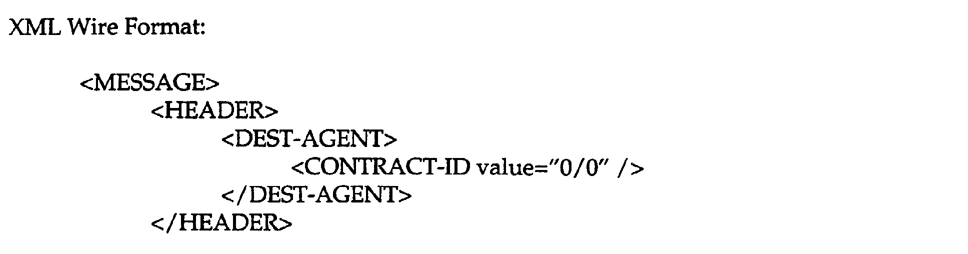

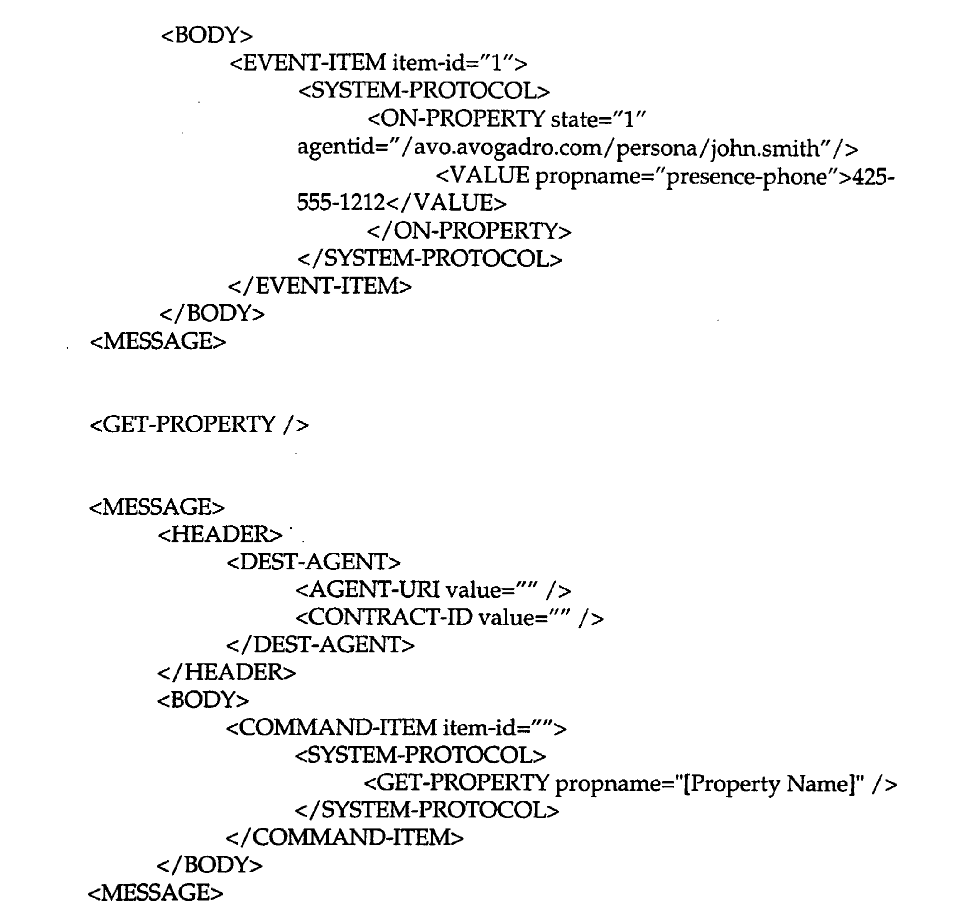

### G. XML Property Format

### 1. Property Name

A property name is a string which represents a path to an XML element. A name may map to a single XML element or a series of nested XML elements, commonly referred to as an XML fragment.

### a. Name Syntax

Property names consist of a string, delimited by zero or more period (".") characters. Names are also delimited by pairs of brackets ("[ ]"). Text within a pair of brackets represents an "id" attribute for the given XML element. No escaping mechanism is used in property names; as a result, spaces, tabs, periods and are not legal characters of names in the currently described embodiment.

Property names are parsed left to right, with the root element being the leftmost element in the name. Names which contain period characters are tokenized and converted into a hierarchy of nested XML elements.

A simple property name which does not contain any period characters corresponds to a single XML element. For example, the property name "presence-name" would be represented as the single XML node:
<presence-name>< /presence-name>

A more complex property name such as "a.b.c.d" would be represented as the XML fragment:
<a><b><c><d> </d></c></b></a>

Some examples of property names are:
- presence-name
- SECTIONS.ORDERING
- DEVICES.DEVICE[one].presence
- SECTIONS.SECTION[53686739].NAME

The property name "DEVICES.DEVICE[one].presence" would be represented as the XML fragment:

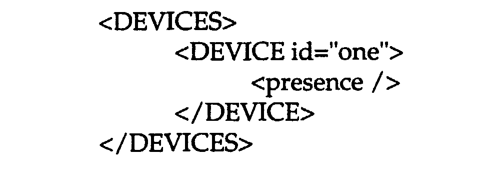

### b. Partially Qualified Property Names

Property names can be fully qualified or partially qualified (relative). If a property name is partially qualified, it takes its Agent information from the context in which it is received. All of the above examples of property names are partially qualified.

Property names sent by the Agent Server are sent as relative property names. The reason for this is that the wire protocol itself includes the information necessary for the receiver to construct the fully qualified property paths, such that it would be redundant to fully qualify the property names.

### c. Fully Qualified Property Names

Fully Qualified Property Names (FQPN) include additional information specifying the Agent Cloud, Agent Class, & Agent ID to which the property belongs. Additionally, the delimiter character for fully qualified properties uses the slash ("/") character instead of the period character. The syntax is as follows:
/[Agent Cloud]/[Agent Class]/[Agent Id]/[Property Name]

Examples of fully qualified property names are:
- /avo.avogadro.com/persona/john.smith/presence-status
- /avo.avogadro.com/persona/john.smith/DEVICES/DEVICE[one]/presence
- /avo.avogadro.com/chat/chat-jD1P2v4LwuHHt_DFxKzz29/CHAT-SUMMARY/INITIAL-MESSAGE-COUNT

The following steps may be taken to convert a partially qualified property name to a Fully Qualified Property Name (FQPN):
1. An <ON-PROPERTY /> event message is received.
2. The Agent URI is extracted from the path: //MESSAGE/BODY/EVENT-ITEM/SYSTEM-PROTOCOL/ON-PROPERTY[agentid]
3. The relative property name is extracted from the path:
   //MESSAGE/BODY/EVENT-ITEM/SYSTEM-PROTOCOL/ON-PROPERTY/VALUE[propname]
4. The relative property name is scanned for "." characters, replacing them with the "/" character.
5. The Agent URI is appended with "/"
6. The Agent URI is appended with the modified relative property name
7. The resulting string is the FQPN.

The following steps may be taken to build an XML fragment from a property name:
1. The property name is tokenized left to right using the appropriate delimiter characters (either "." or "/"), creating an array of strings.
2. Create a root XML node pointer, pRoot, set to NULL.
3. Create two temporary XML node pointers, pCurrent & pNode, set to NULL.
4. For each element in the array, do the following:
5. Parse the string for attribute information which is contained inside bracket characters.
6. If attribute information was found, save it and remove the attribute information from the string.
7. Create a new, empty, XML node and assign it to pNode.
8. Set the name of pNode to the current array element's string value.
9. If attribute information was found, create the named attribute on pNode and set its value to the saved value from step 6 above.
10. If pRoot is NULL, set pRoot equal to pNode.
11. If pCurrent is not NULL, set pCurrent's child pointer to pNode.
12. Set pCurrent equal to pNode
13. Repeat until all array elements are processed.

The following is an example, using the property name "DEVICES.DEVICE[one].presence". The property name is tokenized to create the following array:

| Array Element | Value |
|---|---|
| [0] | "DEVICES" |
| [1] | "DEVICE[one]" |
| [2] | "presence" |

In the first pass, an XML node "<DEVICES/>" is created from array element [0]. In the second pass, an XML node "<DEVICE id ='one' />" is created from array element [1]. This node is inserted as a child node of the "<DEVICES/>" node above. In the third and final pass, an XML node "<presence/>" is created from array element [2]. This node is inserted as a child node of the "<DEVICE id ='one' />" node above. The resulting XML is:

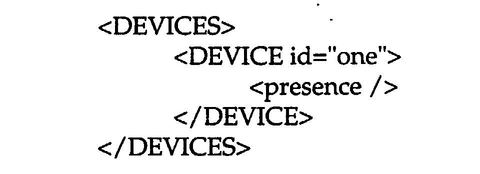

### 2. Property Value

Property values consist of well-formed XML that may contain any level of nested tags. In one embodiment, the total length of a property value is limited to 64 kbytes. Typically, if the data does not contain nested tags, the data value will be a Unicode string. Property values may not contain an XML CDATA section. The property value data will be inserted into an XML element as defined in the "Property Name" section above.

As an example, for the named property "presence-name", a legal value for the property could be the string "Mr. John Smith". This would be sent over the wire as the following XML event message fragment:

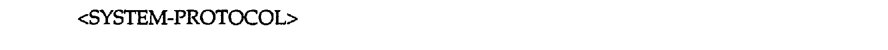

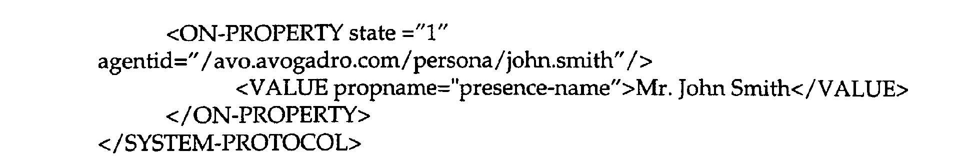

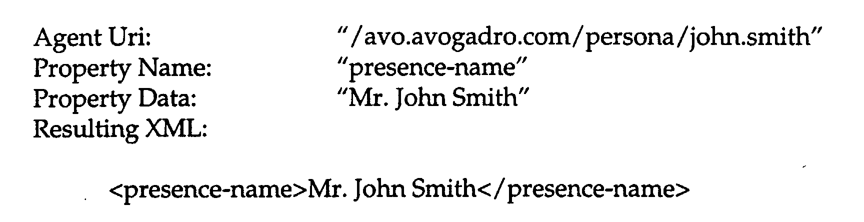

This XML fragment would be inserted into the overall XML document relative to the associated agent by which it was sent (see below).

As another example, for the named property "DEVICES.DEVICE[one].presence", the value might be the string "online". This would be sent over the wire as the following XML event message fragment:

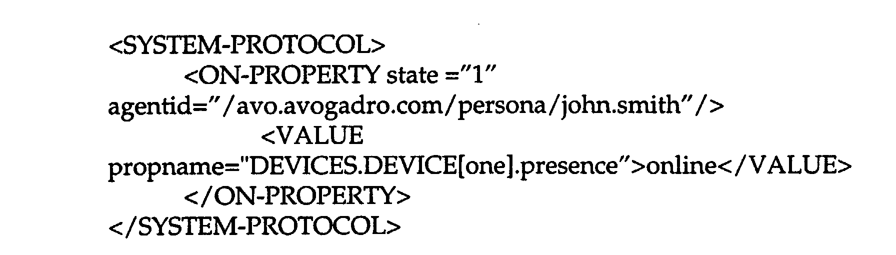

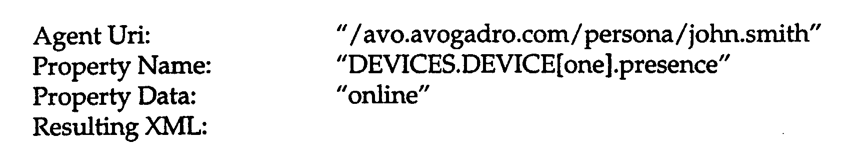

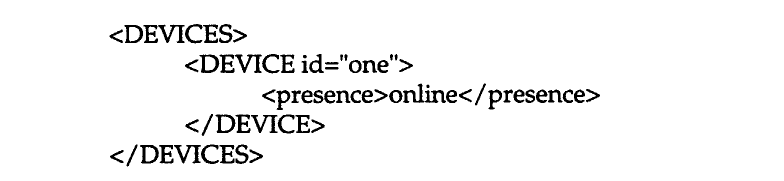

### H. Property Aggregation

The property aggregation algorithm is the mechanism by which an agent converts a series of separate XML delta messages into a unified XML document that corresponds to the application XML schema. Individually, an XML delta message does not match the XML application schema. The XML delta messages are parsed during the aggregation process to be a part of a larger XML document corresponding to the XML schema. What this means is that only a subset of the XML elements (tags) are present within the property XML data. The remainder of the XML elements are constructed from the property name as described above.

The property aggregation algorithm, according to one embodiment, is as follows:
1) Agent Receives an <ON-PROPERTY/> message
2) Agent parses <ON-PROPERTY/> message, building an array of {property name, property value} pairs.
3) For each {property name, property value} pair, the following steps are performed.
4) From the property name and the agentid, build the FQPN.
5) From the FQPN and the property value, build the XML fragment for the property.
6) Traverse the application XML document to find the proper location for the XML fragment
7) Insert the XML fragment into the application XML document, replacing any previous contents (if present).

### 1. PC Agent

The PC agent maintains a sorted list of property node names and values which it uses to build the XML document for the application. The list of property nodes allows the agent to rapidly update property contents without requiring a full rebuilding of the application XML document every time a property value is updated. The PC agent can employ the following optimization techniques to minimize the amount of work required to process XML deltas and keep the full XML document synchronized:
- When an XML delta is received, only the XML for the property is updated in the property list.
- The XML document is only rebuilt when the application attempts to access it.
- Only properties that are between the property node and the root node are updated. This allows for individual branches of the XML document to be updated while others remain untouched.

In one embodiment, property names are handled slightly differently on the PC agent. Specifically, the PC agent keeps track of properties using a modified form of the FQPN. When building out the actual XML document, the PC agent creates XML fragments from the modified FQPN. The modified FQPN format allows the PC agent to build out the XML document in a format more compatible with JavaScript's expectations of the data schema. The cloud name is not used in the creation of the XML document. as an example, for the FQPN, /avo.avogadro.com/persona/john.smith/DEVICES/DEVICE[one]/type, the PC Agent-Modified FQPN is /PERSONA/AGENT[/persona/john.smith]/DEVICES/DEVICE[one]/type.

As an example, the following is a list of properties which represent a persona agent with the ID "john.smith". This list of properties would be sent to other users who are buddies of "john.smith". A PC agent receiving this list of properties is able to build out the XML shown below; which is further processed by the application logic.

### Property List:

Name: /PERSONA/AGENT[/persona/john.smith]/DEVICES/DEVICE[one]/presence Value: "online"
Name: /PERSONA/AGENT[/persona/john.smith]/DEVICES/DEVICE[one]/type Value: "pc"
Name: /PERSONA/AGENT[/persona/john.smith]/DEVICES/DEVICE[two]/presence Value: "idle"
Name: /PERSONA/AGENT[/persona/john.smith]/DEVICES/DEVICE[two]/type Value: "wap-phone"
Name: /PERSONA/AGENT[/persona/john.smith]/presence-dnd Value: "false"
Name: /PERSONA/AGENT[/persona/john.smith]/presence-name Value: "Mr. John Smith"
Name: /PERSONA/AGENT[/persona/john.smith]/presence-online Value: "true"
Name: /PERSONA/AGENT(/persona/john.smith]/presence-status Value: "Very Busy"

The resulting XML or this property list is as follows:

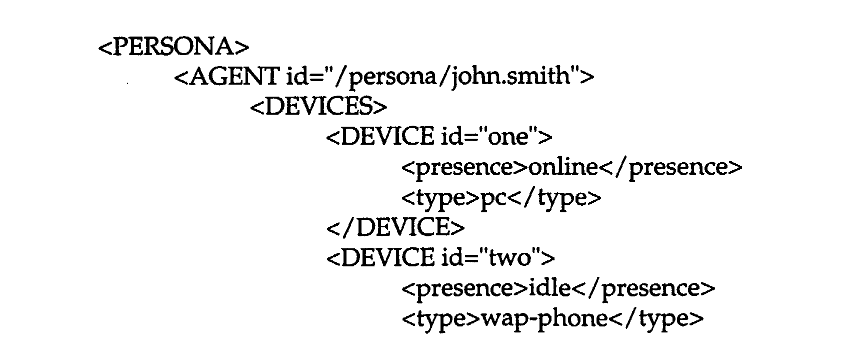

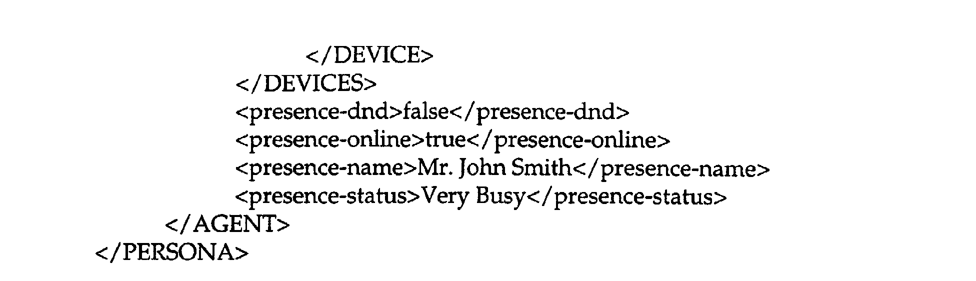

### 2. Wireless Agent

The Wireless Agent uses a similar model for aggregating properties. Internally, it stores the XML in a condensed form similar to what other Agents use. The resulting XML document is queried by JSPs running on a separate server. These JSPs implement the application logic, responding to changes in the state of the XML document.

### I. Public vs. Private Properties

Individual properties have an access control variable associated with them on the agent server. The access control variable allows the each agent to selectively forward on those properties that are deemed "public" and filter out those which are not. This prevents private information, such as passwords and buddy list information from being forwarded. Private properties are those that are only available to other Agents connected via an owner contract.

### J. Property Routing

Properties are routed via agent contracts. If two agents have a contract between them, this enables the agents to forward properties. In one embodiment, Agents will not forward properties from Agents with which they do not have a direct contract. This prevents the creation of circular references or property forwarding loops.

Consider three Agents, A, B, C, where the notation A->B means that A has a contract with B. If the list or table of contracts was: A->B, B->C, C->A, then it is clear that a circular reference would result if properties originally sent from A were actually forwarded back to A by Agent C. For that matter, if any of these Agents forwarded properties beyond their immediate contracts, it would cause a circular reference (forwarding loop).

One embodiment completely avoids the problem of circular references, because in such embodiment: 1) only persona agents forward properties, 2) forwarding is only to inbound owner contracts, and 3) persona agents are not allowed to create owner contracts to each other.

Additionally, this system provides privacy control. If in the above example, one considers privacy issues, it could be stated that A trusts B, such that A is willing to forward properties to B. As described, these contracts are one way; it is not implied by this model that B trusts A, thus is willing to forward property data back to A. So, looking at the three contracts, it would violate A's privacy and trust relationship with B if Agent B were to forward on A's properties to Agent C.

On the agent server, intermediate Agents do not cache Agent properties. Again using the example above, when Agent A sends a property to Agent B, it is not Agent B's responsibility to keep a copy of this property data. If no clients are logged into Agent B, the agent server will discard the forwarded property. If at a future time, a client logs into Agent B, Agent B may then request a full update of all of Agent A's properties in order to synchronize the newly logged in client.

Consider the following example. Agents "john.smith" and "jane.doe" are buddies; that is, they have mutual Agent level contracts between them. If these two Agents participate in a chat, a third chat session agent would be created, e.g. "chat-0001", and both agents would create mutual contracts with the associated chat agent. This would produce a contract table as follows:
- john.smith: -> j ane.doe
- john.smith: -> chat-0001

- jane.doe: -> john.smith
- jane.doe: -> chat-0001

- chat-0001: -> john.smith
- chat-0001: -> jane.doe

Now, when john.smith sends a new message, the following property routing would take place. First, john.smith would send a new message event to the chat agent. The chat agent would create a new property and then would forward this property back to both agents "john.smith" and "jane.doe". Note that actual messages are never forwarded directly between device agents. If "john.smith" now added a new buddy, "bob", and invited him to the chat, the contract table would now be as follows:
- john.smith: -> jane.doe
- john.smith: -> chat-0001
- john.smith: -> bob

- jane.doe: -> john.smith
- jane.doe: -> chat-0001

- chat-0001: -> john.smith
- chat-0001: -> jane.doe
- chat-0001: -> bob

- bob: -> john.smith
- bob: -> chat-0001

Since "jane.doe" and "bob" do not have a contract between them, it would be impossible to chat if the chat agent were not the Agent forwarding on properties to all chat participants. In this example; "john.smith" and "bob" will be able to exchange additional information (such as presence) that "bob" and "jane.doe" will not see. If "bob" were to go offline or set his presence status to busy; these property changes would not be forwarded to "jane.doe".

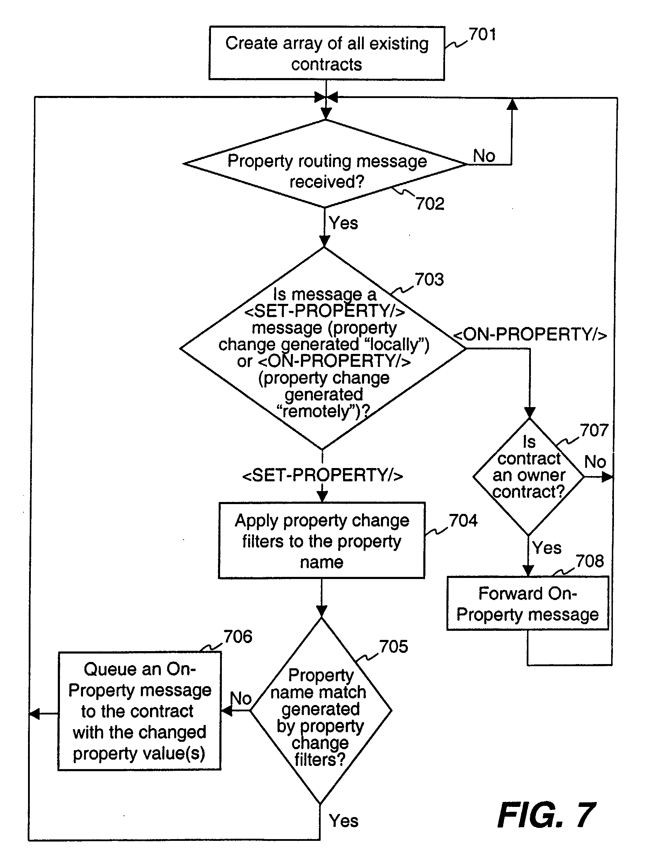

Figure 7 illustrates the process for notifications of property changes, which may be performed by an agent, such as a persona agent. Initially, an array of all existing contracts is created at block 701. For each inbound contract in the array, when a property routing message is received (block 702), the manner in which it is processed depends (block 703) upon whether the message is a <SET-PROPERTY /> command (i.e., the property change was generated "locally") or an <ON-PROPERTY> message (i.e., the property change was generated "remotely").

If the property change is received in the form of a <SET-PROPERTY /> command, then property change filters are applied to the property named at block 704, and if no property name match results (block 705), an <ON-PROPERTY> message is queued to the contract with the changed property value(s) at block 706. Otherwise, no action is taken in response to the received property change message.

If the property change was received from another agent in the form of an <ON-PROPERTY> message, the process proceeds from block 703 to block 707. In block 707, it is determined whether the current contract is an owner contract. If so, a copy of the <ON-PROPERTY> message is forwarded to the specified agent. If the current contract is not an owner contract, no action is taken in response to the received message.

The foregoing process is performed for each inbound contract in the array each time of property routing message is received.

### K. Message Forwarding

When a device is logged into an agent over an owner contract, it is possible for the device to instruct the agent to send certain messages to other agents. The process of having a persona agent send a message on behalf of another agent is called message forwarding. An example of this is the use by a device agent of "typing" (status) messages and actual IM messages. In both of these cases, event messages are sent by the device agent to the persona agent, which will then subsequently send the properties on to the chat agent. Message forwarding is used by device agents, since they only maintain one contract at a time (to their respective persona agent). Another reason is that only the persona agent has a contract with chat agents or with other buddies. Yet another reason is security. For example, a firewall can protect access to the server cloud from untrusted device agents. Only persona agents can be made accessible outside the cloud, and they can be constructed to enforce security and authentication, relieving the other agents from much of that responsibility.

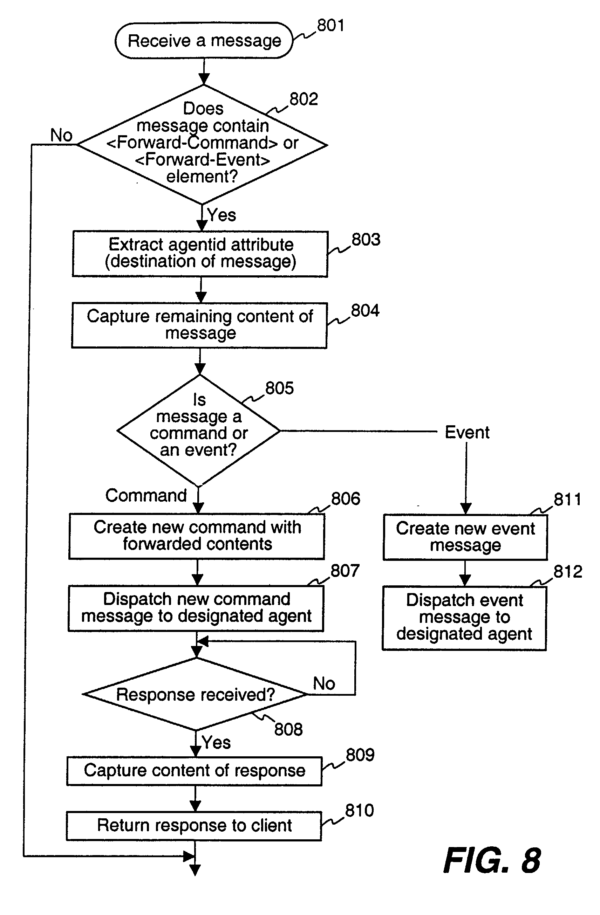

Figure 8 illustrates the message forwarding process implemented by an agent. Initially, a message is received by the agent at block 801. If the message contains a <FORWARD-COMMAND /> or <FORWARD-EVENT/> element, the process proceeds with block 803; otherwise, the message is not forwarded. At block 803, the agent extracts the "agentid" attribute which is the destination of the forwarded message. At block 804, the agent then captures the contents of the remaining message. A determination is then made at block 805 of whether the message is a command or an event. If the message is an event, then 811 a new event message is created at block 811 and dispatched to the designated agent at block 812.

If the message is a command, then the process proceeds from block 806, in which a new command message is created with the forwarded contents. The message is then dispatched to the designated agent at block 807. When a response is received (block 808), the response is captured at block 809, and at block 810 the captured response is returned to the device agent as the response from the forwarded command.

In one embodiment, only owner contracts and superuser authorized identities (trusted port) can forward messages. When forwarding is not allowed, event messages are discarded, and command messages receive a failure response.

The following example shows how all of the above-noted processes are integrated in the IM system. In this example, a user logged into a PC agent sends a new instant message to an active chat session. The sequence of events is as follows.:
1. PC agent constructs a new <POST-EVENT/> event message containing the new <TALK/> data to add to the chat.
2. Since the <POST-EVENT/> is destined for the Chat Agent, the PC agent wraps the <POST-EVENT/> message in a <FORWARD-EVENT> message.
3. PC agent sends the <FORWARD-EVENT> message to its Persona Agent.
4. The Persona Agent parses the <FORWARD-EVENT> message and determines that it needs to forward the <POST-EVENT/> on to the Chat Agent.
5. The Persona Agent sends the <POST-EVENT/> message to the Chat Agent.
   Note: Actions 3 - 5 constitute the process of "forwarding" a message.
6. Next, the Chat Agent parses the <POST-EVENT/> message and extracts the <TALK/> data portion.
7. The Chat Agent examines its internal state to determine the ID for the next <MSG/> property in the chat.
8. The Chat Agent constructs a new <MSG/> property to be added to the chat. This will contain the user's ID in the chat, the device from which the message data was sent.
9. The Chat Agent sends out an <ON-PROPERTY/> event message to all Persona Agents connected to the chat. In this case, the property name could be "CHAT-SLMMIARY.MESSAGES.MSG[0002]".
   Note: This action constituted the process of the Chat Agent sending out an XML delta for the chat session.
10. The original user's Persona Agent receives the <ON-PROPERTY/> event message.
11. Following the process for property change notification, the user's Persona Agent walks its list of contracts and sends the <ON-PROPERTY/> message on to the PC agent over the owner contract.
12. The PC agent receives an <ON-PROPERTY/> message and follows the procedure for converting this XML delta into an XML fragment.
13. The XML fragment is merged into the overall XML document, resulting in the chat session XML to reflect the newly added message.

Now that the overall sequence of events is established, the following will show the XML messages which are sent between the device agent, persona agent, and chat agent. It will also show the state of the device agent's XML document at various stages.

The following is an example of the XML message sent by the device agent to its Persona Agent (action "3." above):

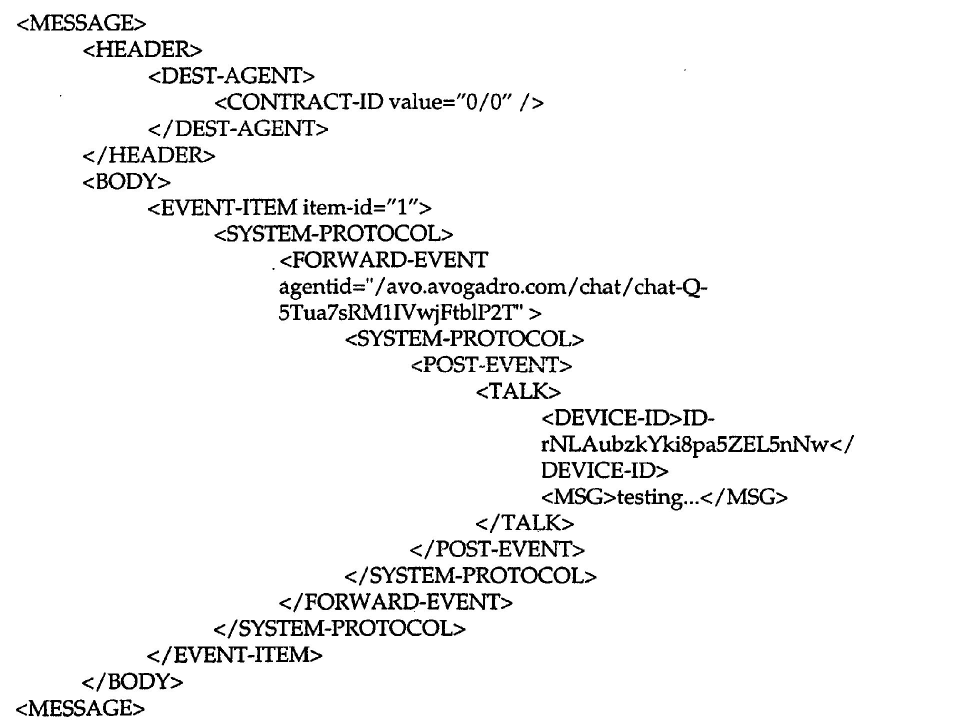

In the above example, the contents of the forwarded event are a <POST-EVENT> message. The target of the forwarded message is the chat session
"/avo.avogadro.com/chat/chat-Q-5Tua7sRM1IVwjFtblP2T". It can be seen from the XML that the forwarded event must include the full protocol information (thus the <SYSTEM-PROTOCOL> element contained inside). Since this was an event, there will not be any results returned by either the chat session agent or the persona agent.

The following XML code is an example of the XML message sent by the Persona Agent to the chat agent (action "5." above). The Persona Agent has removed the outer wrappers; and is sending the <POST-EVENT/> message on to the Chat Agent. To the Chat Agent, it appears that the message was sent directly by the Persona Agent.

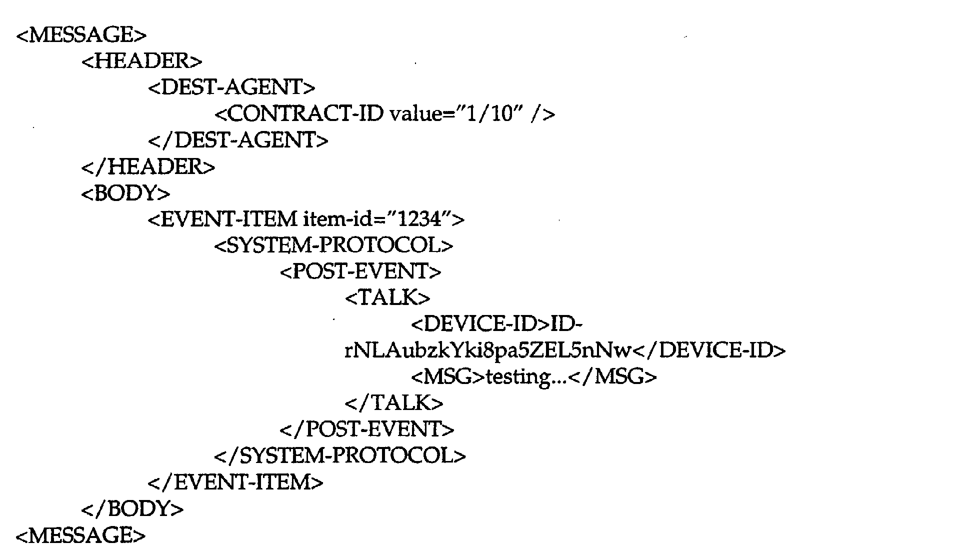

The following is an example of the XML message sent by the chat agent to all persona agents (action "9." above). The Chat Agent has generated a new property from the event message it received. It has subsequently sent out an XML delta to all of the attached Persona Agents. The XML delta contains all of the necessary information to add the new message into the Chat Session XML.

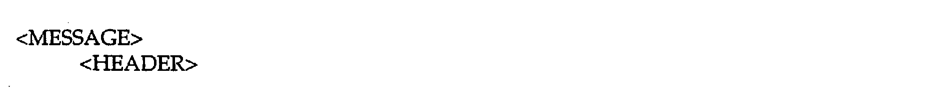

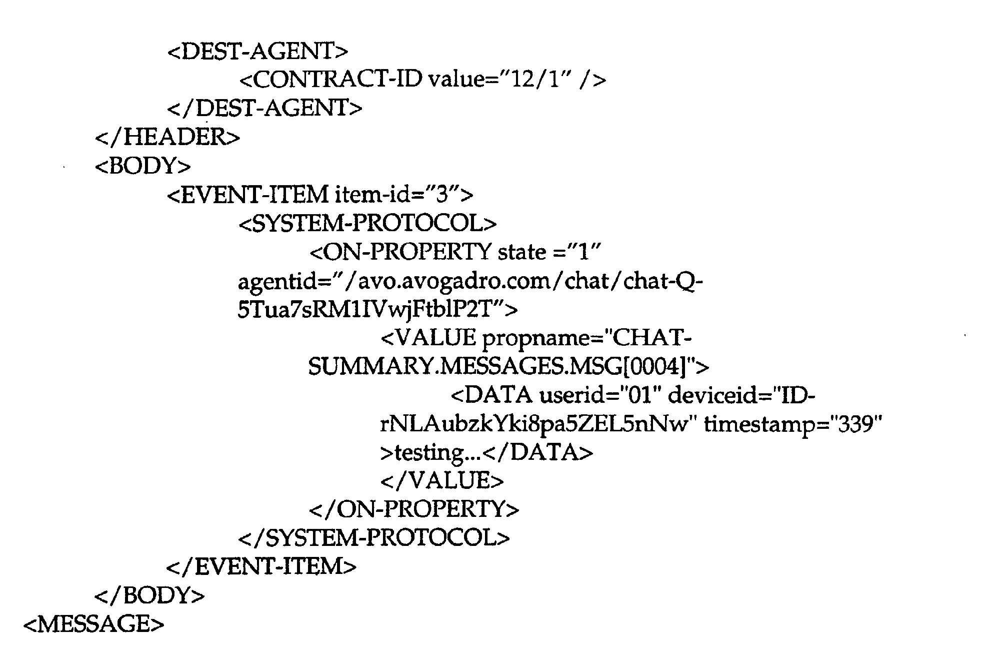

The following is an example of the XML message sent by the persona agent to its PC agent (action "11." above). The Persona Agent receives the original <ON-PROPERTY/> message from the Chat Agent and sends out a copy of the message to its attached owner contracts (the PC agent in this case).

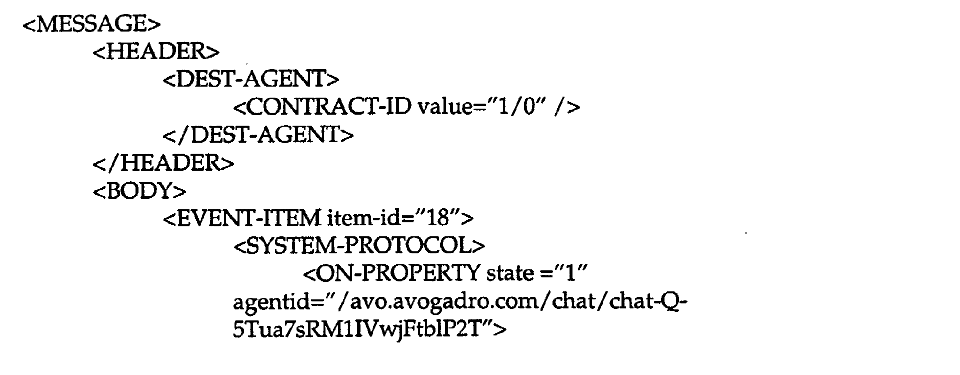

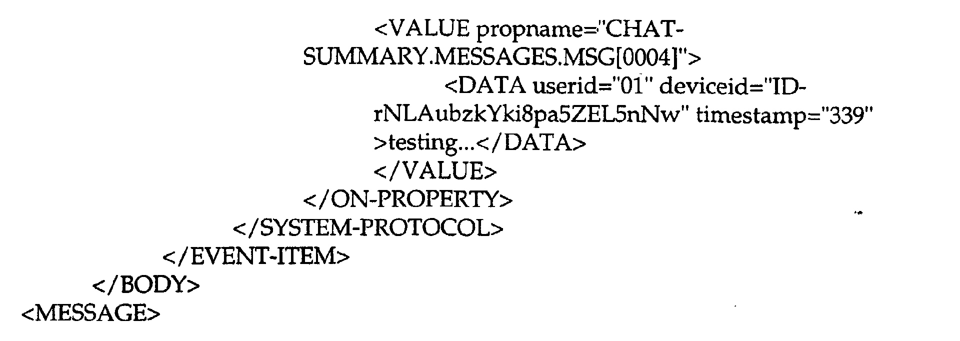

The following is an example of the extracted <ON-PROPERTY/> in action "12.":

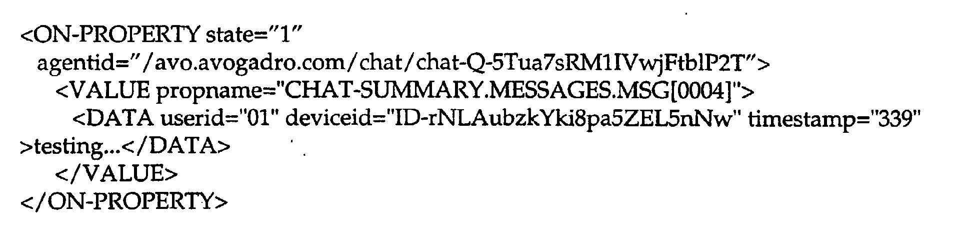

The device agent will first extract the agentid and base property name to build the fully qualified property name:

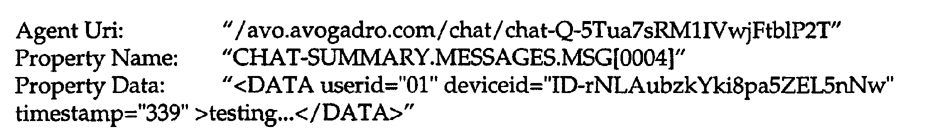

The FQPN is:
/avo.avogadro.com/chat/chat-Q-5Tua7sRM1IVwjFtblP2T/CHAT-SUMMARY/MESSAGES/MSG[0004]

The PC Agent-Modified FQPN is:
/PERSONA/AGENT[/chat/chat-Q-5Tua7sRM1IVwjFtblP2T]/CHAT-SUMMARY/MESSAGES/MSG[0004]

The resulting XML Fragment is:

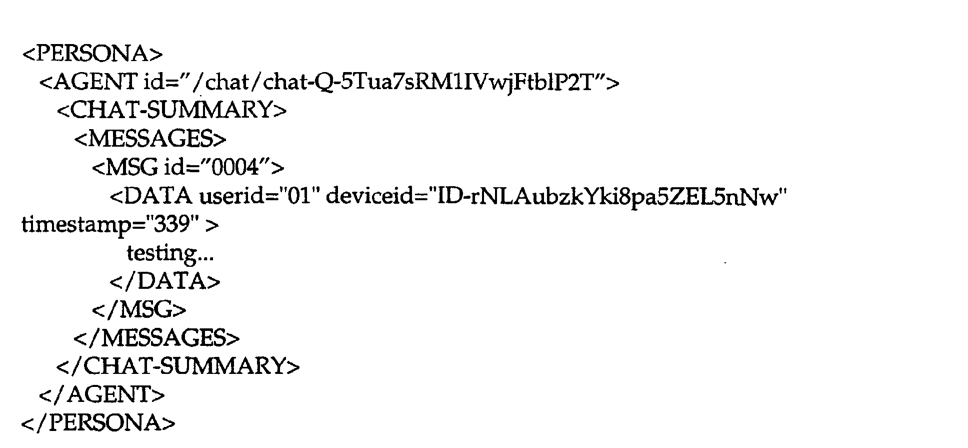

In action "13", the PC agent will aggregate the XML fragment from action "12" into the overall XML document, which would result in an XML document such as the following:

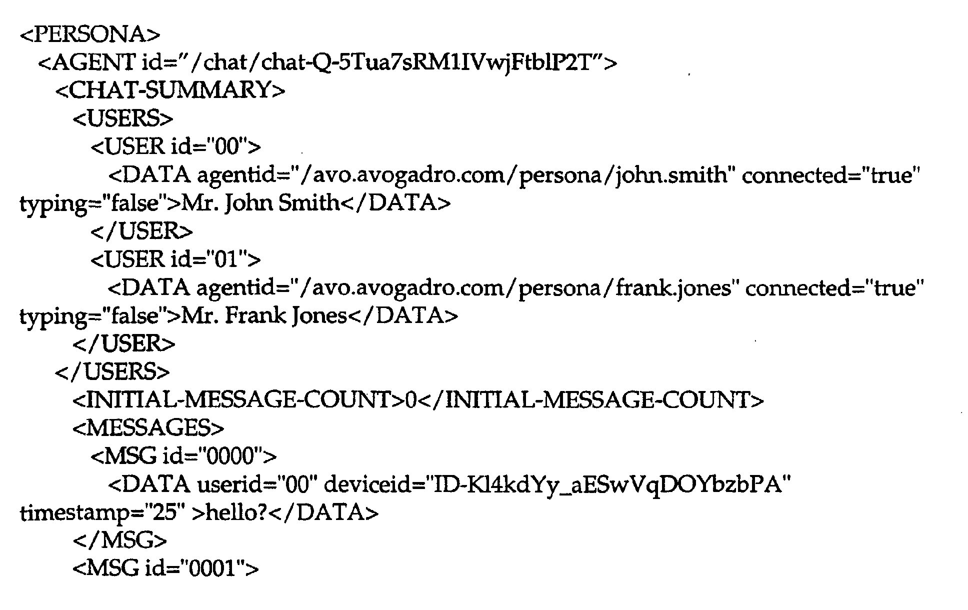

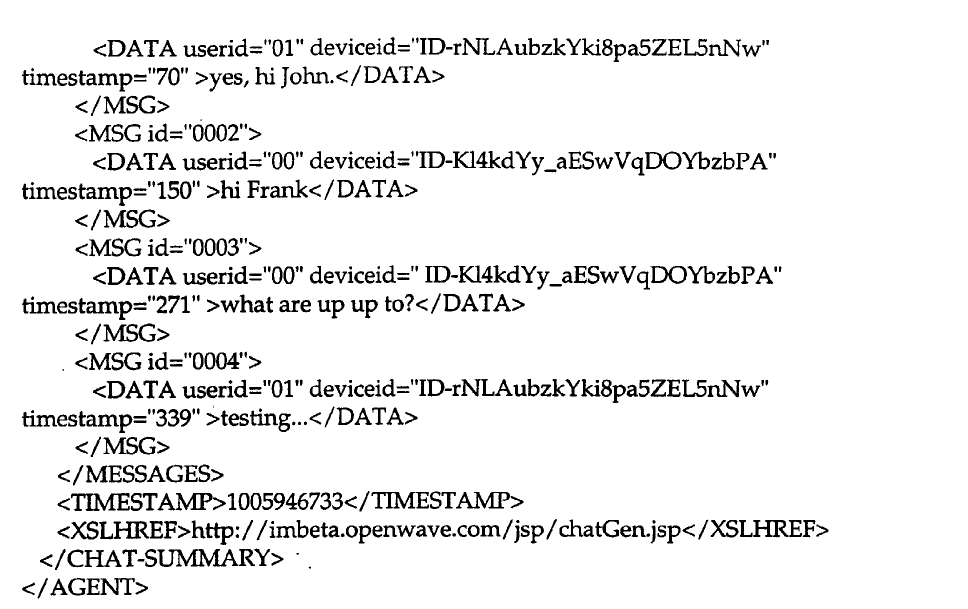

In this final action, the PC agent has merged the XML fragment into the overall XML document. At this point, the application will be notified that new data is present and it will take the necessary actions. For one embodiment of the IM application, this would result in the JavaScript adding the text of the new chat message into a dynamic HTML (DHTML) element in the existing chat window.

### K. Example of Operation

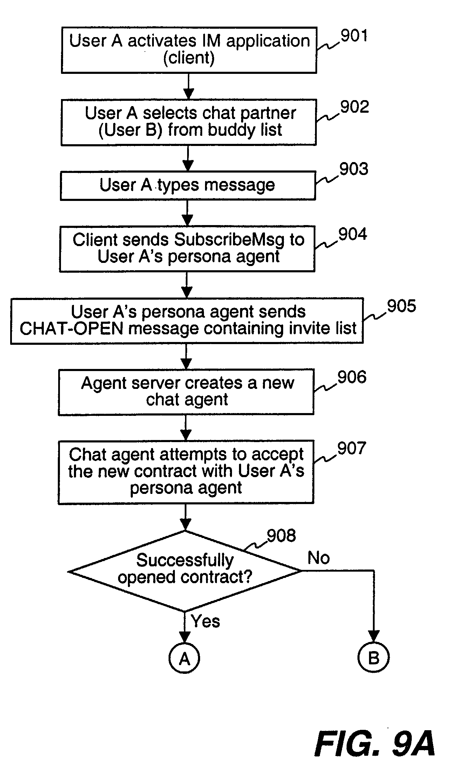

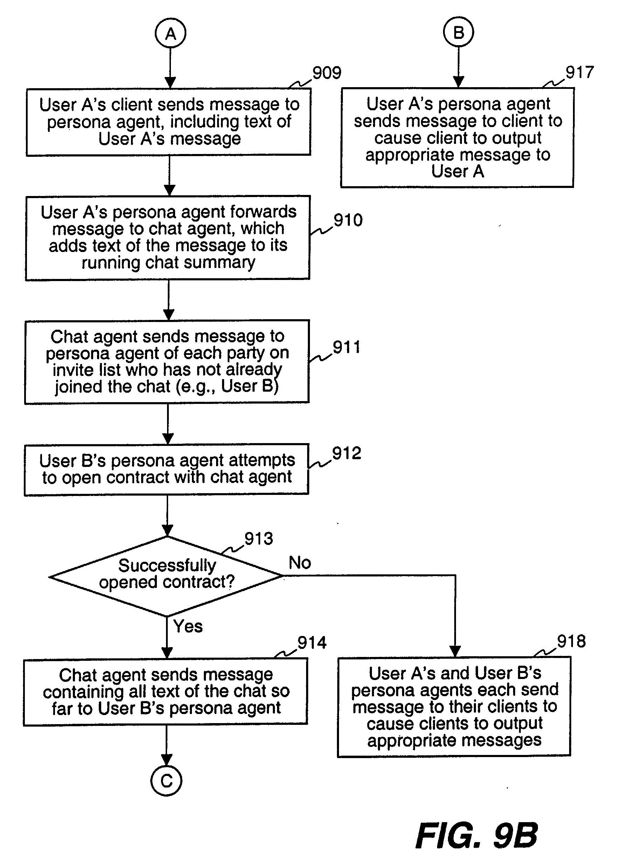

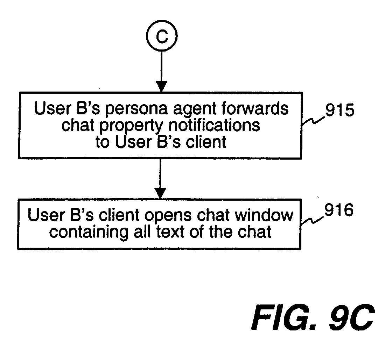

An example of the operation of the IM system will now be described with reference to Figures 9 through 12. Figure 9 shows a high level process for initiating a chat between two users, User A and User B. Initially, at block 901 User A activates the IM client application on his end-user device (e.g., a wireless device or PC), and at block 902, User A selects a chat partner, User B, from his buddy list. User A types an instant message at block 903, and at block 905 User A's persona agent sends a CHAT-OPEN message containing an invite list. At block 906 the agent server creates a new chat agent. The chat agent then attempts to accept the request to open a contract with User A's persona agent at block 907. If the contract cannot be opened (block 908) for any reason, then the process ends with block 917, in which User A's persona agent sends a message to User A's device agent, to cause User A's end-user device to output an appropriate message informing User A of the failure.

If the contract is opened successfully, the process continues with block 909. In block 909, User A's device agent sends a message to his persona agent including the text of the message typed by User A. User A's persona agent then forwards the message to the chat agent at block 910, which adds the text of the message to its running chat summary. At block 911 the chat agent sends a message to the persona agent of each party on the invite list who has not already joined the chat (i.e., only User B in this example). At block 912 User B's persona agent attempts to open a contract with the chat agent. If the contract cannot be opened (block 913), the process ends with block 918, in which User A's and User B's persona agents each send a message to their respective device agents, to cause the corresponding client devices to output appropriate failure messages.

If the contract is opened successfully, then the process continues with block 914, in which the chat agent sends a message to User B's persona agent containing all text of the chat so far. Next, at block 915 User B's persona agent forwards chat property notifications to User B's device agent. The process then ends with block 916, in which User B's device agent causes a chat window containing all of the text of the chat to be opened on User B's device.

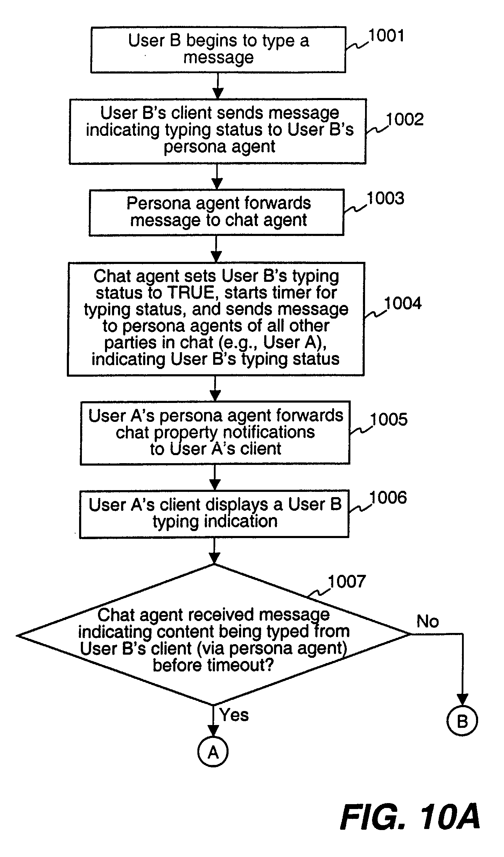

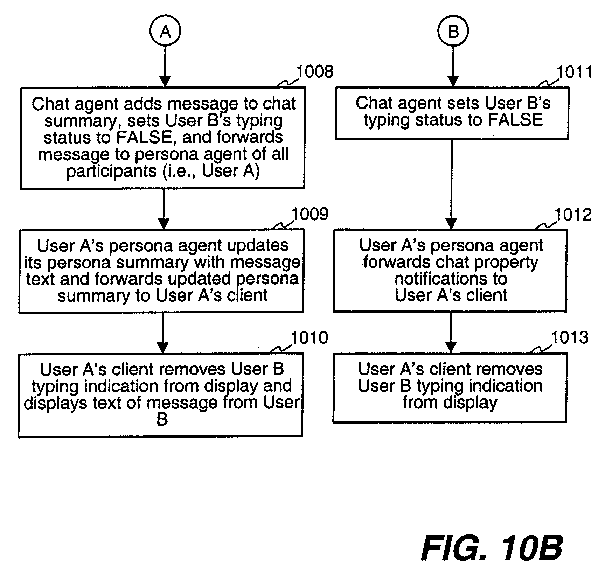

Figure 10 illustrates a high level process for carrying out a chat that is already in progress between User A and User B. At block 1001, User B begins to type an instant message to User A. At block 1002 User B's device agent sends a message indicating "typing" status (i.e., the fact that User B is typing) to User B's persona agent. User B's persona agent then forwards a message indicating "typing" to the chat agent at block 1003. At block 1004 the chat agent sets User B's typing status to TRUE, starts a timer for the typing status, and sends a message to the persona agents of all other parties in the chat (User A in this example), indicating User B's typing status. At block 1005 User A's persona agent forwards chat property notifications to User A's device agent. User A's device agent then causes a typing indication to be displayed to User B at block 1006. Next, if the chat agent has received a message indicating that content is being typed from User B's device agent (via User B's persona agent) before a timeout, the process proceeds from block 1008. Otherwise, the process proceeds from block 1011.

In the former case, at block 1008 the chat agent adds the message to the chat summary, sets User B's typing status to FALSE, and forwards a message to the persona agent of all participants (only User A in this example). Next, at block 1009 User A's persona agent updates its persona summary with the message text and forwards the updated persona summary to User A's device agent. The process then ends with block 1010, in which User A's device agent causes the User B "typing" indication to be removed from the display of User A's device and further causes the text of User B's message to be displayed to User A.

Assuming the chat agent did not receive a message indicating content being typed within a timeout period (block 1007), the process continues from block 1011, in which the chat agent sets User B's typing status to FALSE. Next, at block 1012 User A's persona agent forwards chat property notifications to User A's device agent. The process then ends with block 1013, in which User A's device agent causes the User B "typing" indication to be removed from the display of User A's device.

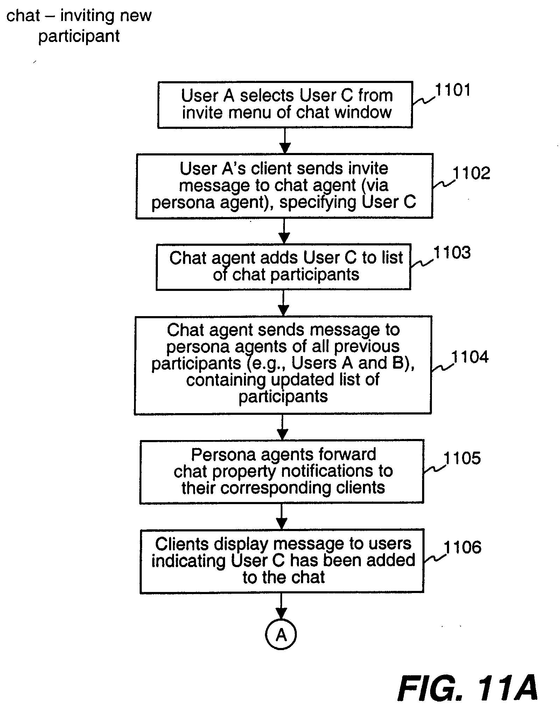

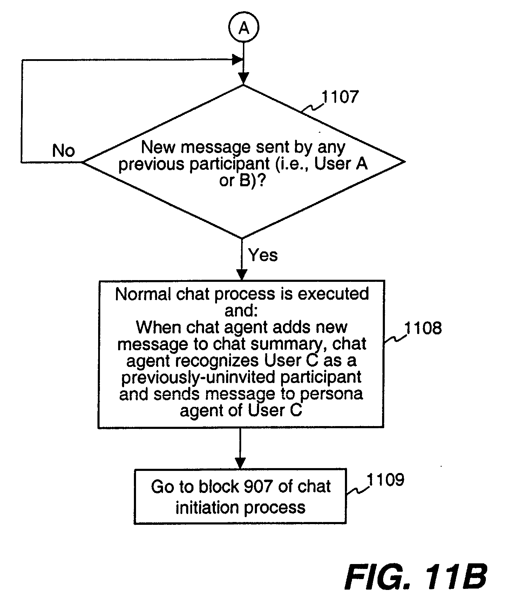

Figure 11 illustrates a high level process for inviting a new participant to the chat. At block 1101 User A selects a third person, User C, from the invite menu of his chat window. This action causes User A's device agent to send an invite message to the chat agent at block 1102 (via User A's persona agent), specifying User C as the invitee. At block 1103 the chat agent adds User C to list of chat participants. The chat agent then sends a message to the persona agent of all previous participants (e.g., users A and B) at block 1104, containing an update list of participants. At block 1105 the persona agents each update their persona summaries and forward updated persona summaries to their corresponding device agents. At block 1106 each device agent then causes a message to be displayed to its corresponding user indicating that User C has been added to the chat.

When a new message is sent by any previous participant (i.e., User A or User B) (block 1107), the normal chat process is executed as described above at block 1108. In addition, when the chat agent adds a new message to the chat summary, it recognizes User C as a previously-uninvited participant and send a message to the persona agent of User C. The process of Figure 11 ends at block 1109 by performing the chat initiation process described above (Figure 9) from block 907 of that process.

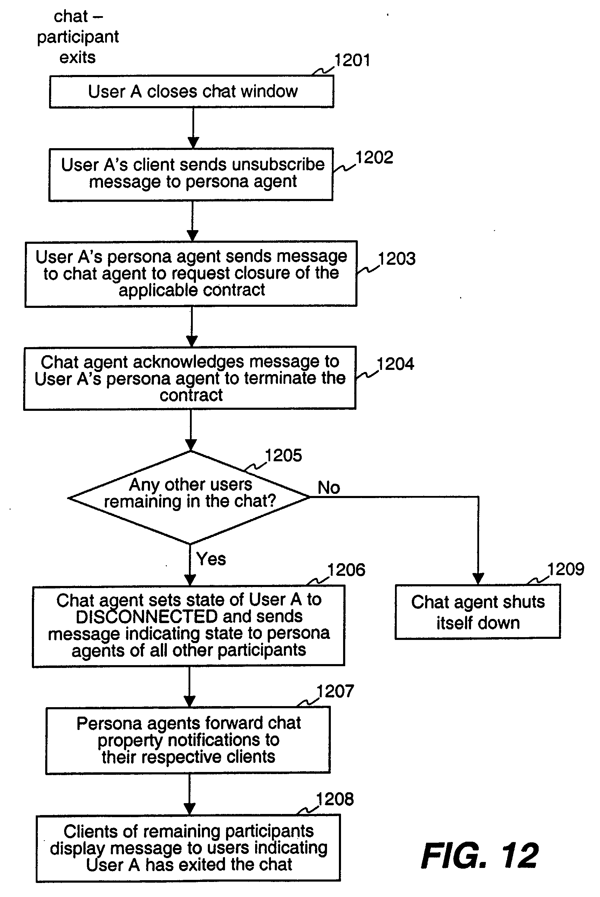

Figure 12 illustrates a high level a process for a participant exiting the chat. At block 1201 User A closes his chat window to terminate his participation in the chat. This action causes User A's device agent to send an unsubscribe message to User A's persona agent at block 1202. At block 1203 User A's persona agent sends a message to the chat agent requesting closure of the applicable contract. Next, at block 1204 the chat agent acknowledges the message to User A's persona agent to terminate the contract.

If no other users are remaining in the chat (block 1205), the process ends with block 1209, in which the chat agent shuts itself down. If there is at least one remaining user, the process continues from block 1206. In block 1206 the chat agent sets the state of User A to DISCONNECTED and send a message indicating this state to the persona agents of all other participants. At block 1207 each such persona agent forwards chat property notifications to its respective device agent. The process ends with block 1208, in which the device agents of all remaining participants cause a message to be displayed to their respective users indicating that User A has exited the chat.

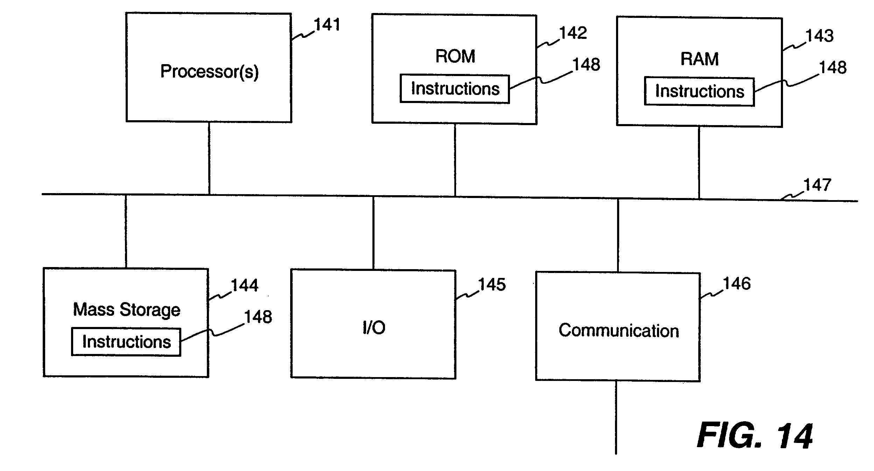

Figure 14 shows an abstraction, in block diagram form, of a processing system that may represent any of the physical processing devices or systems discussed above (including any of the mobile devices 1, the proxy gateway 4, or processing systems 5). The illustrated system includes one or more processors 141, i.e. a central processing unit (CPU), read-only memory (ROM) 142, and random access memory (RAM) 143, which may be coupled to each other by a bus system 147. The processor(s) 141 may be, or may include, one or more programmable general-purpose or special-purpose microprocessors, digital signal processors (DSPs), programmable controllers, application specific integrated circuits (ASICs), programmable logic devices (PLDs), or a combination of such devices. The bus system 147 includes one or more buses or other connections, which may be connected to each other through various bridges, controllers and/or adapters, such as are well-known in the art. For example, the bus system 147 may include a "system bus", which may be connected through one or more adapters to one or more expansion buses, such as a Peripheral Component Interconnect (PCI) bus, HyperTransport or industry standard architecture (ISA) bus, small computer system interface (SCSI) bus, universal serial bus (USB), or Institute of Electrical and Electronics Engineers (IEEE) standard 1394 bus (sometimes referred to as "Firewire").

Also coupled to the bus system 147 are one or more mass storage devices 144, input/output (I/O) devices 145, and data communication devices 146. Each mass storage device 144 may be, or may include, any one or more devices suitable for storing large volumes of data in a non-volatile manner, such as a magnetic disk or tape, magneto-optical (MO) storage device, or any of various forms of Digital Versatile Disk (DVD) or Compact Disk (CD) based storage, or a combination thereof.

Each data communication device 146 is a device suitable for enabling the processing system to communicate with remote devices and may be, for example, a wireless transceiver (e.g., in the case of a mobile device), a conventional modem, a Digital Subscriber Line (DSL) modem, a cable modem, an Ethernet adapter, an Integrated Services Digital Network (ISDN) adapter, a satellite transceiver, or the like. The I/O device(s) 145 may include, for example, a keyboard or keypad, a display device, and/or a pointing device (e.g., a mouse, trackball, or touchpad). Note, however, that such I/O devices may be unnecessary for certain types of devices and/or in certain embodiments. For example, a device which functions only as a server does not necessarily require local I/O devices in addition to a data communication device, particularly if the server does not need to directly interface with a user or operator. Similarly, it may not be desirable or practical to include a mass storage device in a mobile device 1. Many other variations on the above described embodiment are possible. Further, it will be understood that the processing system may include other conventional components such as are well-known in the art (e.g., RF signal processing circuitry in the case of a mobile device 1).

The processes described above may be implemented in software 148, which may reside, either partially or completely, in any of RAM 143, mass storage device 144 and/or ROM 142, as shown, or on a remote processing system.

### IV. Protocol Message Schema

The XML based agent-to-agent message protocol mentioned above will now be described in detail, according to one embodiment. The protocol is defined using principles of object-oriented programming, such as subclassing and inheritance, as will be apparent from the following description.

### A. Base Class: ProtocolMsg

ProtocolMsg is the base class for all agent-to-agent messages in the IM system. It defines the following attributes:
- fTraceThisMessage: If "true", and the receiving AgentServer has message tracing enabled, causes the debugger to be invoked when the message is received, and at various important stages of message processing. This allows a message to be traced from a sending Agent Server (or client) to a receiving Agent Server. May be disabled in production configurations. Default="false".
- authIdentityName: The name of the party that is authorizing this message. The general form of this name is "user@clouddnsname". The "@clouddnsname" may be omitted if the user is in the default cloud of the receiving AgentServer. A special authIdentityName "*" is defined at the Trusted Authenticationldentity; that identity is allowed unlimited access to all resources. The specified authIdentityName must have previously been authenticated on this TCP connection, and must be associated with the authCookie, if given. Note that messages sent over a connected contract do not provide authIdentityName; these messages are implicitly associated with the authIdentityName given at contract OPEN time. RESPONSE-ITEM messages do not require an authIdentityName, since they are matched with an outstanding request. For all other messages, if authIdentityName is not provided, the default (first) authenticated identity attached to the TCP connection is used.
- authCookie: This is an opaque string returned from a previous AUTHENTICATE-REQUEST on this TCP connection, which provides credentials for the specified authIdentityName. authCookie is not required if credentials can be verified in other ways (trusted connection, etc.).
- sourceAgentUri: The Agent URI of the agent sending the message. This field is not generally required, although there are a few messages that still refer to it (notably OPEN).
- sourceContractId: The local (sender-side) contract ID from which the message is originating. This field is not generally required, although there are a few messages that still refer to it (notably OPEN). This contract ID is the contract ID to which messages in the opposite direction are sent.
- destAgentUri: The Agent URI to which this message is being sent. The URI has the general form "cloud/class/name", where "cloud" is a registered DNS name owned by the operator of the service (e.g., "im.openwave.com"), "class" is an agent class (e.g., "persona", "chat, "interop", "wireless"), and "name" is the instance name of the agent. An example URI is "im.openwave.com/persona/sam". Agent URIs are case sensitive. If destAgentUri is omitted, the message is directed at the "connection agent" associated with the TCP connection.
- destContractId: The contract ID within destAgentUri to which this message is directed. This is the contract ID that was supplied by the other party when the contract was first connected. destContractId is omitted if the message is not directed at a contract.
- bodyXml: The body of the message. The interpretation of this XML fragment is defined by the particular Agent class receiving the message.

The following XML shows the format of a protocol message:

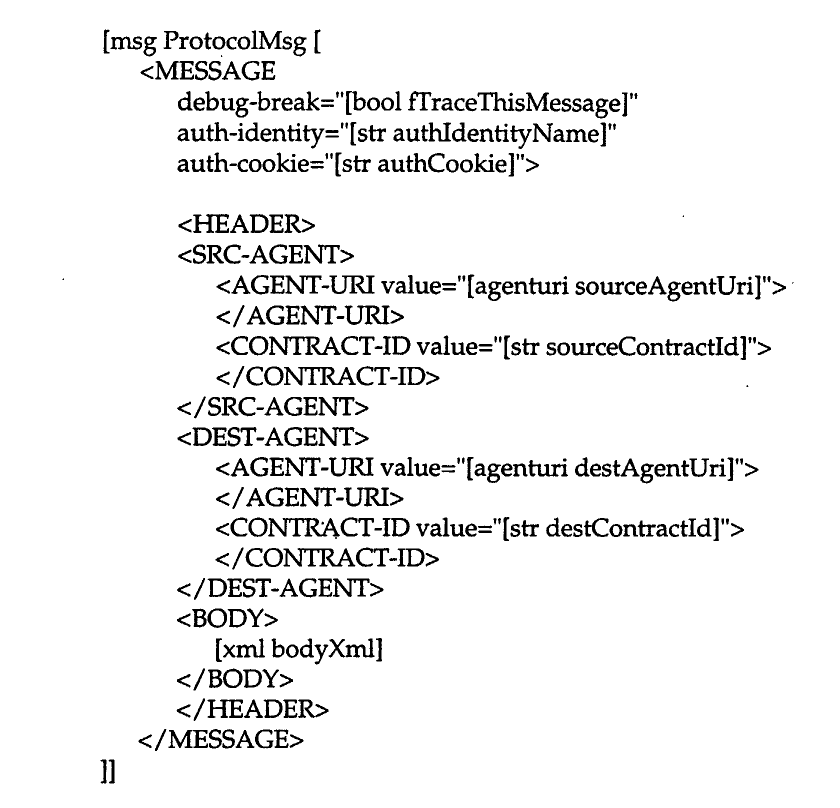

### B. Command Messages

A command message (CommandMsg) is a message that requires a response. Each pending CommandMsg on a TCP connection has a unique identifier that is used to match it with its associated response. The message transport API provides for guaranteed asynchronous completion of CommandMsg messages; if the TCP connect fails before a response is received, the CommandMsg is failed. Note that the response is always received on the same TCP connection in which the command was sent.

A CommandMsg defines the following attributes:
- requestIndex: An identifier used to match responses with associated commands. Each outstanding command is assigned a unique index. This index is given in the returned response. The index may be reused, but not until a pending command completes.
- commandXml: The body of the command. The interpretation of this XML fragment is dependent on the particular command.

The following XML shows the format of a CommandMsg:

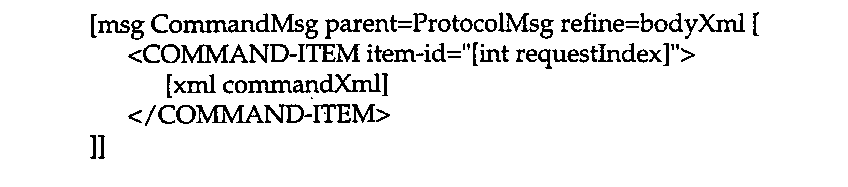

### C. Event Messages

An event message (EventMsg) is a message that does not require a response. It is sent over a TCP connection and is then forgotten; no guarantee of delivery can be made. An EventMsg defines the following attribute:
- eventXml: The body of the event message. The interpretation of this XML fragment is dependent on the particular event.

The following XML shows the format of an EventMsg:

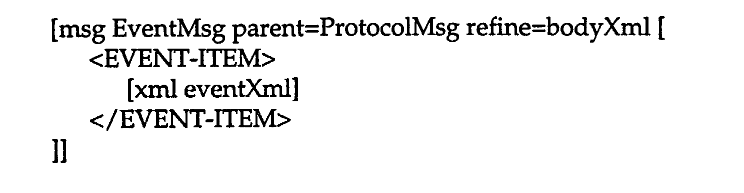

### D. Response Messages

A response message (ResponseMsg) is sent in response to a CommandMsg. It is sent over the same TCP connection on which the CommandMsg was received and is then forgotten; no guarantee of delivery can be made, although if delivery is unsuccessful, the CommandMsg will fail.
- requestIndex: The request identifier as supplied in the corresponding CommandMsg.
- responseXml: The body of the response message. The interpretation of this XML fragment is dependent on the particular response.

The following XML shows the format of a responseMsg:

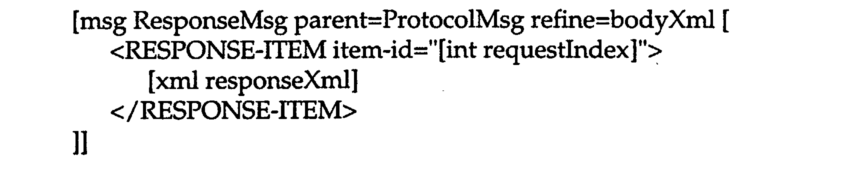

### E. Types of Command Messages

What follows are fragments of XML showing the format of various types of command messages (CommandMsg) that may be used in the IM system.

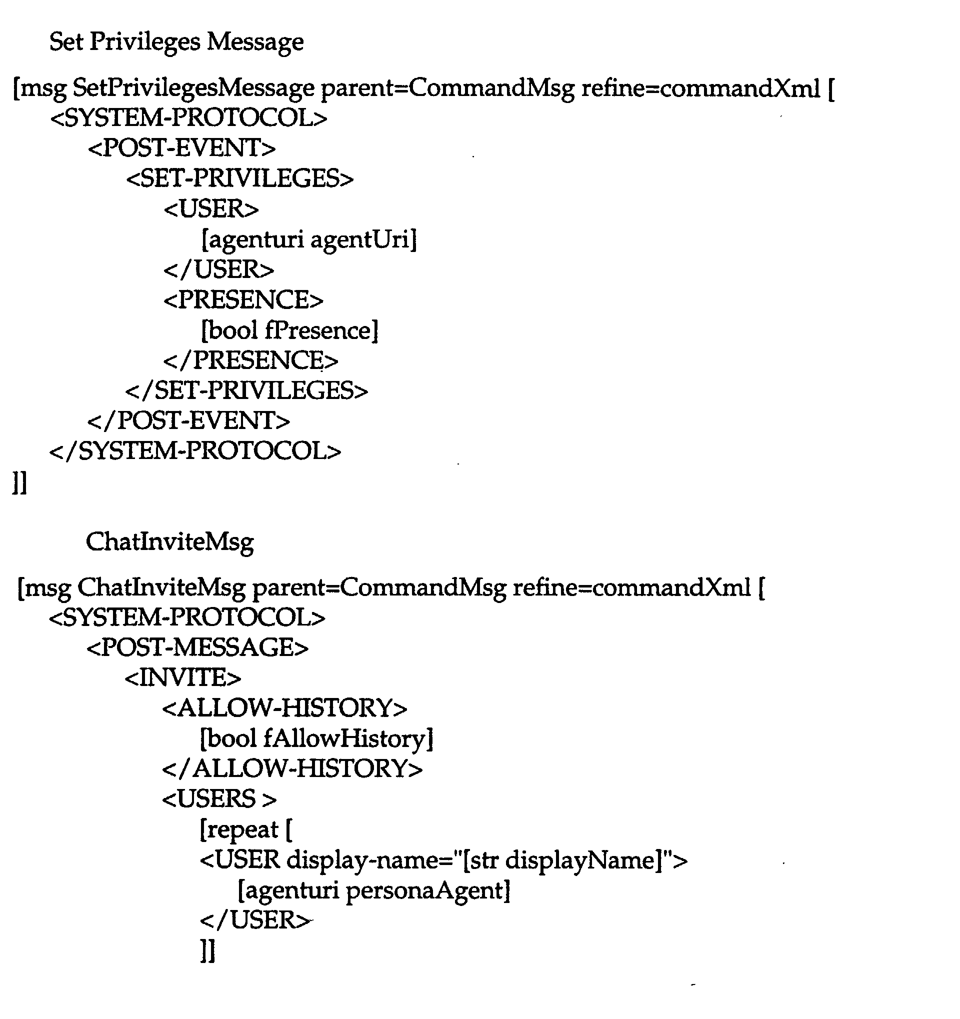

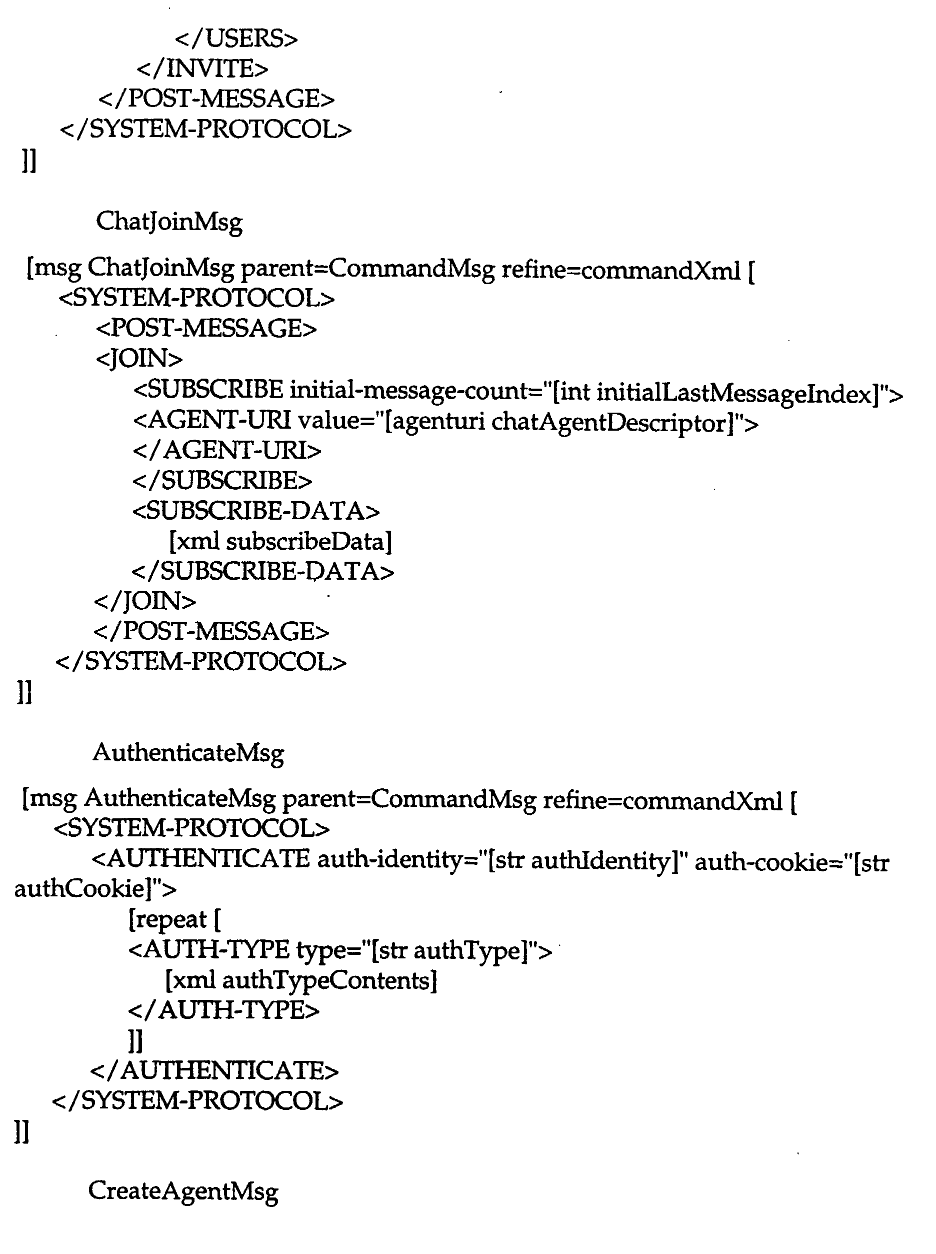

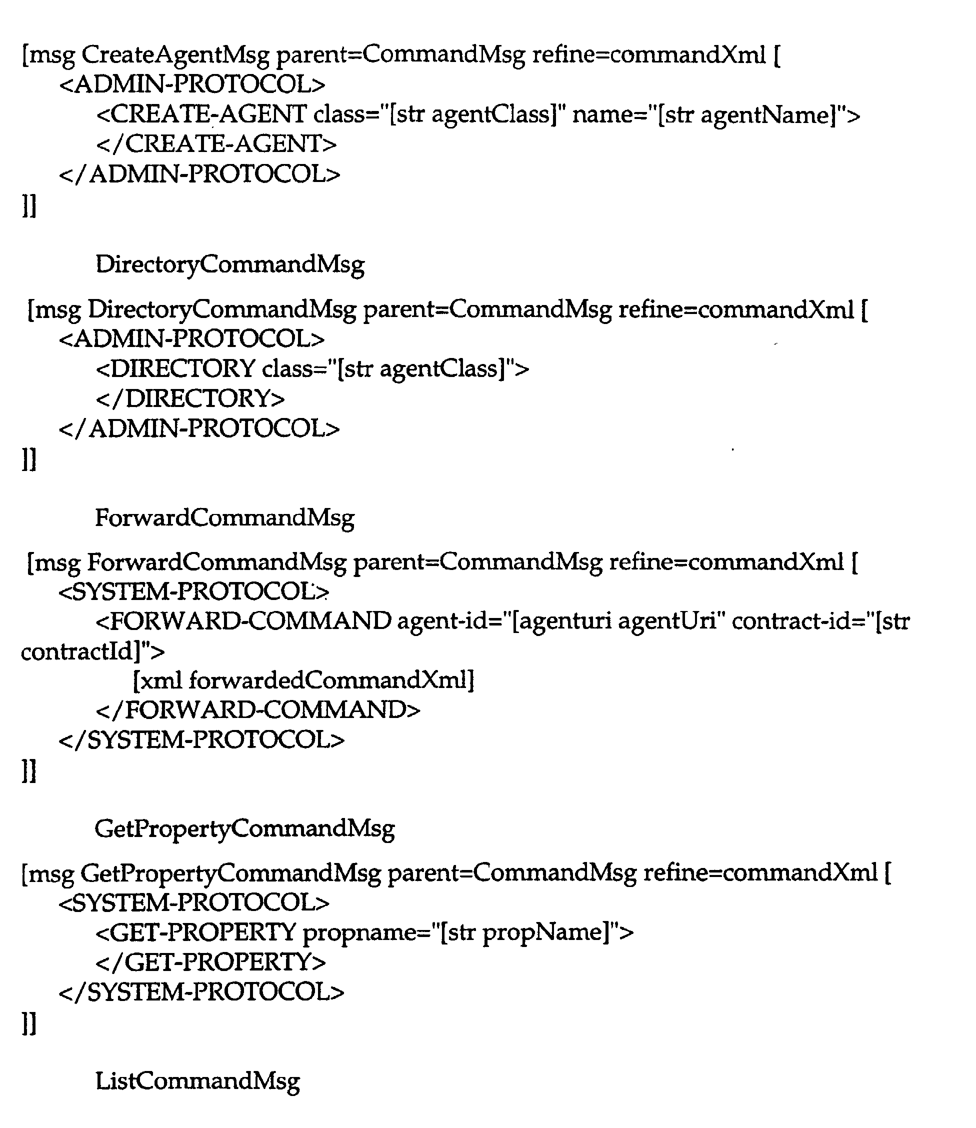

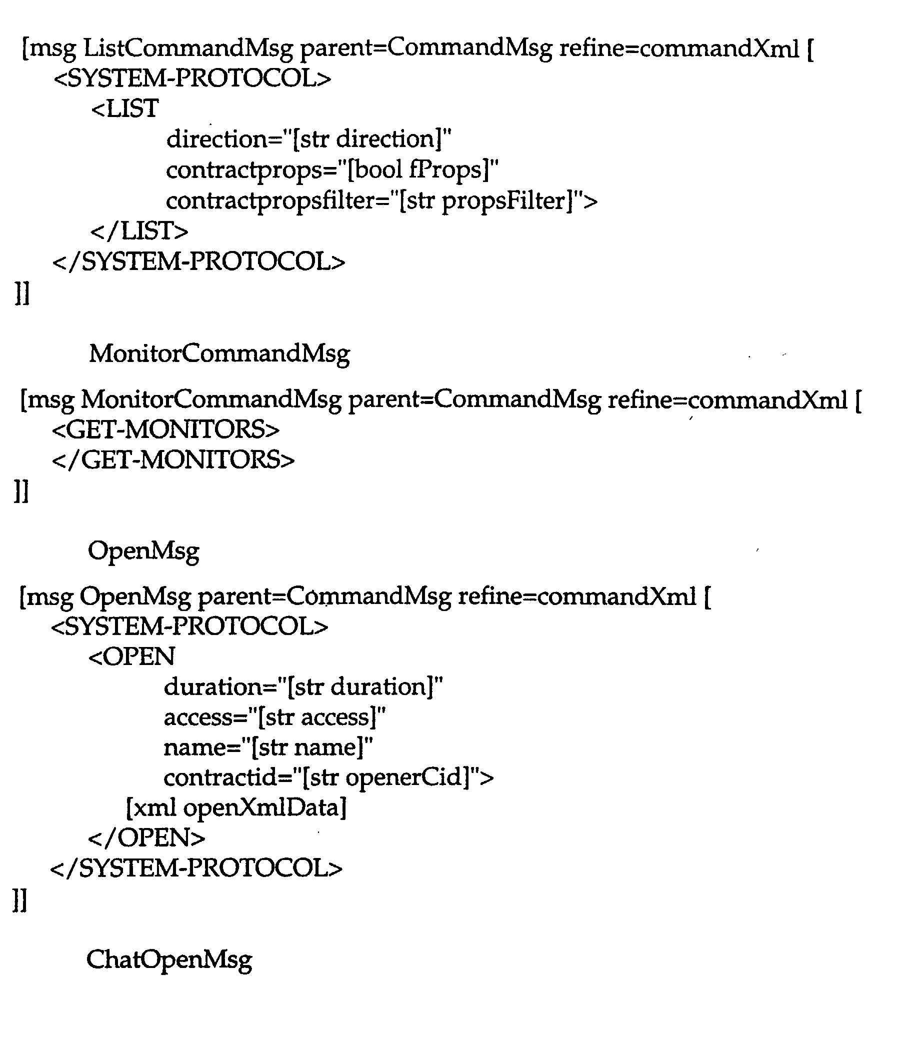

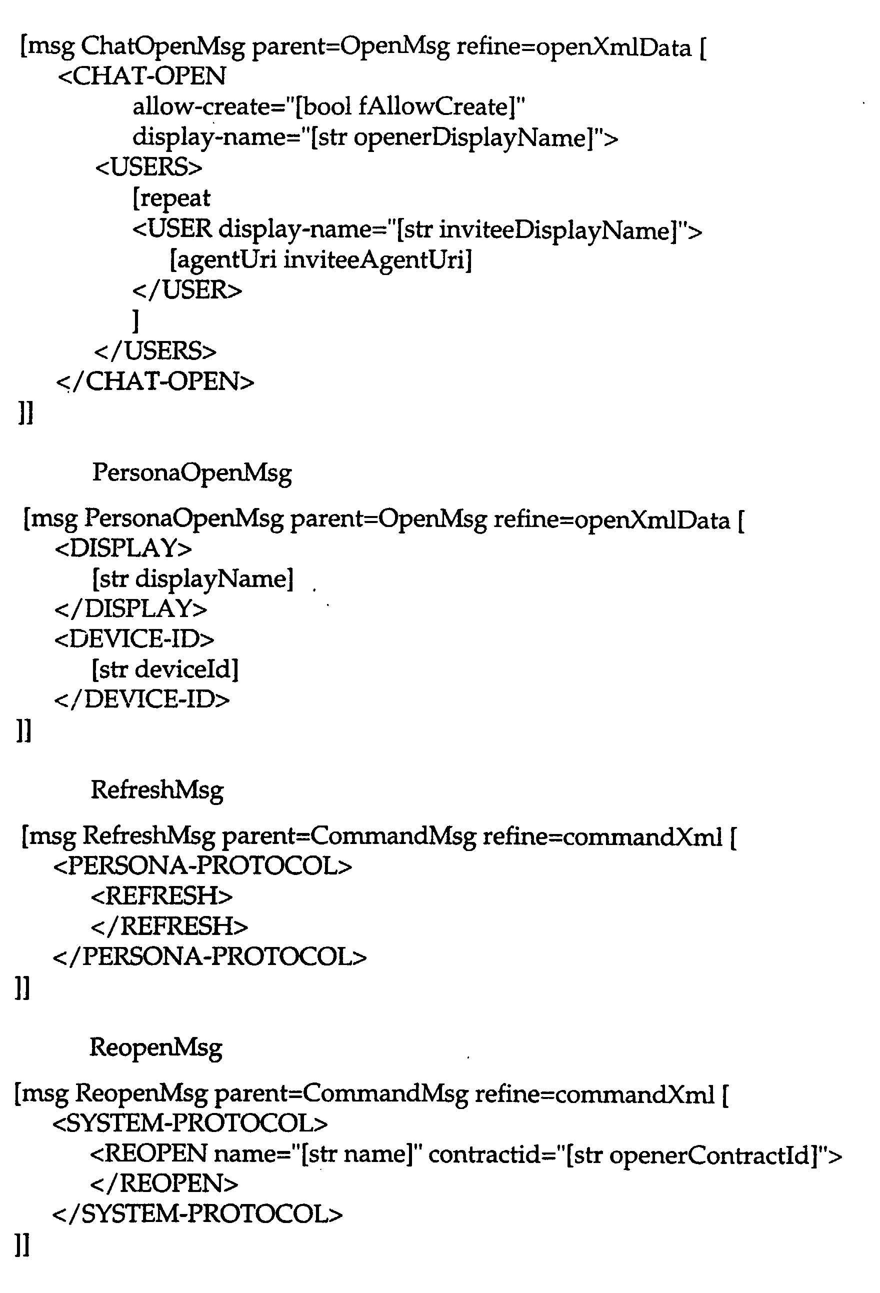

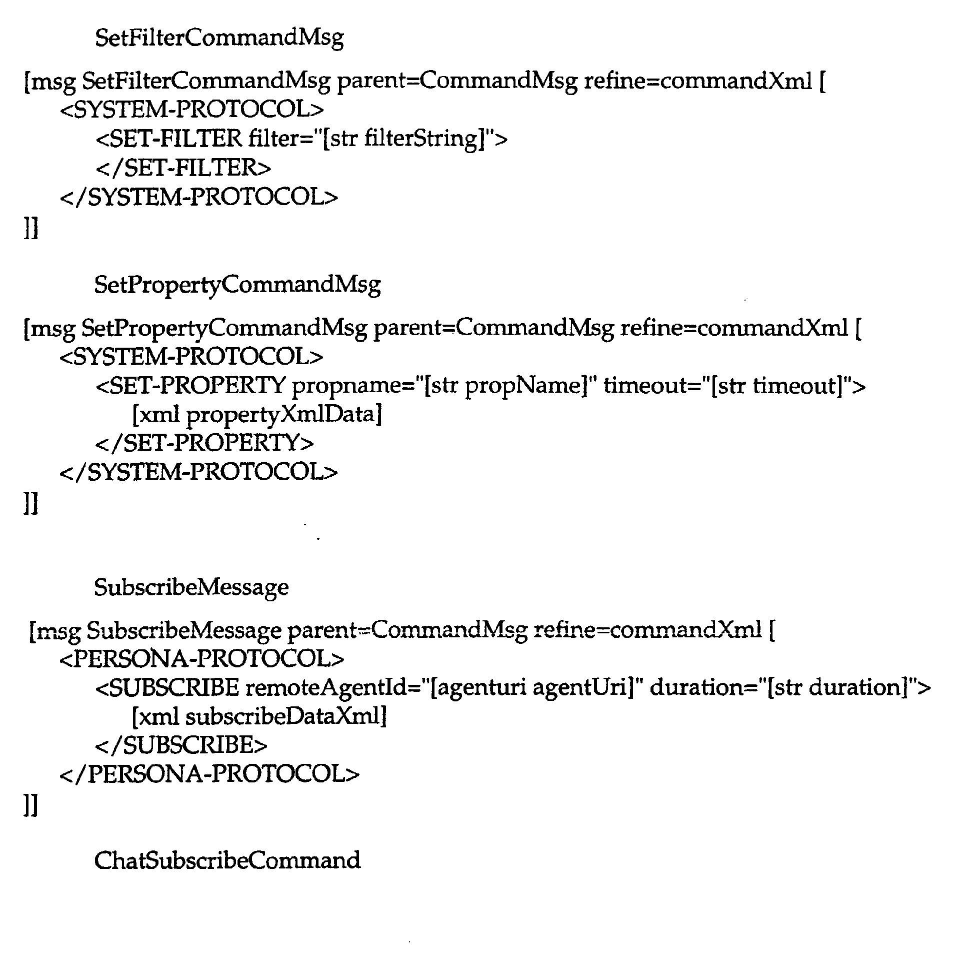

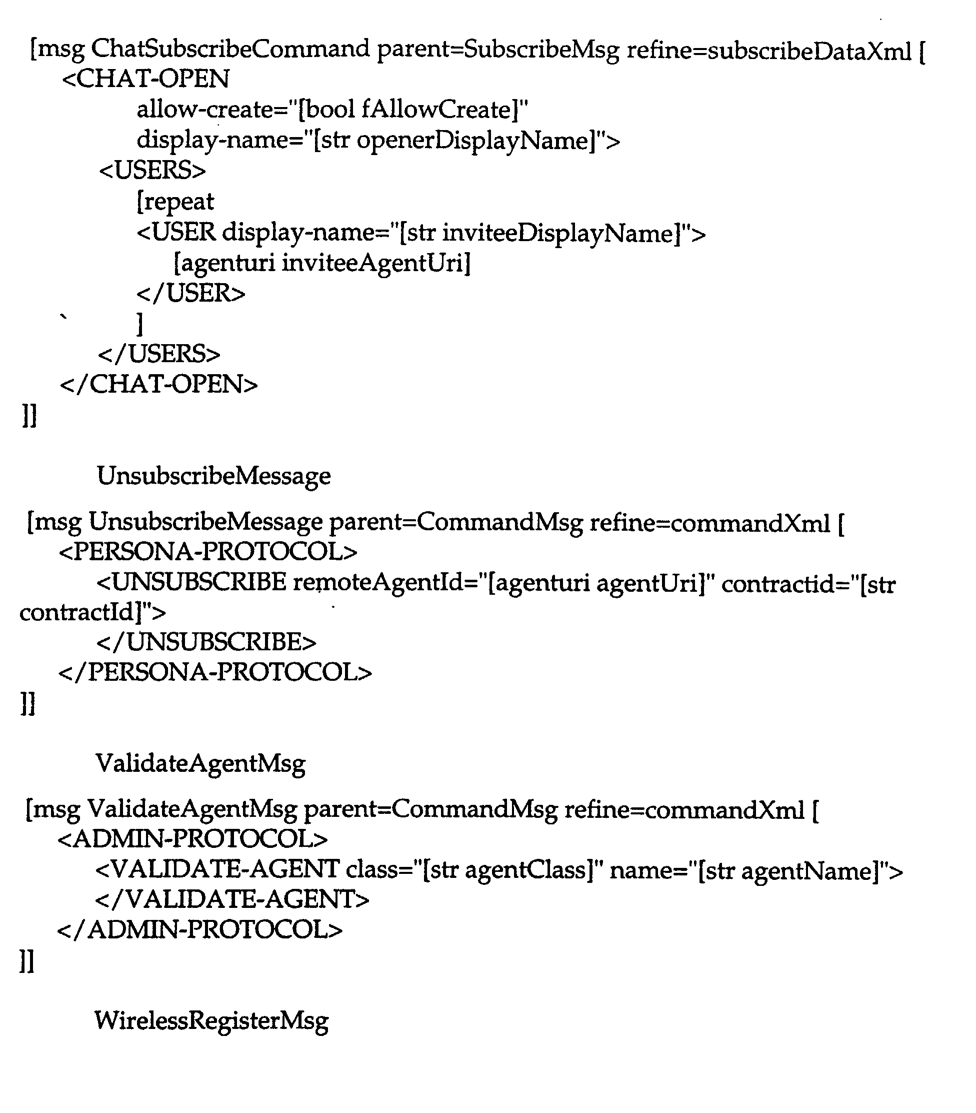

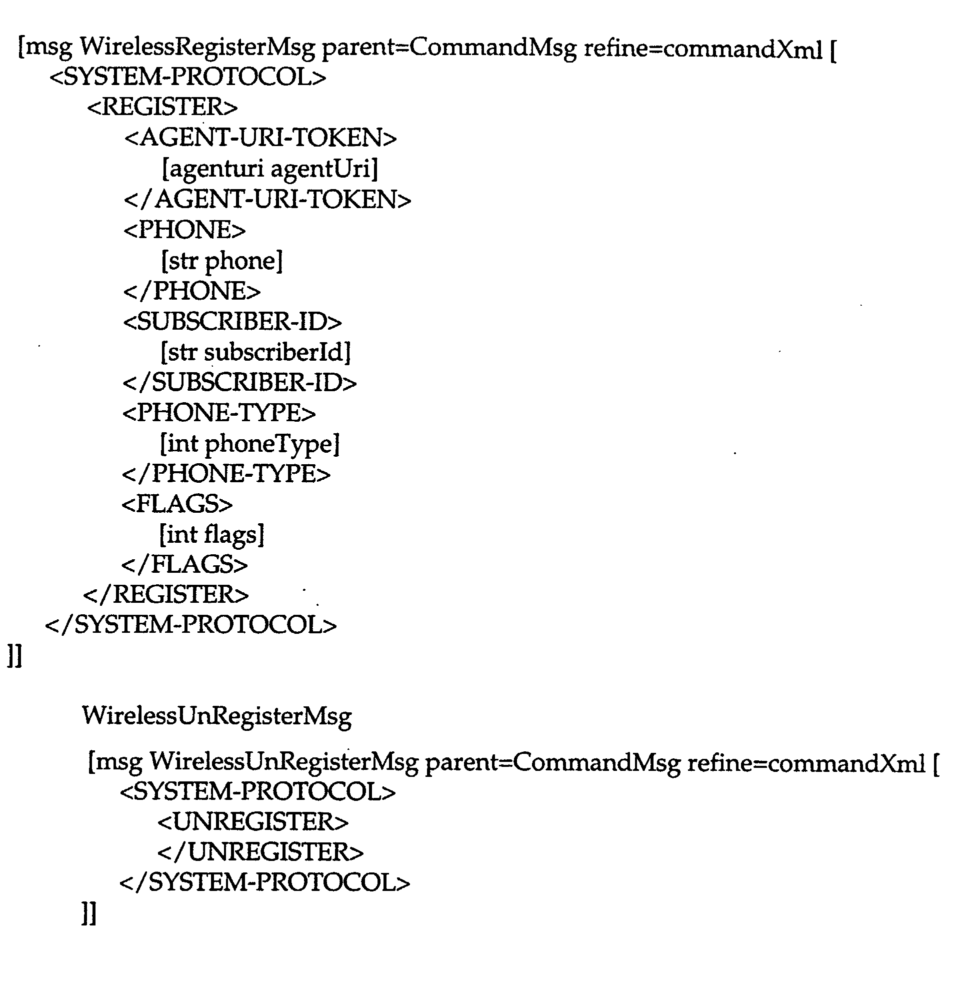

### F. Types of Event Messages

What follows are fragments of XML showing the format of various types of event messages (EventMsg) that may be used in the IM system.

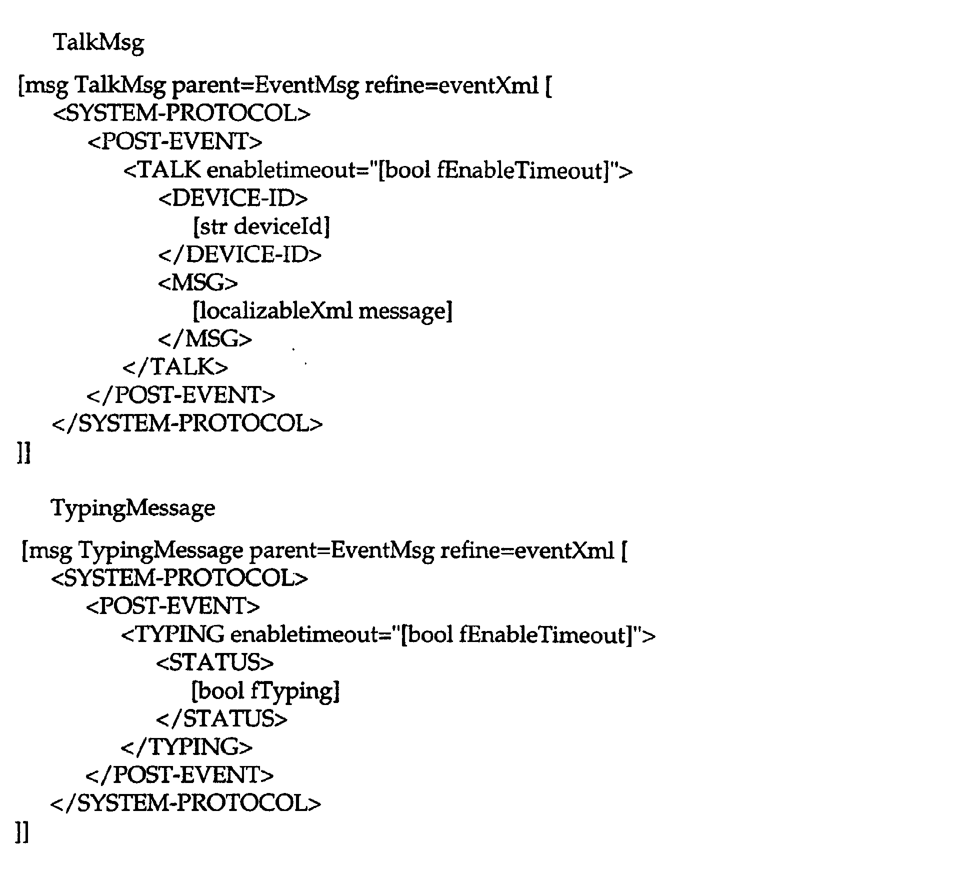

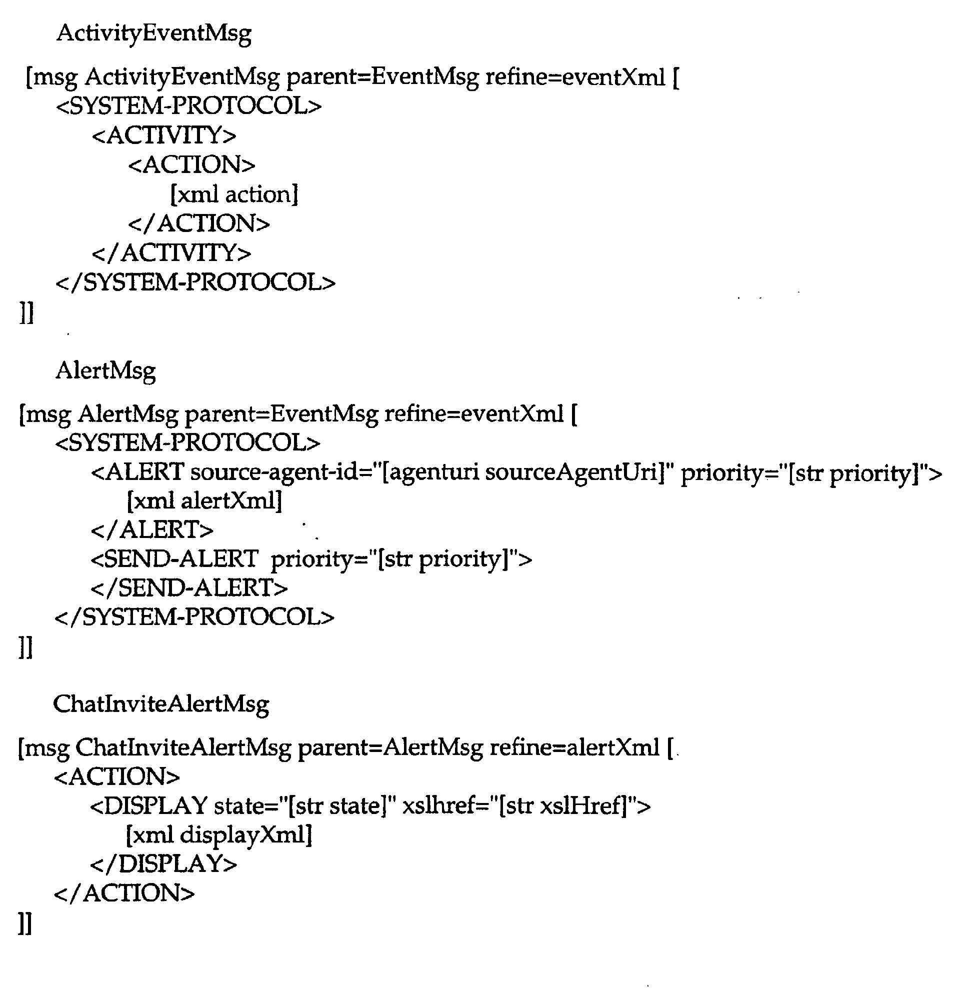

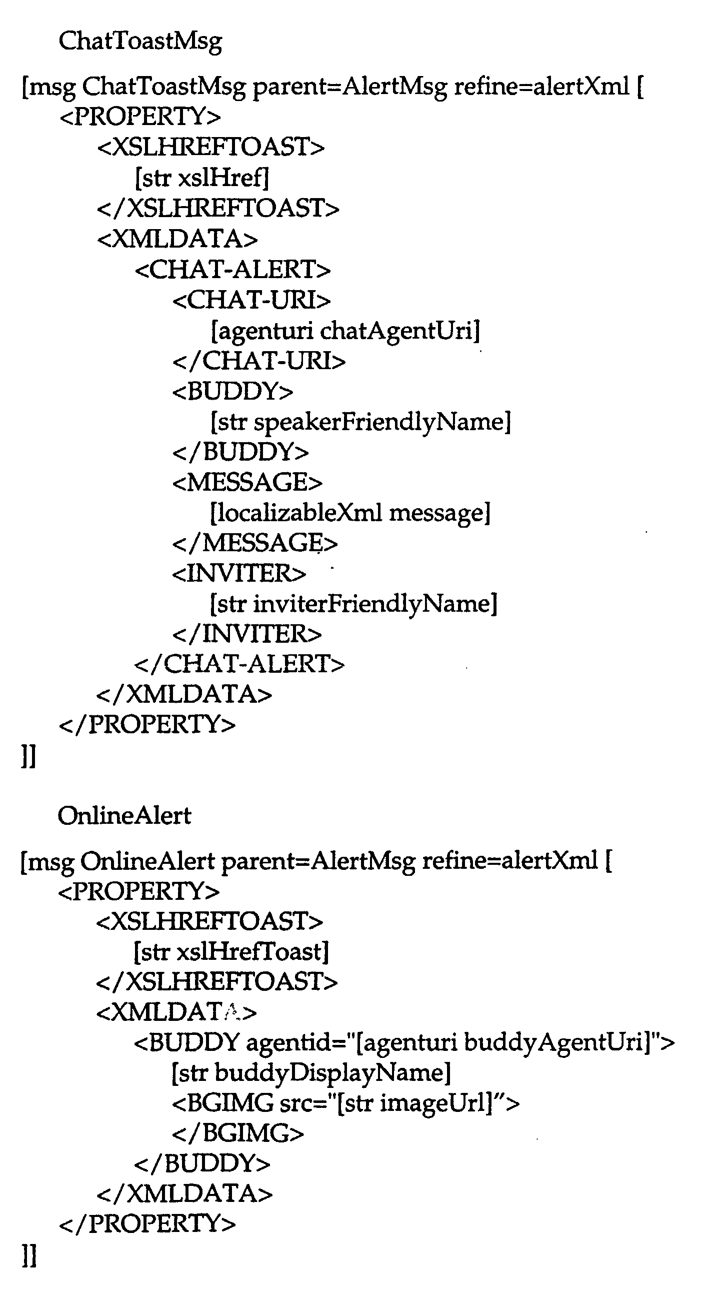

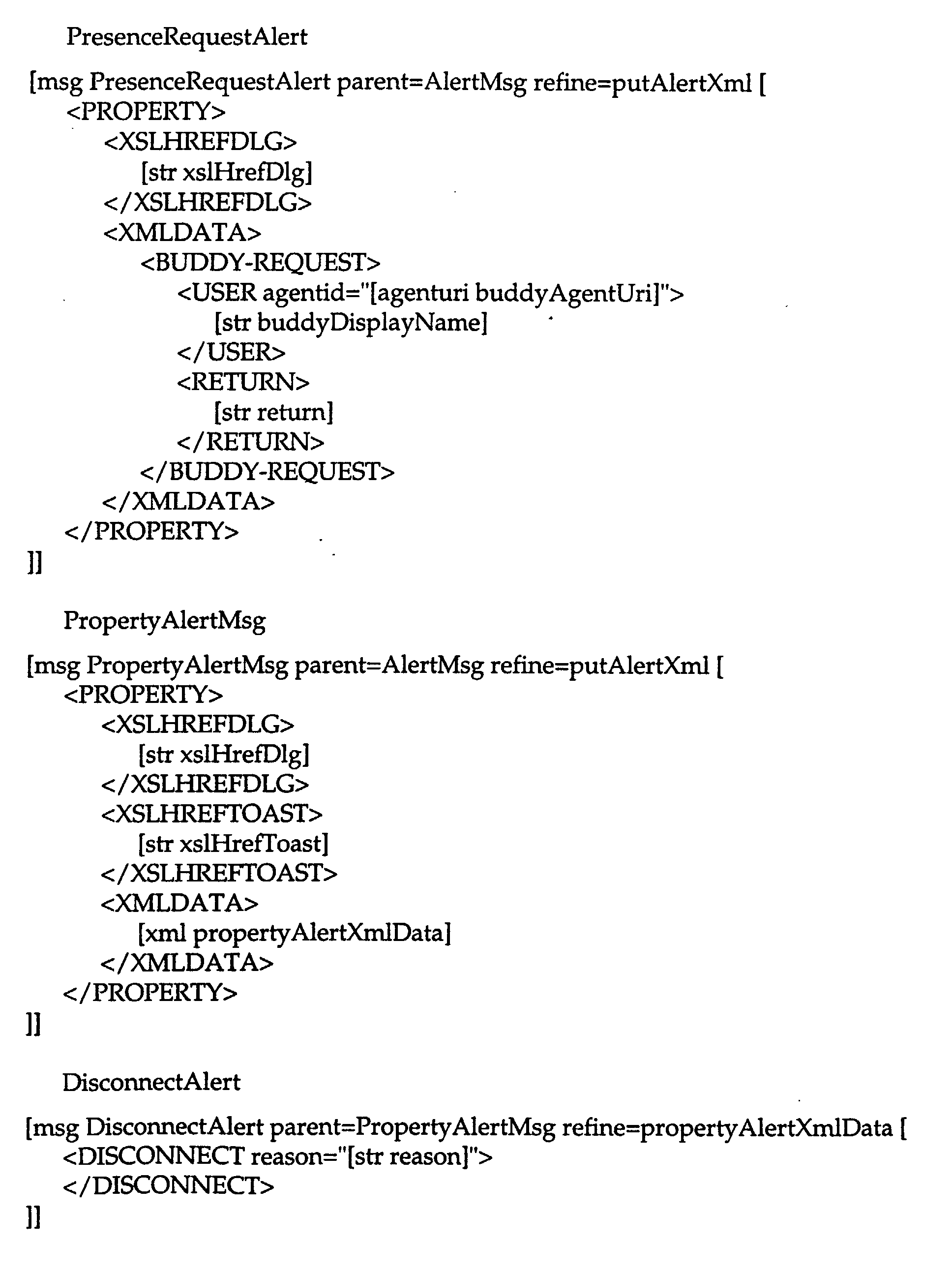

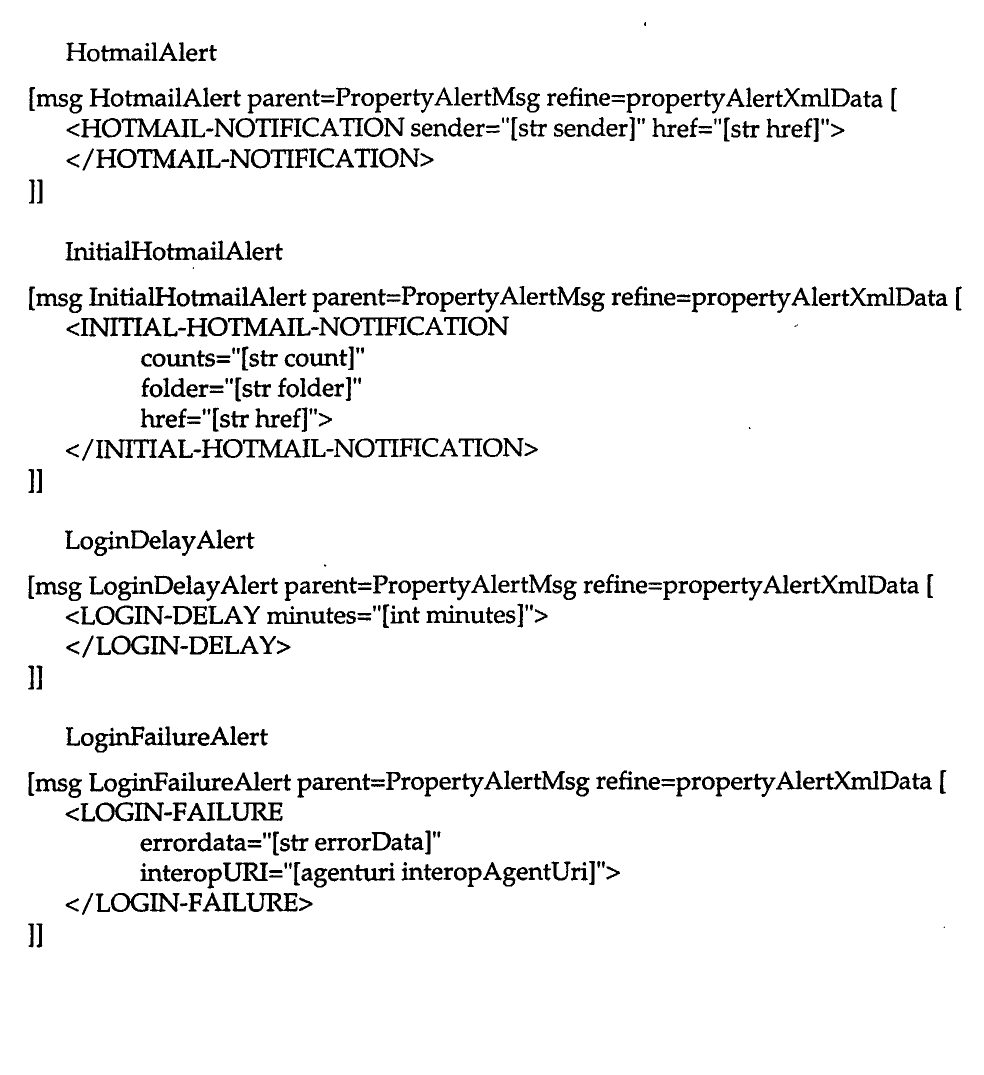

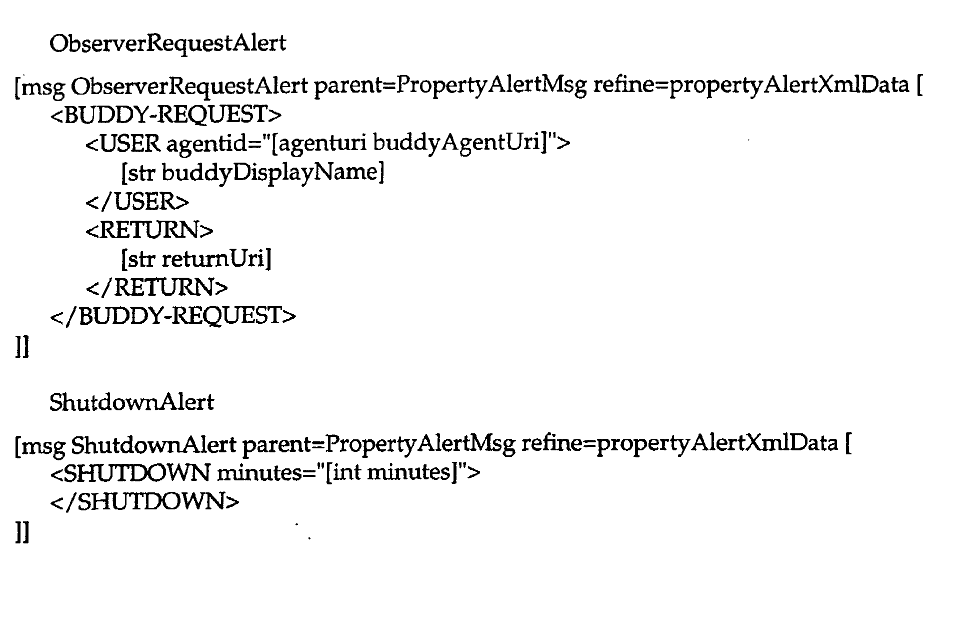

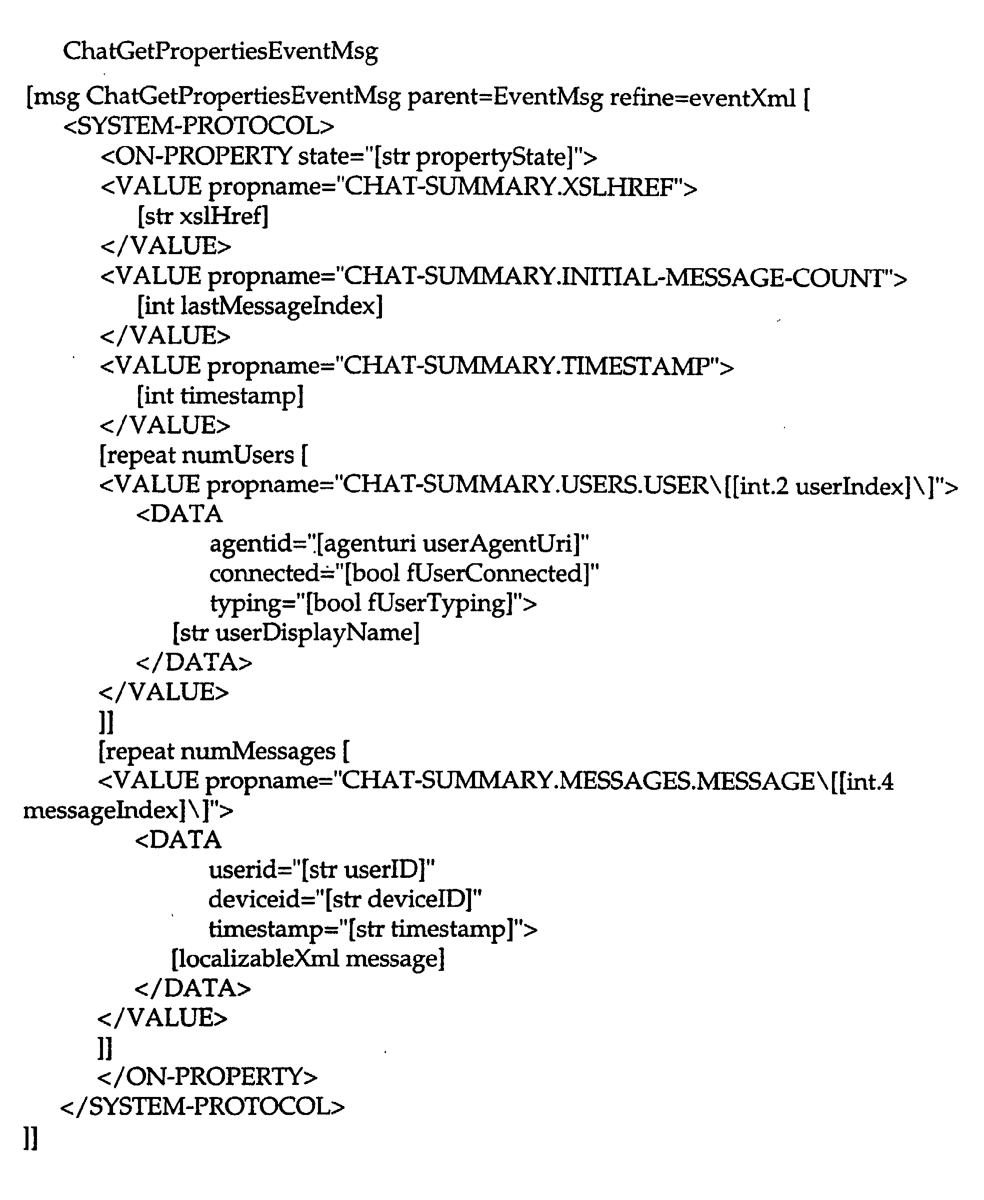

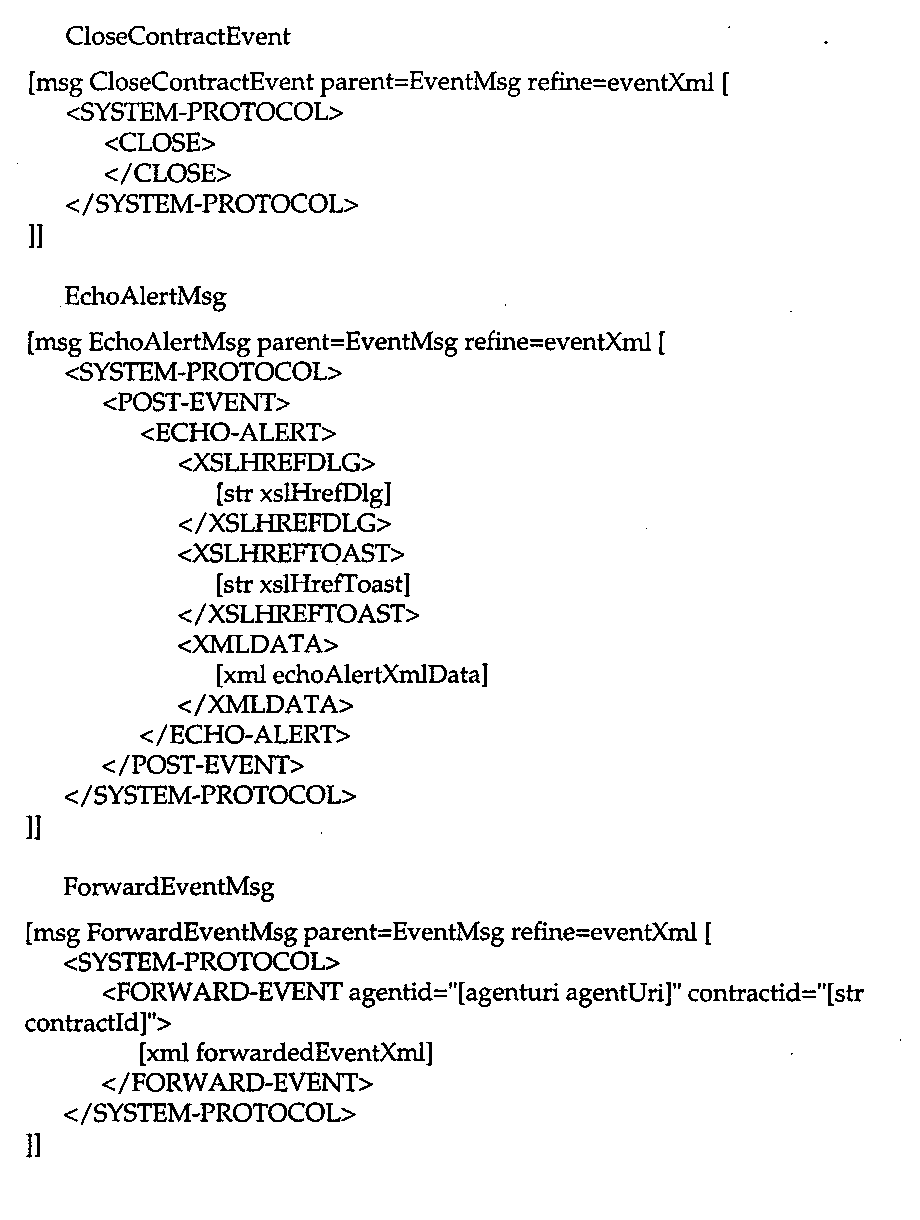

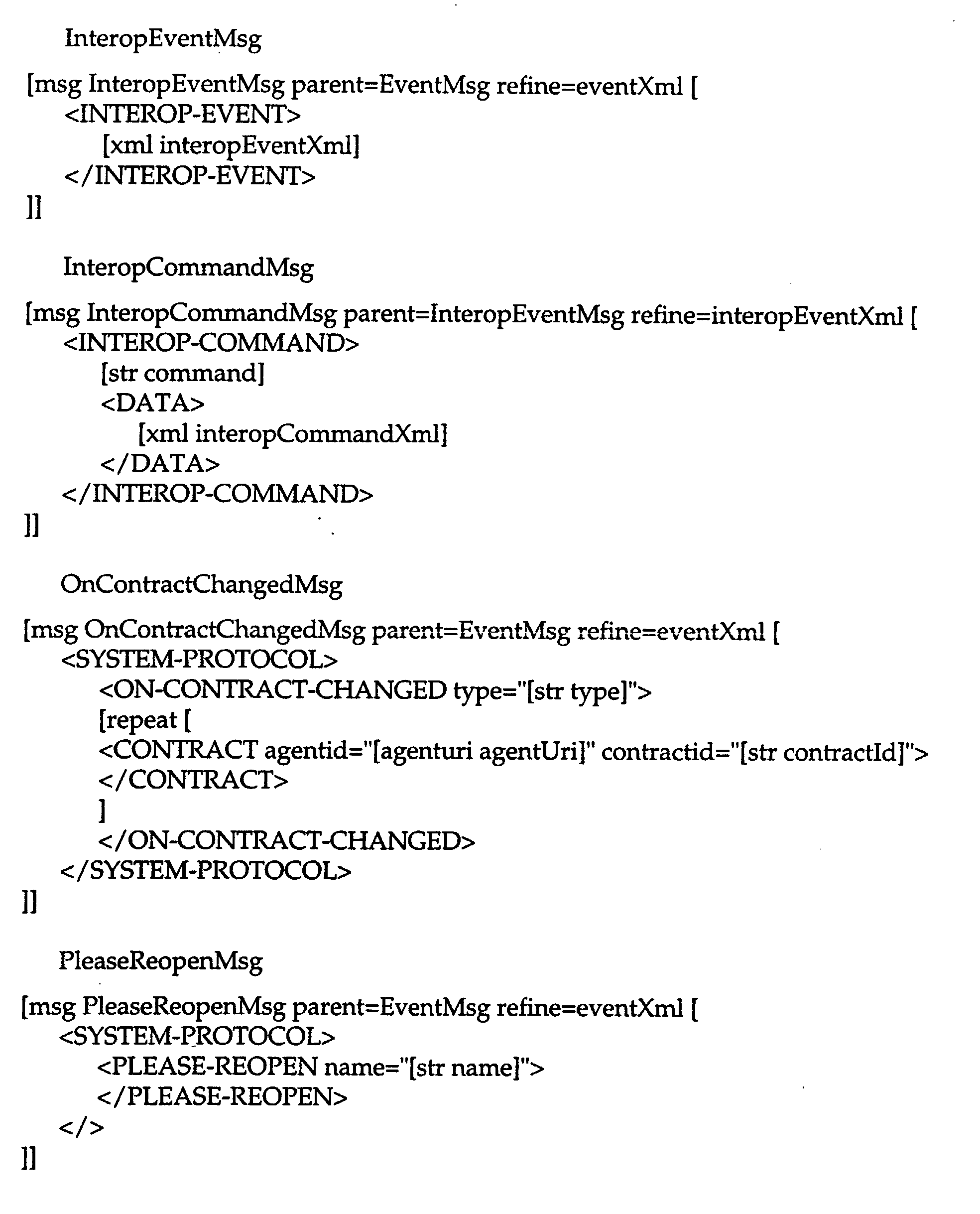

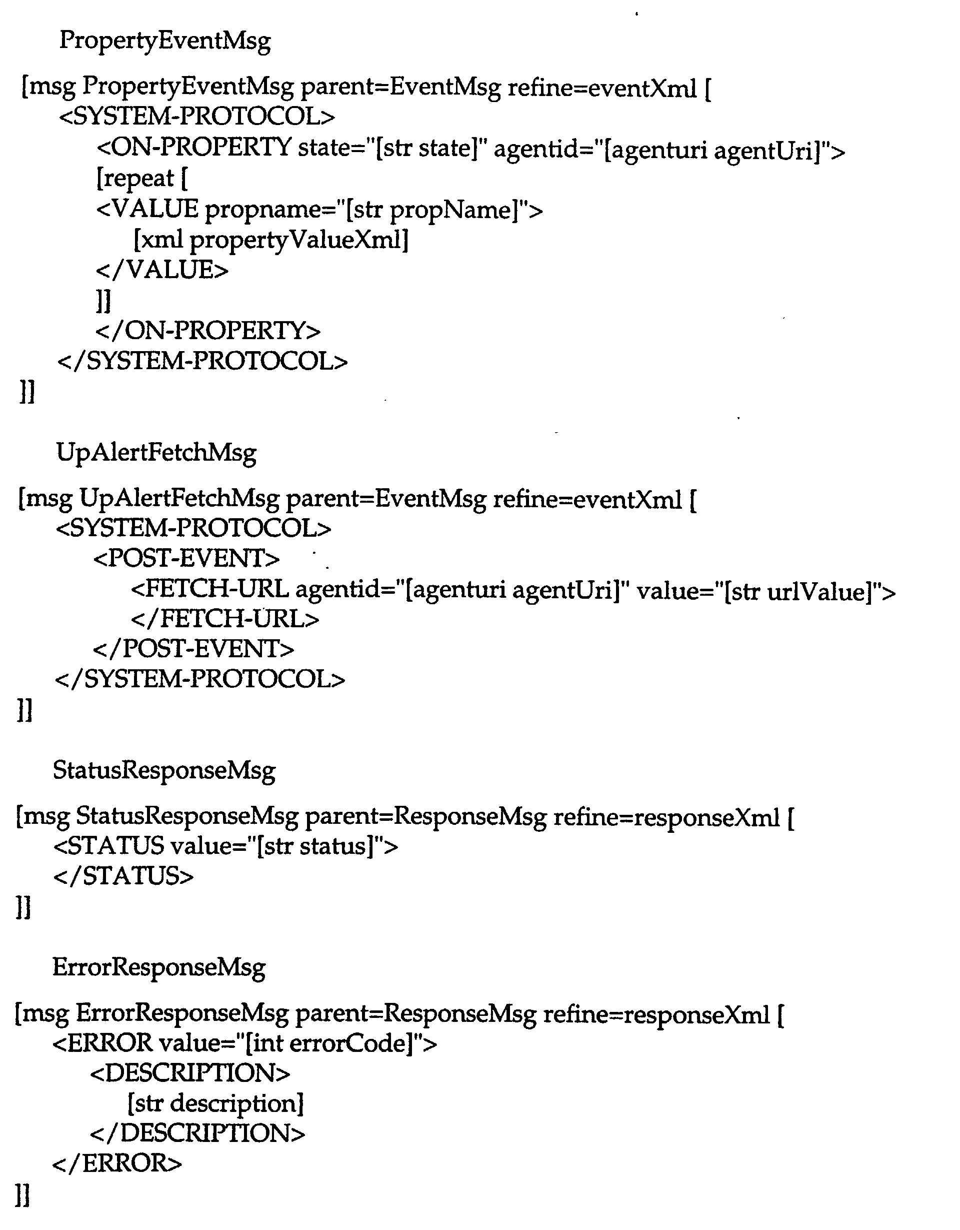

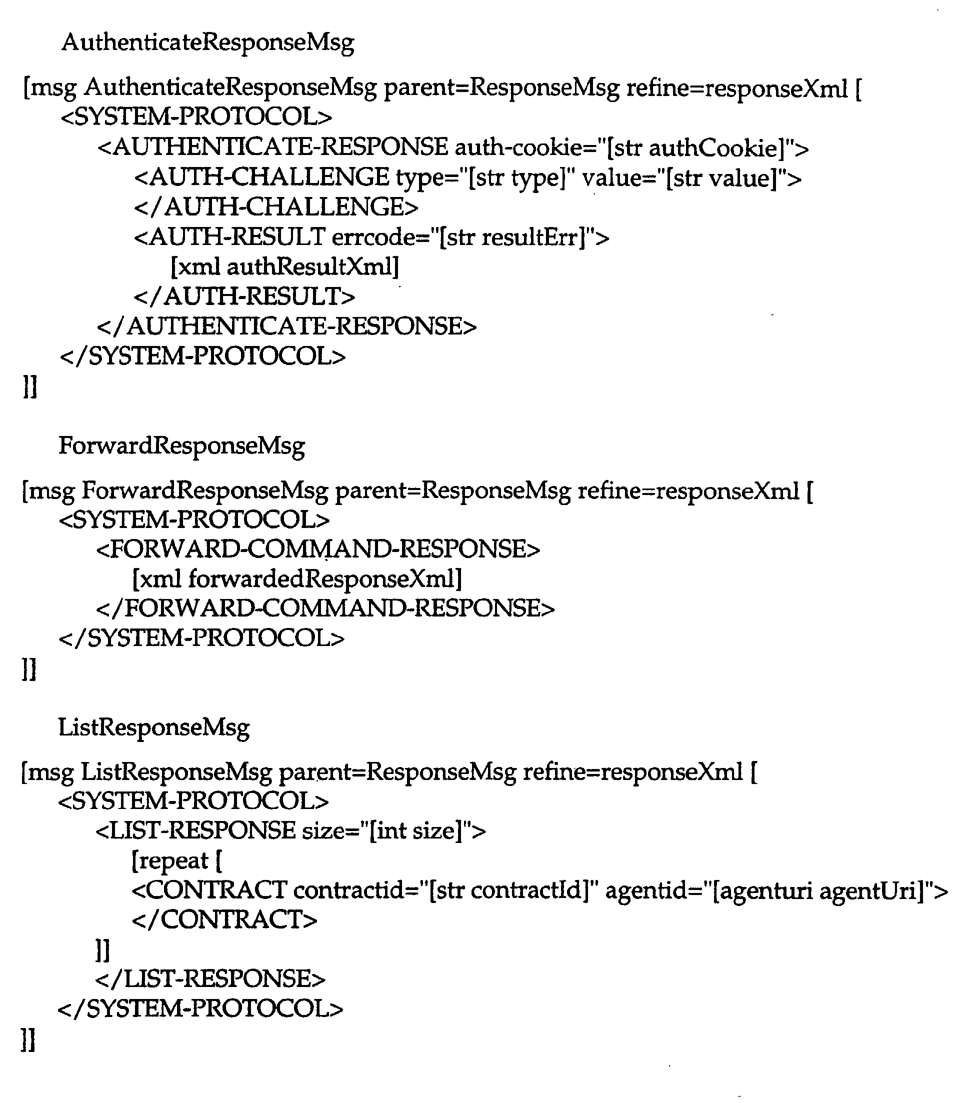

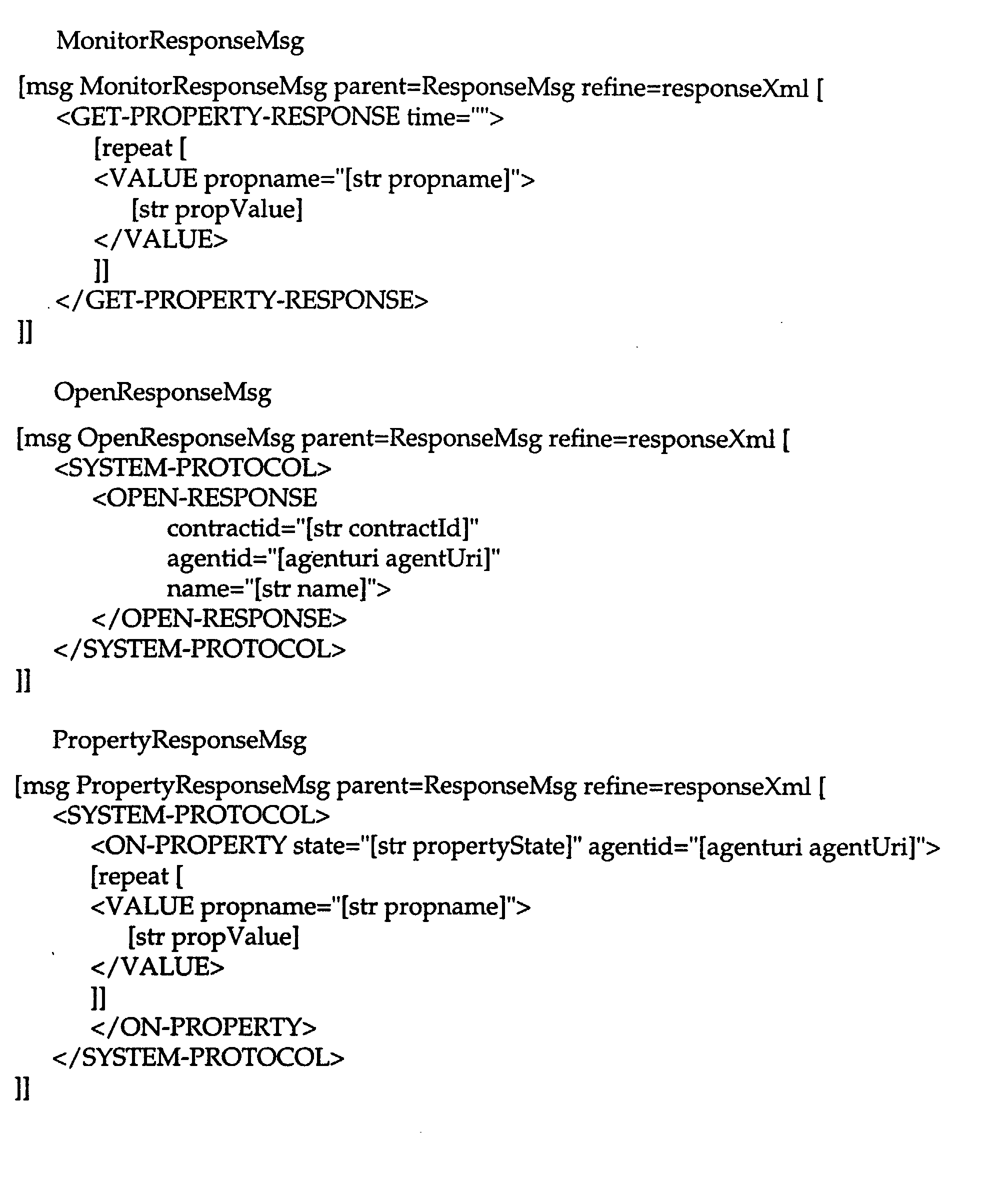

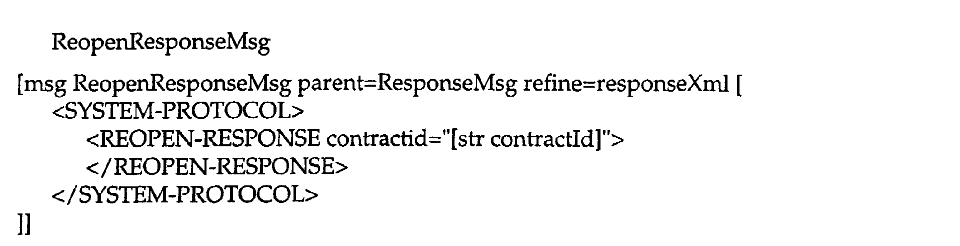

### V. IM Application XML Schema

What follows is a description of the XML application schema for the IM system, according to one embodiment. Included are definitions of the XML elements (tags) for the following classes: Persona Agent (buddy), Persona Agent (current user), Chat Agent, and Interop Agent.

### A. Persona Agent (buddy):

The class Persona Agent (buddy) is a subset of Persona Agent (current user), described below, and contains the public properties of Persona Agent (current user).

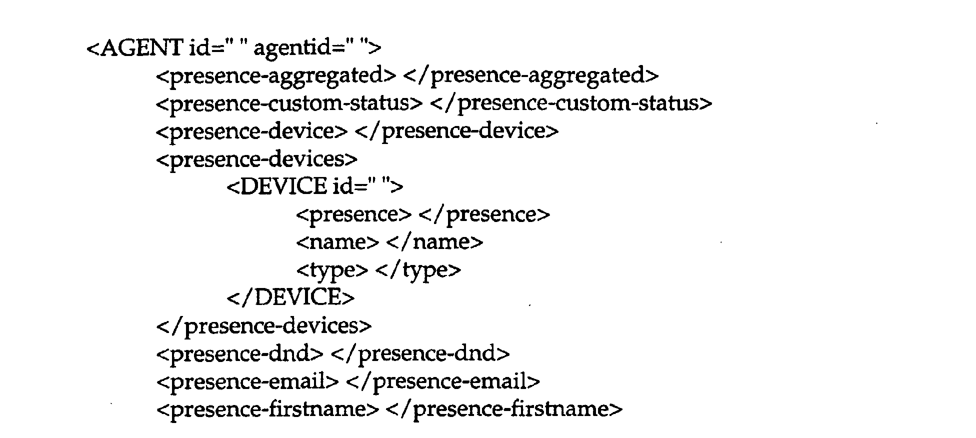

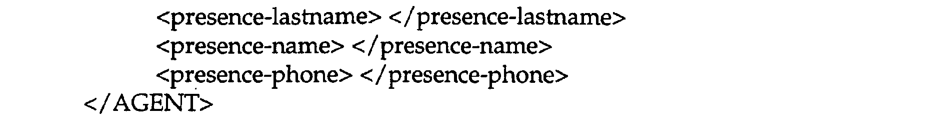

The following elements are defined for Persona Agent (buddy) (where the symbol "|" represents "or"):

| 1. < AGENT /> | |
|---|---|
| Element Path | //AGENT |
| Attributes | |
| id | UTF-8 |
| agentid | UTF-8 |
| Content Type | XML |
| Description | Generic XML container for all Agent XML data |

| 2. < presence-aggregated /> | |
|---|---|
| Element Path | //AGENT/presence-aggregated |
| Attributes | None |
| Content Type | UTF-8 String |
| Valid data | { "online" \| "offline" } |
| Description | Aggregated presence value for a persona agent. |

| 3. < presence-custom-status /> | |
|---|---|
| Element Path | //AGENT/presence-custom-status |
| Attributes | None |
| Content Type | UTF-8 String |
| Description | User defined custom status to be displayed by buddies |

| 4. < presence-device /> | |
|---|---|
| Element Path | //AGENT/presence-device |
| Attributes | None |
| Content Type | UTF-8 String |
| Valid data | { "pc" \| "phone" } |
| Description | Most recently used device type. |

| 5. < DEVICE /> | |
|---|---|
| Element Path | //AGENT/DEVICE |
| Attributes | |
| Id | UTF-8 |
| Content Type | XML |
| Description | Device level property for pc or phone client |

| 6. < name /> | |
|---|---|
| Element Path | //AGENT/DEVICE/name |
| Attributes | None |
| Content Type | UTF-8 String |
| Valid data | { "Windows Client" \| Empty } |
| Description | Internal name of device. Not visible to user. |

| 7. < presence /> | |
|---|---|
| Element Path | //AGENT/DEVICE/presence |
| Attributes | None |
| Content Type | UTF-8 String |
| Valid data | { "online" \| "offline" \| "idle" } |
| Description | Device level presence used to determine proper routing of messages and display state. |

| 8. < type /> | |
|---|---|
| Element Path | //AGENT/DEVICE/type |
| Attributes | None |
| Content Type | UTF-8 String |
| Valid data | { "pc" \| "wap" \| "sms" } |
| Description | Technical device type. Used by applications to determine behavior characteristics when interacting with user on a given device. |

| 9. < presence-dnd /> | |
|---|---|
| Element Path | //AGENT/presence-dnd |
| Attributes | None |
| Content Type | UTF-8 String |
| Valid data | { "true" \| "false" } |
| Description | User's global "Do Not Disturb" setting. Causes user to appear offline. |

| 10. < presence-firstname /> | |
|---|---|
| Element Path | //AGENT/presence-firstname |
| Attributes | None |
| Content Type | UTF-8 String |
| Description | Registered user's given name. |

| 11. < presence-lastname /> | |
|---|---|
| Element Path | //AGENT/presence-lastname |
| Attributes | None |
| Content Type | UTF-8 String |
| Description | Registered user's surname name. |

| 12. < presence-name /> | |
|---|---|
| Element Path | //AGENT/presence-name |
| Attributes | None |
| Content Type | UTF-8 String |
| Description | User defined display name. This name will be shown to all buddies. |

| 13. < presence-status /> | |
|---|---|
| Element Path | //AGENT/presence-status |
| Attributes | None |
| Content Type | UTF-8 String |
| Description | User defined status string. This may be "Online", "Away", "Busy", or a custom entered status string such as "Away at Comdex". |

### B. Persona Agent ( current user ):

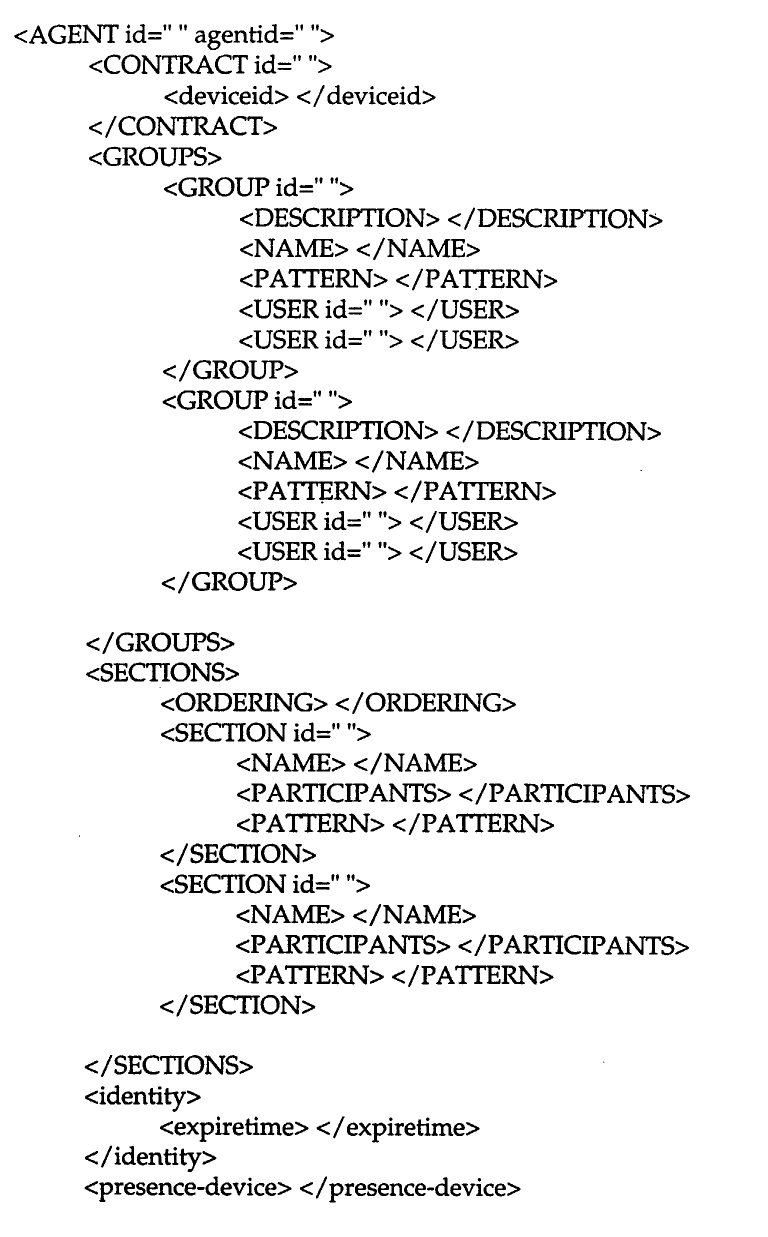

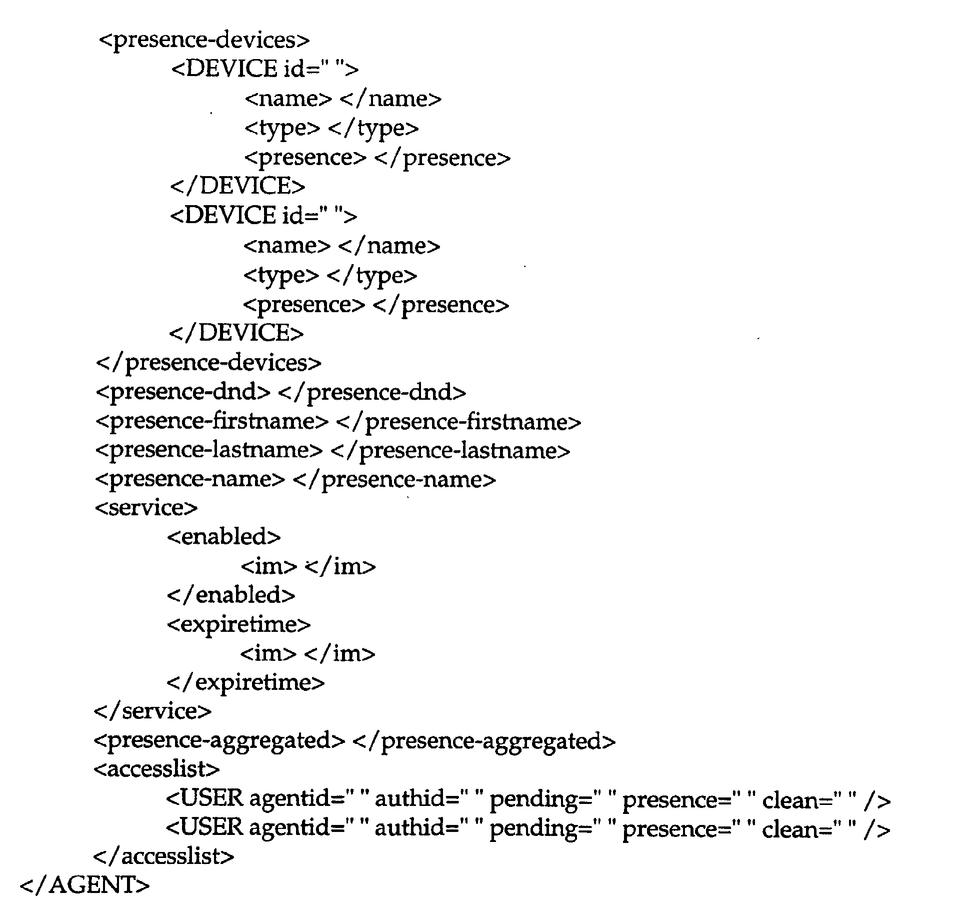

The following elements are defined for Persona Agent (current user) (where the symbol " |" represents "or"):

| 1. < CONTRACT /> | |
|---|---|
| Element Path | //AGENT/CONTRACT |
| Attributes | |
| Id | UTF-8 |
| Content Type | XML |
| Description | Container holding individual contract id element tags. |

| 2. < deviceid /> | |
|---|---|
| Element Path | //AGENT/CONTRACT/deviceid |
| Attributes | None |
| Content Type | UTF-8 String |
| Description | The deviceid for the Parent element's specified Contract. |

| 3. < GROUPS /> | |
|---|---|
| Element Path | //AGENT/GROUPS |
| Attributes | None |
| Content Type | XML |
| Description | Container holding current users list of buddy groups. Each Group contains a list of users who can be invited to a given chat. |

| 4. < GROUP /> | |
|---|---|
| Element Path | //AGENT/GROUPS/GROUP |
| Attributes | |
| Id | UTF-8 |
| Content Type | XML |
| Description | Container holding a given group's information. This includes a description, group title, and list of users to be invited to a chat. |

| 5. < DESCRIPTION /> | |
|---|---|
| Element Path | //AGENT/GROUPS/GROUP/DESCRIPTION |
| Attributes | None |
| Content Type | UTF-8 String |
| Description | Description of the chat group. Visible via tool tip only. |

| 6. < NAME /> | |
|---|---|
| Element Path | //AGENT/GROUPS/GROUP/NAME |
| Attributes | None |
| Content Type | UTF-8 String |
| Description | Display name of the chat group. |

| 7.< PATTERN /> | |
|---|---|
| Element Path | //AGENT/GROUPS/GROUP/PATTERN |
| Attributes | None |
| Content Type | UTF-8 String |
| Description | An internal field formatted as a regex used to match user agentid's for participating group members. |

| 8. < USER /> | |
|---|---|
| Element Path | //AGENT/GROUPS/GROUP/USER |
| Attributes | |
| id | UTF-8 |
| Content Type | UTF-8 String |
| Description | An explictly included group member. The id is the agentid; the actual contents of the element are ALSO the agentid. |

| 9. < SECTIONS /> | |
|---|---|
| Element Path | //AGENT/SECTIONS |
| Attributes | None |
| Content Type | XML |
| Description | Container holding current users list of buddy sections. Each Section contains a list of users. |

| 10. < ORDERING /> | |
|---|---|
| Element Path | //AGENT/SECTIONS/ORDERING |
| Attributes | None |
| Content Type | UTF-8 String |
| Description | This element holds a list of the section id's; representing the display order for the sections on the client. |

| 11. < SECTION /> | |
|---|---|
| Element Path | //AGENT/SECTIONS/SECTION |
| Attributes | |
| id | UTF-8 |
| Content Type | XML |
| Description | Container holding a given section's information. This includes a section name, and list of users to be displayed together in this section. |

| 12. < NAME /> | |
|---|---|
| Element Path | //AGENT/SECTIONS/SECTION/NAME |
| Attributes | None |
| Content Type | UTF-8 String |
| Description | The display name of the section. |

| 13. < PARTICIPANTS /> | |
|---|---|
| Element Path | / /AGENT/SECTIONS/SECTION/PARTICIPANTS |
| Attributes | None |
| Content Type | Integer |
| Description | Internally used integer value for number of members in this section. |

| 14. < PATTERN /> | |
|---|---|
| Element Path | //AGENT/SECTIONS/SECTION/PATTERN |
| Attributes | None |
| Content Type | UTF-8 String |
| Description | Internally used regular expression for matching members of the section. |

| 15. < identity /> | |
|---|---|
| Element Path | //AGENT/identity |
| Attributes | None |
| Content Type | XML |
| Description | None. |

| 16. < expiretime /> | |
|---|---|
| Element Path | //AGENT/identity/expiretime |
| Attributes | None |
| Content Type | UTF-8 String |
| Description | None. |

| 17. < service /> | |
|---|---|
| Element Path | //AGENT/service |
| Attributes | None |
| Content Type | XML |
| Description | None. |

| 18. < enabled /> | |
|---|---|
| Element Path | //AGENT/service/enabled |
| Attributes | None |
| Content Type | XML |
| Description | None. |

| 19. <im/> | |
|---|---|
| Element Path | //AGENT/service/enabled/im |
| Attributes | None |
| Content Type | UTF-8 String |
| Description | None. |

| 20. < expiretime /> | |
|---|---|
| Element Path | //AGENT/service/expiretime |
| Attributes | None |
| Content Type | XML |
| Description | None. |

| 21. <im/> | |
|---|---|
| Element Path | //AGENT/service/expiretime/im |
| Attributes | None |
| Content Type | UTF-8 String |
| Description | None. |

| 22. < accesslist /> | |
|---|---|
| Element Path | //AGENT/accesslist |
| Attributes | None |
| Content Type | XML |
| Description | Container holding the list of user's and their respective privileges to view the current user's presence state. |

| 23. < USER /> | |
|---|---|
| Element Path | //AGENT/accesslist/USER |
| Attributes | |
| agentid | UTF-8 |
| authid | UTF-8 |
| pending | UTF-8 |
| presence | UTF-8 |
| clean | UTF-8 |
| Content Type | Empty |
| Description | Each element represents a given user who may have added the current user as a buddy; or the current user may have added as a buddy |

### C. Interop Agent:

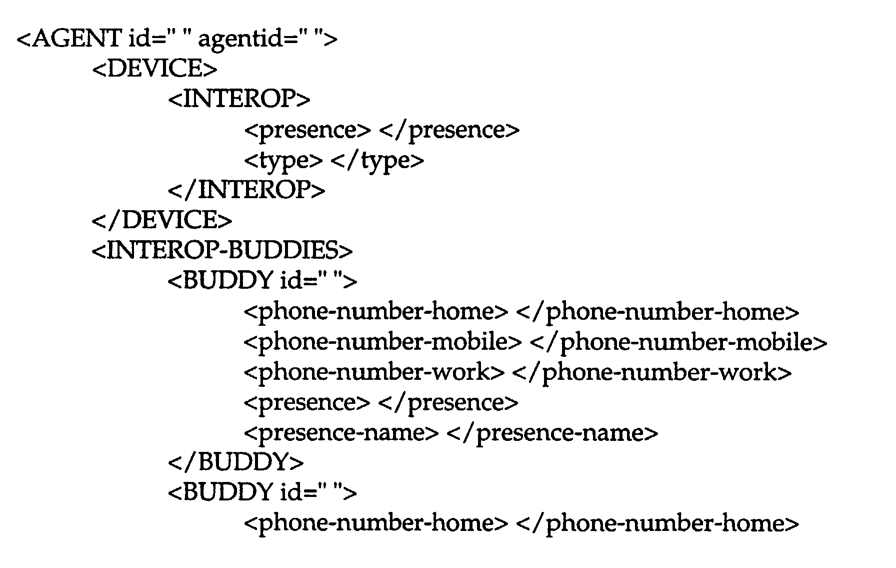

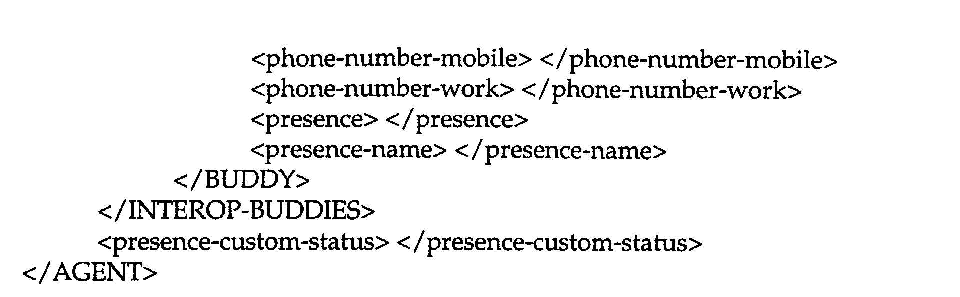

The following elements are defined for the class Interop Agent (where the symbol "|" represents "or"):

| 1. < AGENT /> | |
|---|---|
| Element Path | //AGENT |
| Attributes | |
| id | UTF-8 |
| agentid | UTF-8 |
| Content Type | XML |
| Description | XML container for all Interop agent XML data |

| 2. < DEVICE /> | |
|---|---|
| Element Path | //AGENT/DEVICE |
| Attributes | None |
| Content Type | XML |
| Description | XML container for device properties. |

| 3. < INTEROP /> | |
|---|---|
| Element Path | //AGENT/DEVICE/INTEROP |
| Attributes | None |
| Content Type | XML |
| Description | XML container for Interop device properties. |

| 4. < presence /> | |
|---|---|
| Element Path | //AGENT/DEVICE/INTEROP/presence |
| Attributes | None |
| Content Type | UTF-8 String |
| Valid data | { "online" \| "offline" "idle" } |
| Description | Interop level presence used to determine proper routing of messages and display state. |

| 5. < type /> | |
|---|---|
| Element Path | //AGENT/DEVICE/INTEROP/type |
| Attributes | None |
| Content Type | UTF-8 String |
| Valid data | { "msn" } |
| Description | Interop level device type. Can only be "msn". |

| 6. < INTEROP-BUDDIES /> | |
|---|---|
| Element Path | //AGENT/INTEROP/INTEROP-BUDDIES |
| Attributes | None |
| Content Type | XML |
| Description | XML container for all associated buddies of MSN interop account. |

| 7. < BUDDY /> | |
|---|---|
| Element Path | //AGENT/INTEROP/INTEROP-BUDDIES/BUDDY |
| Attributes | |
| id | UTF-8 |
| Content Type | XML |
| Description | XML container for properties of an MSN buddy. The id attribute corresponds the buddy's Passport (MSN Messenger) account. |

| 8. < phone-number-home /> | |
|---|---|
| Element Path | //AGENT/INTEROP/INTEROP-BUDDIES/BUDDY/phone-number-home |
| Attributes | None |
| Content Type | UTF-8 String |
| Description: | String corresponding to the home phone number field entered via MSN messenger. |

| 9. < phone-number-mobile /> | |
|---|---|
| Element Path | / /AGENT/INTEROP/INTEROP-BUDDIES/BUDDY/phone-number-mobile |
| Attributes | None |
| Content Type | UTF-8 String |
| Description | String corresponding to the mobile phone number field entered via MSN messenger. |

| 10. < phone-number-work /> | |
|---|---|
| Element Path | //AGENT/INTEROP/INTEROP-BUDDIES/BUDDY/phone-number-work |
| Attributes | None |
| Content Type | UTF-8 String |
| Description | String corresponding to the work phone number field entered via MSN messenger. |

| 11. < presence /> | |
|---|---|
| Element Path | //AGENT/INTEROP/INTEROP-BUDDIES/BUDDY/presence |
| Attributes | None |
| Content Type | UTF-8 String |
| Description | String corresponding to the presence value reported by MSN messenger. |

| 12. < presence-name /> | |
|---|---|
| Element Path | //AGENT/INTEROP/INTEROP-BUDDIES/BUDDY/presence-name |
| Attributes | None |
| Content Type | UTF-8 String |
| Description | String corresponding to the buddyies display name as reported by MSN messenger. |

| 13. < presence-custom-status /> | |
|---|---|
| Element Path | //AGENT/presence-custom-status |
| Attributes | None |
| Content Type | UTF-8 String |
| Description | User defined custom status string as reported by MSN messenger. |

### D. Chat Agent:

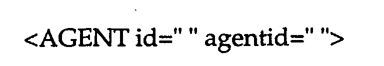

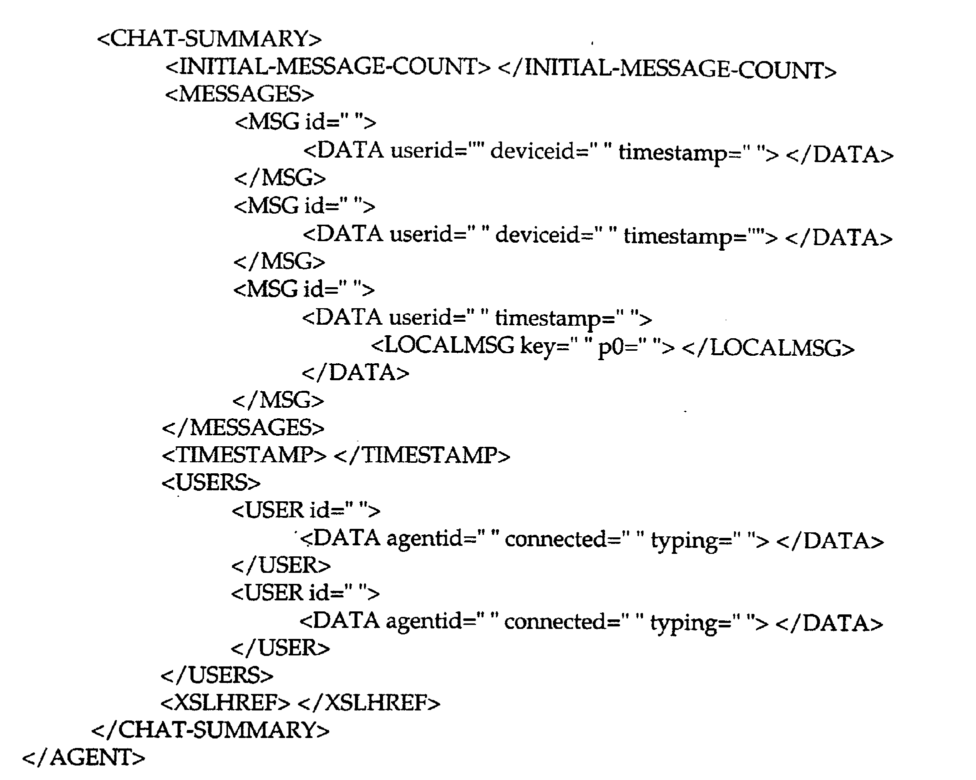

The following elements are defined for the class Chat Agent (where the symbol "|" represents "or"):

| 1. < AGENT /> | |
|---|---|
| Element Path | //AGENT |
| Attributes | |
| id | UTF-8 |
| agentid | UTF-8 |
| Content Type | XML |
| Description | Generic XML container for all Agent XML data |

| 2. < CHAT-SUMMARY /> | |
|---|---|
| Element Path | //AGENT/CHAT-SUMMARY |
| Attributes | None |
| Content Type | XML |
| Description | XML container for Openwave IM chat session. |

| 3. < INITIAL-MESSAGE-COUNT/> | |
|---|---|
| Element Path | //AGENT/CHAT-SUMMARY/INITIAL-MESSAGE-COUNT |
| Attributes | None |
| Content Type | Integer |
| Description | Integer value representing first message that the current user is able to view. For the inviter, this will be 0. For a 1-1 chat, this value will also be 0 for the invited user. For group chat's, this value may be non zero. |

| 4. < MESSAGES /> | |
|---|---|
| Element Path | //AGENT/CHAT-SUMMARY/MESSAGES |
| Attributes | None |
| Content Type | XML |
| Description | XML container for all messages contained in the chat. |

| 5. < MSG /> | |
|---|---|
| Element Path | //AGENT/CHAT-SUMMARY/MESSAGES/MSG |
| Attributes | |
| id | UTF-8 |
| Content Type | XML |
| Description | XML wrapper for a specific, indexed, chat message. The id attribute is a UTF-8 string of length 4, representing an integer value, 0 prefixed. This might be "0000" for the first message in a chat, "0001" for the second, etc. |

| 6. < DATA /> | |
|---|---|
| Element Path | //AGENT/CHAT-SUMMARY/MESSAGES/MSG/DATA |
| Attributes | |
| userid | UTF-8 |
| deviceid | UTF-8 |
| timestamp | UTF-8 |
| Content Type | XML \| UTF-8 String |
| Description | The DATA element contains either the raw UTF-8 encoded text message, or, contains a LOCALMSG element corresponding to a system message. |

| 7. < LOCALMSG /> | |
|---|---|
| Element Path | //AGENT/CHAT-SUMMARY/MESSAGES/MSG/DATA/LOCALMSG |
| Attributes: | |
| Key | UTF-8 |
| p0 | UTF-8 |
| p1 | UTF-8 |
| Content Type | UTF-8 String |
| Description: | The LOCALMSG element attributes contain the necessary information to look up a localized message to be displayed to the user. The p0, p1, ... pN, values contain parameters to be used in the display of the localized message. |

| 8. < TIMESTAMP /> | |
|---|---|
| Element Path | //AGENT/CHAT-SUMMARY/TIMESTAMP |
| Attributes | None |
| Content Type | Integer |
| Description | Integer value representing the chat creation time in milliseconds since 1970. Subsequent timestamp values are in milliseconds relative to the chat start time. |

| 9. < USERS /> | |
|---|---|
| Element Path | //AGENT/CHAT-SUMMARY/USERS |
| Attributes | None |
| Content Type | XML |
| Description | XML container for all users who are invited to the chat. |

| 10. < USER /> | |
|---|---|
| Element Path | //AGENT/CHAT-SUMMARY/USERS/USER |
| Attributes | |
| id | UTF-8 |
| Content Type | XML |
| Description | XML wrapper for a specific, indexed, chat message. The id attribute is a UTF-8 string of length 2, representing an integer value, 0 prefixed. This might be "00" for the first user in a chat, "01" for the second, etc. |

| 11. < DATA /> | |
|---|---|
| Element Path | //AGENT/CHAT-SUMMARY/USERS/USER/DATA |
| Attributes | |
| agentid | UTF-8 |
| connected | UTF-8 |
| typing | UTF-8 |
| Content Type | UTF-8 String |
| Description | The DATA element for a user contains the UTF-8 version of the buddies display name. The attribute values are as follows. |

| 12. < XSLHREF /> | |
|---|---|
| Element Path | //AGENT/CHAT-SUMMARY/XSLHREF |
| Attributes | None |
| Content Type | UTF-8 String |
| Description | The XSLHREF is a misnomer. It is the URL which the Windows client will use to render the CHAT-SUMMARY XML data. |

### VI. Embedded IM Client

In the embodiments described above, the browser 41 in the wireless device (see Figure 3) has no intelligence regarding the meaning of the Web pages it receives for IM purposes. However, in an alternative embodiment, which will now be described, the wireless device 35 contains a more intelligent client, i.e. an embedded IM client, which takes the place of the browser 41 in the wireless device 35 for IM purposes.

Reference is again made to Figure 3. In the embodiments described above, the wireless agent 34 caches state for the Web server 42, which the Web server 42 can retrieve in order to generate dynamically Web pages for display by the browser 41 on the wireless device 35. The Web pages contain fully formed markup language (e.g., WML) which the browser 41 simply displays. The browser has no intelligence regarding the meaning of the Web pages. The wireless agent 34 communicates with the Web server 42 using XML (over HTTP or WSP, for example), while the Web server 42 communicates with the browser 41 using, for example, WML.

In the case of an embedded IM client, the embedded client resides in the wireless device 35 and takes the place of the browser 41 for IM purposes. (There may still be a browser, but it is not required for the IM application.) In this case, the documents provided to the embedded IM client by the Web server 42 contain XML data that the IM client has the intelligence to interpret. The XML data may be compressed for efficient use of wireless bandwidth. This XML data may indicate state changes, among other things. For example, the XML could be an XML fragment indicating that a user's status has changed from online to offline. In that case, the embedded IM client integrates that change into the buddy list and updates the display on the wireless device. As noted above, an alternative data interchange format could be used in place of XML.

The embedded client is instructed to retrieve the XML data by notifications sent from the wireless agent 34. A wireless agent 34 is still required in the agent server 31, because the embedded IM client is intermittently connected to the network, so notifications are not a reliable mechanism for synchronizing the client. The embedded IM client can connect to the wireless agent 34 and retrieve the delta to the state information that has occurred since its last connection. In one embodiment notifications to the wireless device are used simply to inform the client that the state has changed and should be retrieved. In an alternative embodiment, the notifications include the state changes but are not sent until a connection between the wireless device and the agent server has been established. The wireless agent is still required in this embodiment, because state changes must be buffered during the period that the connection is being established.

With an embedded IM client, the application logic in the Web server 42 converts between the XML based agent-to-agent protocol described above and a separate, "lighter-weight", over-the-air XML based protocol used between the Web server 42 and the embedded IM client (over HTTP or WSP, for example). The agent-to-agent (RTMP) protocol is preferably application-independent and device-independent. The over-the-air XML protocol for the embedded client does not need to be specific to IM but is preferably more compact than the agent-to-agent protocol, containing just enough information to build an IM experience while still being extensible through additions to the XML schema. This approach keeps code complexity and bandwidth usage low.

### VII. Other Applications

As noted, the techniques described above are not restricted to IM applications. For example, features such as the agent-based data synchronization approach and XML based agent-to-agent communication protocol can be used to construct applications other than IM applications and applications other than user-to-user messaging applications, such as content distribution, gaming, collaboration, call setup, provisioning, and altering/notification. Of course, this is not an exhaustive list of applications which can implement the described techniques. Examples of how the above-described techniques can be applied to these applications will now be described.

### A. Content Distribution

In a content distribution application, an agent can represent the state of a content element, such as a stock quote, sports score, HTML document or file. The properties of the agent might include the URL of a document representing the ambient state of the content (for example, the complete status of a baseball game), the time at which the document was last changed, and so forth. When the content changes, subscribing agents would be notified. The publishing agent may also send alerts containing transient information to be displayed to the user (for example, a home run screen or sound). Content publishing agents, persona or device agents may apply individualized rules, filters, heuristics or translations to the content. For example, a user might only wish to be informed when a stock moves outside of a specified price range or a class of service could be applied for a set of users that controls the rate or delay in distributing stock quote information.

### B. Gaming

In a gaming application, agents can represent the current state of a game in which one or more users are participating (for example, the current state of a chess game, card game, or multiplayer simulation). A game agent can have logic that controls whose turn it is and would distribute the current state of the game to participants. Because multiple game agents can exist and be distributed across multiple servers, a scalable network game platform can be created that allows users to move across devices and reconnect to an ongoing game.

### C. Collaboration

In user collaboration applications, agents can represent the state of a collaborative document such as white board, shared task list, document revision, calendar etc. The agent class for the collaborative document provides the application logic that controls editorship and revision mechanisms for the document and publishes the current state to subscribing agents. An agent class can be developed to represent the collection of collaborative agent instances that make up a meeting.

### D. Call Setup

In call setup applications, device agents can publish their media capabilities to the user's persona agent. The user device agent of a user trying to establish a multimedia session with another user will request that the persona agent representing the calling user agent invite the called user to the session and provide available media capabilities. The persona agent will notify the called user of the incoming call on the currently connected user devices that support compatible media or medias. If the called user accepts the call, the calling user will be notified and the user agents will conduct the call through appropriate media servers.

### E. Provisioning

In provisioning applications, a user's persona agent can maintain a subscription to one or more provisioning agents for one or more of the user's devices. The provisioning agent can provide properties for one or more device types. The device agent will remain synchronized with the current state of the individualized provisioning properties published for the device and will receive updates when any of the properties changes.

### F. Alerting/Notification

In alerting/notification applications, an agent can monitor the state of an external notification source, such as a user's e-mail or voicemail inbox. When the state of the source changes, the user will be notified on all of the connected user devices (voicemail alert on a PC and on a phone, for example). Subscribing persona agents can synchronize their respective user device agents to the ambient state properties of the notification source (number of unread e-mails, for example).

Thus, a messaging system for use in a distributed environment that includes a wireless network has been described. Although the present invention has been described with reference to specific exemplary embodiments, it will be evident that various modifications and changes may be made to these embodiments without departing from the broader spirit and scope of the invention as set forth in the claims. Accordingly, the specification and drawings are to be regarded in an illustrative sense rather than a restrictive sense.

## Claims

1. A computer-implemented apparatus for use by a plurality of users using a plurality of user devices, the apparatus comprising a plurality of agents of a plurality of different types to communicate with each other, at least some of the agents representing physical entities, each agent having one or more properties and having the ability to subscribe to properties of other agents of the plurality of agents, the plurality of agents including one or more agents to collect information about properties of other agents and to publish the collected information to one or more subscribing agents.

2. A computer-implemented apparatus as recited in claim 1, wherein the plurality of agents comprises a plurality of device agents, each representing one of the plurality of user devices.

3. A computer-implemented apparatus as recited in claim 1, wherein the plurality of agents comprises a plurality of persona agents, each representing one of the plurality of users.

4. A computer-implemented apparatus as recited in claim 1, wherein the plurality of agents comprises:
a plurality of device agents, each representing one of the plurality of user devices; and
a plurality of persona agents, each representing one of the plurality of users.

5. A computer-implemented apparatus as recited in claim 4, wherein the plurality of persona agents collect information about the properties of other agents, including the device agents, and route the collected information to one or more other agents which subscribe to the properties.

6. A computer-implemented apparatus as recited in claim 4, wherein the device agents communicate with each other through one or more of the persona agents.

7. A computer-implemented apparatus as recited in claim 4, wherein each of the plurality of agents has a set of properties to maintain state information.

8. A computer-implemented apparatus as recited in claim 7, wherein the plurality of user devices comprises a wireless device, the wireless device comprising an embedded client application configured to receive and interpret extensible markup language data representing changes to said state information.

9. A computer-implemented apparatus as recited in claim 4, wherein at least one of the device agents represents a wireless user device that has an intermittent connection to the other user devices, wherein said device agent has a set of subscriptions and maintains state information for the set of subscriptions, and wherein said device agent communicates with a corresponding one of the persona agents to update said state information.

10. A computer-implemented apparatus as recited in claim 9, wherein said corresponding one of the persona agents automatically publishes to said device agent state information to which the device agent has subscribed, when the user device represented by said device agent establishes the connection.

11. A computer-implemented apparatus as recited in claim 4, wherein the plurality of agents use a data synchronization process to update state information.

12. A computer-implemented apparatus as recited in any of the claims 9 - 11, wherein the state information comprises device presence or location information, and/or wherein at least some of the agents cache state information received from another agent.

13. A computer-implemented apparatus as recited in claim 1, wherein the plurality of agents comprises a chat agent to represent a chat session.

14. A computer-implemented apparatus as recited in claim 1, wherein the plurality of user devices comprises a computer coupled to a wireline network and a mobile device operating on a wireless network, the computer and the mobile device each represented by a separate one of the agents.

15. A computer-implemented apparatus as recited in claim 1, wherein the agents communicate with each other using an extensible data interchange protocol.

16. A computer-implemented apparatus as recited in claim 15, wherein the agents communicate with each other using an extensible markup language (XML) based protocol.

17. A computer-implemented apparatus as recited in claim 1, wherein a change to a property of one of the agents is automatically published to an agent which has subscribed to the property of said one of the agents.

18. A computer-implemented apparatus as recited in claim 1, wherein at least some of the agents can set properties of other ones of the agents.

19. A computer-implemented apparatus as recited in claim 1, wherein for at least one of the agents, a user associated with said agent can control which agents may subscribe to properties of said agent.

20. A computer-implemented apparatus as recited in claim 1, wherein for at least one of the agents, a user associated with said agent can specify the properties of said agent to which other agents may subscribe.

21. A computer-implemented apparatus as recited in claim 20, wherein the user associated with said agent can specify the properties of said agent to which other agents may subscribe on a per-subscriber basis.

22. A computer-implemented apparatus as recited in claim 1, wherein the plurality of agents further comprises an interoperability agent to connect the messaging system with another messaging system.

23. A computer-implemented apparatus as recited in claim 22, wherein the interoperability agent converts between an extensible data interchange protocol used by the plurality of agents and another protocol used by said other messaging system.

24. A computer-implemented apparatus as recited in claim 1, wherein the apparatus embodies a messaging application.

25. A computer-implemented apparatus as recited in claim 24, wherein the messaging application comprises a user-to-user messaging application.

26. A computer-implemented apparatus as recited in claim 25, wherein the user-to-user messaging application is an Instant Messaging (IM) application.

27. A computer-implemented apparatus as recited in claim 1, wherein the apparatus embodies a content distribution application.

28. A computer-implemented apparatus as recited in claim 1, wherein the apparatus embodies a game application.

29. A computer-implemented apparatus as recited in claim 1, wherein the apparatus embodies a user collaboration application.

30. A computer-implemented apparatus as recited in claim 1, wherein the apparatus embodies a call setup application.

31. A computer-implemented apparatus as recited in claim 1, wherein the apparatus embodies a provisioning application.

32. A computer-implemented apparatus as recited in claim 1, wherein the apparatus embodies an alerting/notification application.

33. A machine-readable storage medium storing instructions which embody an application for execution by a processing system, the application for use by a plurality of users using a plurality of user devices, such that the application, when executed, generates a plurality of agents of a plurality of different types to communicate with each other, at least some of the agents representing physical entities, each agent having one or more properties and having the ability to subscribe to properties of other agents of the plurality of agents, the plurality of agents including one or more agents to collect information about properties of other agents and publish the collected information to one or more subscribing agents.

34. An apparatus comprising:
means for creating a plurality of agents to communicate messages for a plurality of users by using a data synchronization model, the plurality of agents including a plurality of device agents, one for each of a plurality of user devices used by the plurality of users, and a plurality of persona agents, one for each of the users, each agent having one or more properties and having the ability to subscribe to properties of other agents of the plurality of agents; and
means for using the persona agents to collect information about the properties of other agents, including the device agents, and publish the collected information to one or more other agents which subscribe to the corresponding properties.

35. A user-to-user messaging system comprising:
a processor; and
a storage facility coupled to the processor and storing code which configures the processor to create a plurality of agents to communicate user-to-user messages between a plurality of users in real time by using a data synchronization model, each agent having one or more properties and having the ability to subscribe to properties of other agents of the plurality of agents, the plurality of agents including
a plurality of device agents, one for each of a plurality of user devices used by the plurality of users;
a plurality of persona agents, one for each of the users, to collect information about the properties of other agents, including the device agents, and publish the collected information to one or more other agents which subscribe to the corresponding properties.

36. A messaging system comprising:
a plurality of agents to communicate messages between a plurality of users in real time by using an extensible data interchange protocol to implement a document synchronization model, each agent having one or more properties and having the ability to subscribe to properties of other agents of the plurality of agents, wherein the plurality of agents communicate using said extensible data interchange protocol, the plurality of agents including
a plurality of device agents, one for each of a plurality of user devices used by the plurality of users, the plurality of user devices including a computer coupled to a wireline network and a mobile device operating on a wireless network; and
a plurality of persona agents, one persona agent for each of the users, each of the persona agents to collect information about the properties of other agents, including the device agents, and to publish the collected information to one or more other agents which subscribe to the corresponding properties, wherein each of the persona agents comprises a set of properties to maintain state information for each of the user devices used by the user associated with said persona agent, the state information including device presence information, such that a change to a property of one of the agents is automatically published to an agent which has subscribed to the property of said one of the agents.

37. A user-to-user messaging system comprising:
a chat agent to represent a user-to-user messaging session;
a plurality of agents to communicate messages between a plurality of users in real time by using an extensible markup language (XML) document synchronization model, each of the agents having one or more properties defined in XML and having the ability to subscribe to properties of other agents of the plurality of agents, wherein the plurality of agents communicate with each other using an XML based messaging protocol, the plurality of agents including
a plurality of device agents, one for each of a plurality of user devices used by the plurality of users, the plurality of user devices including a computer coupled to a wireline network and a mobile device operating on a wireless network; and
a plurality of persona agents residing in an agent system coupled to the wireless network and to the wireline network, one persona agent for each of the users, to collect information about the properties of other agents, including the device agents, and to publish the collected information to one or more other agents which subscribe to the properties, wherein each of the persona agents comprises a set of properties to maintain state information for each user device used by the user associated with said persona agent.

38. A method comprising:
creating a plurality of agents of a plurality of different types to communicate with each other, at least some of the agents representing physical entities, each agent having one or more properties and having the ability to subscribe to properties of other agents of the plurality of agents; and
using one or more of the agents to collect information about properties of other agents and to publish the collected information to one or more subscribing agents.

39. A method comprising:
maintaining a messaging application configured to communicate messages between a plurality of users in real-time by using a data synchronization process; and
executing the messaging application to communicate messages between the plurality of users in real-time by using the data synchronization process.

40. A method comprising:
using an extensible markup language schema to provide a user-to-user messaging application, such that the user-to-user messaging application includes a plurality of agents capable of subscribing to properties of each other; and
executing the instant messaging application to allow communication of user-to-user instant messages.

41. A method as recited in claim 40, wherein the agents communicate with each other by communicating extensible markup language (XML) fragments that represent changes to an XML document.

42. A method comprising:
creating a plurality of agents to communicate messages for a plurality of users by using a data synchronization model, the plurality of agents including a plurality of device agents, one for each of a plurality of user devices used by the plurality of users, and a plurality of persona agents, one for each of the users, each agent having one or more properties and having the ability to subscribe to properties of other agents of the plurality of agents; and
using the persona agents to collect information about the properties of other agents, including the device agents, and to publish the collected information to one or more other agents which subscribe to the corresponding properties.

43. An apparatus comprising:
a plurality of sources, each having at least one property;
a plurality of sinks, each capable of subscribing to a property of a source; and
an intermediary agent to aggregate state information corresponding to the properties of the sources and to distribute the state information to sinks, of the set of sinks, which subscribe to the respective properties.
